# EUROPÄISCHE PATENTANMELDUNG

(11) **EP 4 707 490 A2**
(43) Veröffentlichungstag der Anmeldung: **11.03.2026**
(21) Anmeldenummer: 26150094.6
(22) Anmeldetag: 16.10.2022
(51) Int. Cl.: E04B 5/23

(54) **HOLZ-BETON-VERBUNDDECKE MIT FLÄCHIGEM HOLZELEMENT, VERFAHREN ZU IHRER HERSTELLUNG SOWIE BAUTE MIT EINER SOLCHEN HOLZ-BETON-VERBUNDDECKE**

(30) Priorität: 17.10.2021 EP 21203049
(62) Teilanmeldung aus: 22802120.0
(71) Anmelder: Implenia Schweiz AG, 8152 Glattpark (Opfikon) (CH); WaltGalmarini AG, 8008 Zürich (CH)
(72) Erfinder: Kündig, Christian, 8733 Eschenbach (CH); Kreis, Benjamin, 8057 Zürich (CH); Kübler, Wolfram, 8932 Mettmenstetten (CH)
(74) Vertreter: Felber, Josef

(57) **Zusammenfassung**

Die Erfindung betrifft eine Holz-Beton-Verbunddecke mit flächigem Holzelement, mit der sich Spannweiten in geringer Abhängigkeit vom relativen Decken-Eigengewicht realisieren lassen. Der Deckenschichtaufbau schliesst eine Holzschicht, eine Dämmschicht sowie eine Betonschicht (4) ein. In einer Ausführung wird der Schichtaufbau unterbrochen von mindestens einem Unterzug (8), indem dieser wenigstens die Betonschicht (4) und die Dämmschicht durchmisst und sich nach unten wenigstens bis an die Holzschicht erstreckt. Dieser interne Unterzug (8) kann auch in aus den Verbundschichten auskragenden Varianten erstellt werden. In einer anderen Ausführung weist die Decke für einen hohen Schallschutz in ihrer Dämmschicht zwei Dämmmaterialien unterschiedlicher Dichte auf, wobei das dichtere Dämmmaterial direkt auf der Holzschicht aufliegt, was als Schwingungsdämpfung zu wirken bestimmt ist. In einer weiteren Ausführung werden die das flächige Holzelement bildenden Holzplatten der Holz-Beton-Verbunddecke je gegeneinander gespannt, zur Durchleitung von Zugkräften. Nach der Erfindung lässt sich die Effizienz bei der Herstellung von Holz-Beton-Verbunddecken mit grossen Spannmassen entscheidend erhöhen.

## Beschreibung

Die Erfindung betrifft eine Holz-Beton-Verbunddecke mit flächigem Holzelement. Gegenüber reinen Betondecken zeichnet sich diese Decke durch ein erheblich geringeres Eigengewicht aus. Auch im Vergleich zu herkömmlichen Holz-Beton-Verbunddecken besticht die erfindungsgemässe Decke durch eine leichtere und schlankere Konstruktion. Dabei lassen sich mit diesem Deckensystem Spannweiten in äusserst geringer Abhängigkeit vom relativen Eigengewicht der Decke (d.h. gerechnet auf die Deckenfläche) realisieren. Die Erfindung betrifft ferner ein Verfahren zur Herstellung solcher Decken, eine Verwendung sowie eine Baute mit einer oder mehreren solchen Holz-Beton-Verbunddecken.

Decken mit grossen Spannweiten sind sehr erwünscht. Gerade in mehr- und vielgeschossigen Gebäuden wie Hochhäusern bieten sie einen Gewinn an Raumausnutzung und variablen Möglichkeiten bei der Grundrissgestaltung der Stockwerke. Überdies schaffen grosse Deckenspannmasse auch Flexibilität bei einem späteren Umbau, weil in einem Geschoss dann weniger tragende Wände und Stützen verbaut werden müssen. Grosse Deckenspannweiten auch mit Holz-Beton-Verbunddecken zu realisieren wäre in jedem Fall sehr wünschenswert.

Ein grosses Spannmass indessen stellt jede Deckenplanung vor dieselbe Herausforderung: Um die erforderliche Biegesteifigkeit und Tragfähigkeit aufbringen zu können, benötigt die Decke ausreichend statische Höhe. Das wiederum schlägt sich in ihrem Eigengewicht nieder - so auch bei einer Holz-Beton-Verbunddecke. In ihrer herkömmlichen Ausführung mit dem Beton auf Holz anschliessend nimmt das Eigengewicht der Decke proportional zur Höhe zu. Dies stellt entsprechende Anforderungen an die vertikale Tragstruktur und Fundation der Baute, auf welche die Lasten abgestützt werden müssen. Insbesondere im Hochhausbau mit vielen Stockwerken stellt dies eine grosse Herausforderung dar. Darüber hinaus wirkt sich eine hohe Deckenstärke auch negativ auf die Ausnützung aus, weil sich bei einer bestimmten Höhe einer Baute dann weniger Stockwerke realisieren lassen. Es wäre somit wünschenswert, höhere Spannweiten ohne die genannten Nachteile dank spezieller Holz-Beton-Verbunddecken realisieren zu können.

Wenngleich Holz-Beton-Verbunddecken mit Holzbalken, d.h. mit linearen Holzbauteilen, bereits heute in Büro- und Wohngebäuden und zuweilen auch in Hochhäusern anzutreffen sind, löst der Holz-Beton-Verbunddeckenbau bislang noch nicht alle Probleme, um sich schliesslich in voller Breite durchsetzen zu können. So wie die erwähnten Decken eingesetzt werden, nämlich durchsetzt von Holzbalken, befriedigen sie aus architektonischer Sicht nur bedingt. Auch kann mit dem vergleichsweise bescheidenen Einsatz von Holz als lediglicher Achsraster durch die Decke das ökologische Potential des Baustoffes Holz nicht hinlänglich erschlossen werden. Ganz abgesehen von seinen Eigenschaften als CO₂-Speicher zieht Holz eine vergleichsweise geringe Schadstoffemission bei der Verarbeitung nach sich und kommt beim Einbau mit einem ebenfalls geringen Energieaufwand aus. Die grössere Dimensionierung des Holzbestandteils in einer Holz-Beton-Verbunddecke würde sich folglich nur positiv auf die Klimabilanz einer Baute auswirken, was in jedem Fall sehr erstrebenswert wäre. Doch sieht man sich dabei mit zweierlei Problemen konfrontiert.

Zum einen ruft der Einsatz von mehr Holz in der Verbunddecke auch restriktivere Brandschutzmassnahmen auf den Plan. Zwar könnten in der Ausführung einer Holz-Beton-Verbunddecke mit flächigem Holzelement statische und architektonische Anforderungen zugleich erfüllt werden, weil eine solche Decke als unterste Verbundschicht eine fertige und ästhetisch ansprechende Untersicht zu bieten vermöchte. Doch stehen hier Auflagen im Wege, weshalb ein brennbares flächiges Holzelement nicht ohne weiteres raumseitig exponiert sein darf, erst recht nicht in Räumen mit grossen Spannmassen. Die Brandschutzauflagen sind tendenziell umso restriktiver, je mehr Stockwerke ein Gebäude umfasst bzw. je länger die Evakuationswege sind, wobei natürlich auch die Nutzung und Personenbelegung des Gebäudes eine Rolle spielen.

Zum anderen bedeutet ein grösserer Anteil Holz in einer Holz-Beton-Verbunddecke, dass sie auch einen geringeren Schallschutz bietet. Als wesentlich leichterer Verbundpartner als Beton wird Holz viel eher zu Schwingungen angeregt. Daher kann sich in einer Holz-Beton-Verbunddecke mit flächigem Holzelement der Körperschall vergleichsweise leicht ausbreiten und von den Gebäudenutzern wahrgenommen werden. Das behindert den Einsatz solcher Decken insbesondere im Wohnungsbau, im Bürogebäudebau, bei Bildungsstätten wie Schulen, Universitäten, Bibliotheken, etc. und generell überall dort, wo hohe Anforderungen an den Schallschutz gestellt werden. Insbesondere bedeutet dies, dass in Bauten mit separaten Nutzungseinheiten, etwa Wohnungs- und Büroeinheiten, Raumeinheiten von Bildungsstätten, etc., die gegenüber verschiedenen Nutzungsparteien akustisch abgegrenzt werden müssen, die Decke an den Übergangsstellen der einzelnen Einheiten unterbrochen werden muss. Das wirkt sich nachteilig sowohl auf die Deckenstatik als auch auf die Effizienz der Deckenmontage aus.

Die erläuterten Probleme führen dazu, dass herkömmliche Holz-Beton-Verbunddecken mit flächigem Holzelement nicht mit grossen Spannweiten einsetzbar sind: Erstens wegen der proportionalen Zunahme an Eigengewicht, zweitens wegen der Brandschutzauflagen und drittens wegen der begünstigten Schallausbreitung. Mit solchen Decken lassen sich die Nutz- bzw. Wohneinheiten einer Baute schliesslich nicht sinnvoll überspannen, sodass nach wie vor vergleichsweise klein-spannweitige Deckenelemente zum Einsatz kommen, worunter auch die Bau- und Montageeffizienz leidet.

Im Stand der Technik sind in den vergangenen Jahrzehnten zahlreiche Holz- und Betonkomponenten einschliessende Konstruktionen bekannt geworden. Nachfolgend werden einige solcher Konstruktionsvorschläge vorgestellt.

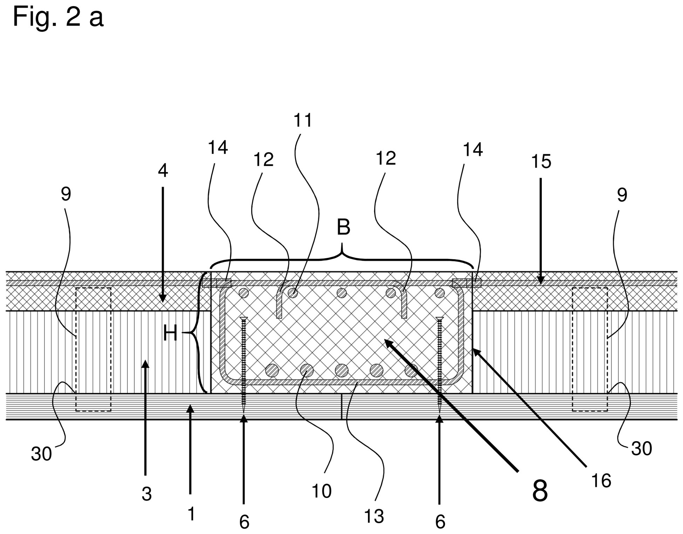

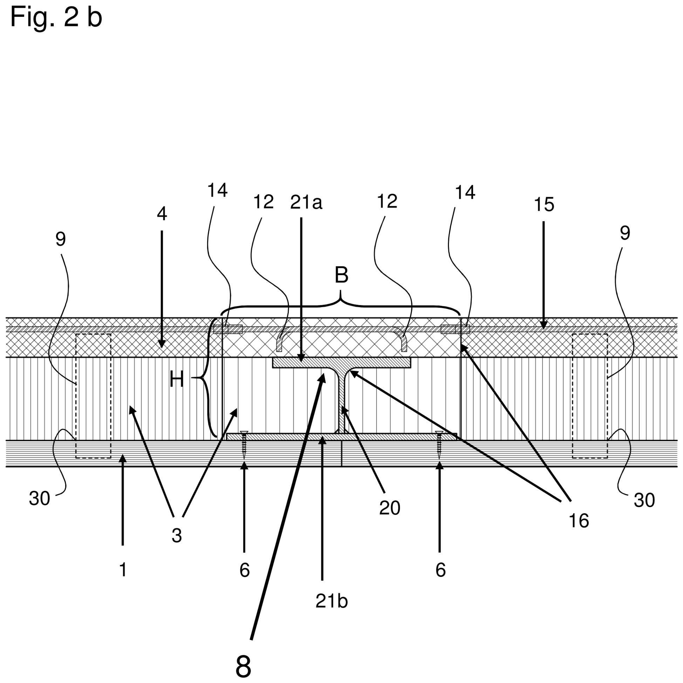

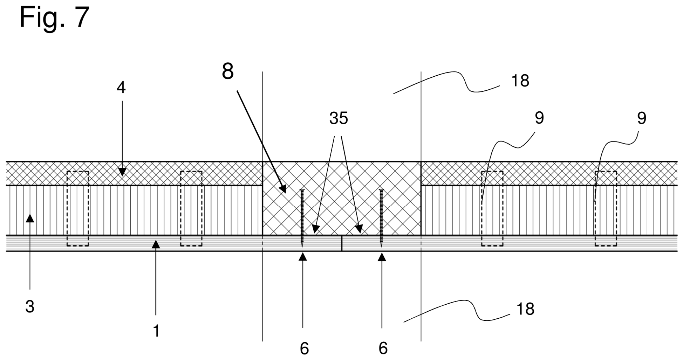

So offenbart US 2 268 311 A, veröffentlicht im Jahr 1941, eine Bodenkonstruktion mit einem Tragwerk aus Beton. Die Betonoberdecke mit ihren im Querschnitt V-förmigen, nach unten ragenden Rippen wird auf ihrer Unterseite vollständig eingefasst. Daran lässt sich schliesslich eine untere horizontal verlaufende Lage aus Putzbelag aufhängen, wie folgt: Nach der in Figur 2 gezeigten Ausführung werden an den Rippen, die unten seitliche Flügel als Aufhänger bilden, über dieselben Holzstreifen-Latten (*wood furring strips*) in Längsrichtung der Rippen aufgeschoben. Dabei berühren sich die Spitzen der einzelnen Holztreifen-Latten jeweils unterhalb des Flansches knapp. In einer anderen Variante nach Figur 7 werden die Latten entlang einer passgenauen Ausnehmungen in Längsrichtung der Rippen über einen darin befestigten, gestürzten U-förmigen Aufhänger geschoben und anschliessend dessen Bügelenden seitlich umgebogen. Auf den so befestigten Latten lassen sich Verputzplatten aufbringen. Die Verbindungen zwischen dem Betontragwerk und den Putzträger-Latten sind einzig an den Stellen der Unterzüge realisiert, an denen die Latten aufgehängt sind.

In CH 223 498, veröffentlicht im Jahr 1942, wird ein Holz-Beton-Verbundbau vorgestellt, bei der die tragende Holzkomponente in Form von Holzbalken ausgeführt ist. Diese Holzbalken weisen an ihrer Oberseite Aussparungen auf, in welche der Beton von oben eindringen und diese ausfüllen kann. Durch das Ineinandergreifen von Holz und Beton wird eine schubfeste Oberflächenhaftung realisiert. Zwischen den Holzbalken sind Füllkörper, sogenannte Hourdis, verlegt, welche sich je seitlich auf einen Holzbalken abstützen. Auch hier werden Schubverbindungen einzig an den Stellen der Unterzüge realisiert.

Ein anderer Vorschlag für eine Holz-Beton-Konstruktion findet sich in EP 0 280 228 A1, veröffentlicht im Jahr 1988. Die tragende Holzkomponente des darin vorgestellten Fussbodenaufbaus ist wiederum in Form von parallel verlaufenden und voneinander beabstandeten Balken ausgeführt. Diese bilden den unteren Bodenabschluss. Darüber befindet sich, von einer Schalung gehalten, eine Isolierschicht, über welche schliesslich die Betonoberdecke zu liegen kommt. Letztere ist über Stahlrohre mit den Holzbalken verbunden. Zu diesem Zweck sind sowohl in der Schalung als auch in der Isolierschicht Ausnehmungen vorhanden, wodurch die Verbindungsrohre nach unten in die Holzbalken eindringen. Mit ihrem oberen Endabschnitt sind die Verbindungsrohre im Beton der Oberdecke eingegossen. Die Schubverbindung ist somit einzig an den Stellen der Unterzüge realisiert.

In DE 10 37 687 B, veröffentlicht im Jahr 1958, wird eine Stahlbetonrippen- oder Stahlbetonbalkendecke offenbart. Nach unten ausgeformte Ortbetonrippen sind dabei seitlich von Tragleisten aus Holz, Metall oder Kunststoff eingefasst. Diese Tragleisten dienen als Auflager für vorfabrizierte Betonplatten. Andererseits wirken sie zusammen mit einem unter ihnen angeordneten Putzträger, nämlich einer Rohrgeflechtmatte, -platte oder einer Leichtbauplatte, als verlorene Schalung für die Ortbetonrippen. Die Tragleisten sind zum einen auf einer tragenden Wand, und zum andern auf einem Holzjoch aus Stützen und Querbalken aufgelagert. Das Dokument offenbart keine Schubverbinder, die sowohl in den Beton als auch in die Tragleisten oder in das Holzjoch eingreifen.

Das Dokument FR 2 143 603 A1, veröffentlicht im Jahr 1973, offenbart eine Fussbodenkonstruktion, die einen Stahlträger mit gestürzt eingebautem T-Profil einschliesst. Auf die Schultern des gestürzten T-Trägers werden Hourdis abgestellt, welche eine verlorene Schalung bilden. Die relativ dicke, mittlere Schicht der Hourdis besteht aus einem geschäumten Leichtmaterial (geschäumtes Polyurethan, Styropor oder unter dem Markennamen Klégecell bekannt gewordenes Material), oben überdeckt von einer oberen Dämm-Lage grösserer Dichte (bestehend aus z.B. Asbestzementplatten, Gipskartonplatten oder ähnlichem). Unten an das geschäumte Leichtmaterial folgt eine Lage aus Holzspanplatten oder ähnlichem. Das Dämmmaterial der oberen Hourdis-Lage hat somit eine viel grössere Dichte als das geschäumte Leichtmaterial der dicken, mittleren Hourdis-Lage, welche ihrerseits auf der Holzspanschicht aufliegt. An diese Hourdis aufgehängt bzw. von unten in die Holzspanplatten genagelt befindet sich eine weitere Lage desselben geschäumten Leichtmaterials der dicken, mittleren Hourdis-Lage. Diese ist unten noch mit einer Gipskarton-Schicht als Sichtabschluss versehen. Wiederum ist keine Schubverbindung mit in den Beton wie auch in das Holz hineinragenden Schubverbindern offenbart.

US 2018/0328019 A1 zeigt ein Boden-Decken-Feld aus einer Boden- und einer davon beabstandeten Deckenpaneele mit dazwischen eingebauten Unterzügen in Form von Stahlprofilen mit C-förmigem Querschnitt. Die Verbindung zwischen Boden- und Deckenpaneele ist einzig durch diese etwa aus Aluminium oder Stahl bestehenden Metall-Unterzüge gebildet, welche oben mit einer Metall-Trennwandschicht und unten in eine vorteilhaft aus nicht brennbarem Material bestehende Deckenschicht verschraubt sind. In den zwischen Boden- und Deckenpaneele gebildeten Hohlräumen, durch die sich auch die Metall-Unterzüge erstrecken, ist ein Isolationsmaterial für thermische oder schalltechnische Dämmung beabstandet zur unteren Deckenschicht eingelegt.

Schliesslich wird in US 2006/179741 A1, veröffentlicht im Jahr 2006, ein Brettstapelsystem vorgestellt. Die einzelnen Brettstapel-Elemente sind hochkant aneinander gestapelt und mit Hartholzdübeln verbunden. Hierzu sind in den Brettstapel-Elementen Bohrlöcher eingebracht, in welche die Dübel eingeschoben werden. Weil der Feuchtigkeitsgehalt der Dübel beim Einbau niedriger ist als derjenige der Brettstapel-Elemente, die aus einem Weichholz bestehen, stellt sich mit der Zeit ein Feuchtigkeitsgleichgewicht ein. Dabei dehnen sich die Hartholzdübel aus bzw. sie quillen auf. Es entsteht ein isotroper, radial auf die Innenwände der Bohrlöcher der Brettstapel-Elemente gerichteter Anpressruck. Diesem allein ist der Zusammenhalt der Brettstapel-Elemente geschuldet. Vorzugsweise durchstossen die einzelnen Hartholzdübel den gesamten Brettstapel. Alternativ kann ein einzelner Hartholzdübel aber auch kürzer ausgeführt sein. Durch den Anpressdruck infolge der Dübel werden die Brettstapel-Elemente aber nicht gegeneinander gespannt. Die Brettstapel-Elemente können indessen ihrer Länge nach gespannt werden, wozu in ihrem untersten Abschnitt Ausnehmungen ausgehobelt sind, die beim Zusammenlegen der Brettstapel-Elemente Kanäle bilden, zum Einlegen eines Kabels o.ä. Ein solches Brettstapel-Holzbausystem ist auch geeignet für Holz-Beton-Verbunddecken, wie dies später noch ausgeführt wird.

In CA 2 176 450 A1, veröffentlicht im Jahr 1997, wird ein Holzbalken bestehend aus zahlreichen einzelnen, in Querrichtung zum Balken aneinandergestapelten Holzbauteilen vorgestellt. Durch diese Holzbauteile hindurch führt ein Kabel, welches beidseits des Holzbalkens gespannt ist. Hierfür wird eine Ankerplatte oder ein -hohlkasten an die jeweils äussersten Holzbauteilen des Balkens angelegt und das Kabel schliesslich mittels hydraulischer Presse daran eingespannt. Diese Art der Verspannung eignet sich dort, wo beidseits eines Holzbalkens Platz vorhanden ist, beispielsweise im Fall eines Mastenbalkens, der von seiner eigentlichen Betonunterlage beabstandet gelagert ist.

Mit Ausnahme der beiden letzten oben erwähnten Dokumenten offenbaren sämtliche der angeführten Lösungen Unterzüge (Holz-, Beton-, Metall-Unterzüge) bzw. nach unten ausgeformte Auskragungen von Beton der Betonoberdecken. Dabei fällt auf, dass Verbindungen zwischen dem Beton und dem Holz (ungeachtet dessen, ob die Holzkomponente der jeweiligen Konstruktion überhaupt eine tragende Funktion einnimmt) durch die Unterzüge bzw. Auskragungen des Betons verlaufen. Dies führt zu wesentlichen Gewichtskonzentrationen der Decke an eben diesen Stellen der Verbindung von Beton mit Holz. Eine solche Holz-Beton-Verbindung korreliert entsprechend mit dem Gesamtgewicht der Decke. Generell gilt, dass wenn Holz-Beton-Verbindungen wie Schubverbinder in einem oder mehreren Unterzügen und/oder in mit Beton gefüllten Kerven des Holzbestandteils oder in Auskragungen des Betons angeordnet sind, die Konstruktion einer sich über grosse Spannweiten erstreckende Holz-Beton-Verbunddecke mit substantiellem Holzanteil und damit erforderlicher starker Verbindung mit der Betonoberdecke sich als sehr herausforderungsreich herausstellt, wie dies eingangs anhand der Problematik grosser Deckengewichtslasten erläutert wurde.

Vor diesem Hintergrund ist es die Aufgabe der vorliegenden Erfindung, das energieeffiziente Baupotential von Holz in einer Holz-Beton-Verbunddecke für die eingangs genannten Bauten weiter zu erschliessen. Insbesondere soll die Decke grosse Spannweiten unter geringer Zunahme an Eigengewicht ermöglichen. Damit soll sie raumübergreifend überspannbar sein, und in Bauten mit separaten Wohn-, Büro- bzw. Nutzeinheiten auch über solche Einheiten hinweg. Auch soll die Decke aufgrund ihrer Beschaffenheit unter Erfüllung brandschutz- und/oder schallschutztechnischer Auflagen raumseitig mit einer Schicht aus Holz, somit einem grundsätzlich brennbaren, leichten und daher gut schallleitenden Material, abschliessen können. Damit wird die Holzschicht als Deckenuntersicht innenarchitektonisch erlebbar gemacht. Die Aufgabe ist es ferner, eine solche Holz-Beton-Verbunddecke und ein Verfahren zu ihrer effizienten industriellen Herstellung anzugeben, sowie eine schallschutztechnische Ausgestaltung der Holz-Beton-Verbunddecke unter Verwendung von Dämmmaterial. Überdies besteht die Aufgabe der Erfindung in der Angabe einer Baute mit einer oder mehreren solchen Holz-Beton-Verbunddecken.

Diese Aufgabe wird gelöst von erfindungsgemässen Merkmalskombinationen, wie sie nachfolgend ausdrücklich gemäss den Abschnitten **[0020]** bis **[00120]** definiert sind, sowie mit Verweis auf die Ansprüche im Abschnitt **[00121].** Rückbezüge mit Abschnitts-Nummerierung sind dabei hilfsweise zu verstehen. Massgeblich für die Erfindungsdefinitionen ist dabei Folgendes: Für eine mit einer minimalen Anzahl Merkmalen definierte Vorrichtung (Holz-Beton-Verbunddecke, Baute) sind jeweils auch beliebige Kombinationen mit Teilen oder allen weiteren Vorrichtungsmerkmalen als vorteilhafte Ausführungen der Vorrichtung offenbart. Desgleichen sind für ein mit einer minimalen Anzahl Merkmalen definiertes Verfahren auch beliebige Kombinationen mit Teilen oder allen weiteren Verfahrensmerkmalen als vorteilhafte Ausführungen des Verfahrens offenbart. Ebenso lässt sich mit allen Verfahren eine Vorrichtung (Holz-Beton-Verbunddecke, Baute) mit ihren diversen möglichen Vorrichtungsmerkmalen erstellen bzw. schaffen und ist jeweils als vorteilhafte Ausführung des Verfahrens offenbart. Ausserdem lässt sich die Verwendung in einer Vorrichtung (Holz-Beton-Verbunddecke, Baute) mit ihren diversen möglichen Vorrichtungsmerkmalen realisieren und ist daher als vorteilhafte Ausführung der Verwendung offenbart.

Die Erfindung betrifft eine **Holz-Beton-Verbunddecke,** deren Tragwerk einen Bestandteil Beton und einen damit schubfest verbundenen Bestandteil Holz umfasst, wobei die Decke einen Schichtaufbau aufweist, der von unten nach oben zuerst einen im Verbund der Decke auf Zug belastbaren, flächenhaft ausgedehnten Holzbestandteil, nämlich eine Holzschicht, einschliesst, gefolgt von einer Dämmschicht und schliesslich einer Betonschicht, wobei in der Verbunddecke Schubverbinder eingebaut sind, worunter mindestens ein Schubverbinder zugleich in die Holzschicht und in die Betonschicht hineinragt und dabei die Dämmschicht durchquert, und wobei der Schichtaufbau der Decke von mindestens einem Unterzug unterbrochen ist, indem dieser wenigstens die Betonschicht und die Dämmschicht durchmisst und sich folglich nach unten wenigstens bis an die Holzschicht erstreckt.

Nach einer vorteilhaften Ausführung umfasst die erfindungsgemässe **Holz-Beton-Verbunddecke** die Kombination der Merkmale gemäss Abschnitt **[0020],** wobei der mindestens eine Unterzug teilweise oder vollständig über seine Länge aus der Verbunddecke auskragt, indem er nach unten und/oder nach oben aus derselben herausragt.

Nach einer weiter vorteilhaften Ausführung umfasst die erfindungsgemässe **Holz-Beton-Verbunddecke** die Kombination der Merkmale gemäss einem der Abschnitte **[0020]** oder **[0021],** wobei die teilweise über seine Länge nach unten ausgeformte Auskragung des Unterzugs als Kapitell einer nach unten an den Unterzug anschliessenden Stütze ausgebildet ist.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0020]** bis **[0022],** wobei der mindestens eine Unterzug Armierungsstähle und/oder ein Stahlprofil mit wenigstens einem unteren Flansch als Bewehrung enthält.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0020]** bis **[0023],** wobei der eine Unterzug oder die mehreren Unterzüge so dimensioniert ist/sind bzw. in ihrer Anzahl bemessen sind, dass sein/ihr Gewicht insgesamt bis 10% des gesamten Deckengewichts ausmacht/ausmachen.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0020]** bis **[0024],** wobei bei einer bis zu 50%igen Verlängerung der Spannweite der Verbunddecke, bis hin zu einer Gesamtlänge von 9 m der verlängerten Spannweite, die spannweitenabhängige Gewichtszunahme der Decke 10% des Deckengewichts nicht übersteigt und die Deckenstärke um lediglich 5-10 cm variiert, zur Gewährung einer grösseren Flexibilität in der Grundrissgestaltung.

Die Erfindung betrifft ausserdem ein **Verfahren** zur Herstellung einer Holz-Beton-Verbunddecke mit einer beliebigen Kombination von Merkmalen gemäss einem oder mehreren der Abschnitte **[0020]** bis **[0025],** mit mindestens zwei Deckenmodulen,
a. wobei die Deckenmodule je mit ihrem Schichtaufbau erstellt werden, sodass von unten nach oben zunächst die Holzschicht mit den mit ihren unteren Enden darin verankerten Schubverbindern angefertigt wird, dann die Dämmschicht gebildet wird und schliesslich die Betonschicht mit ihrer Bewehrung aufgetragen wird, sodass die oberen Enden der Schubverbinder in der Betonschicht verankert werden,
b. die Deckenmodule in der ihnen vorbestimmten Lage auf einem oder mehreren Trägern verlegt werden, wobei entweder
   i. die beiden Deckenmodule auf Stoss anschliessen und dabei einen Zwischenraum bilden, der gegen unten von einer vorläufig von Materialauftrag ausgesparten Kontaktfläche auf der Holzschicht mindestens eines der Deckenmodule sowie seitlich von ihren Dämm- und Betonschichten begrenzt ist,
      oder
   ii. mindestens einer der Träger ein vorfabrizierter Unterzugsbalken ist, der eine untere Auskragung ausformt, welche beidseits eine Stufe bildet, auf welchen Stufen je ein Deckenmodul am Unterzugsbalken anschliessend aufgelagert wird, wobei zwischen den Betonschichten der so aufgelagerten Deckenmodule ein Zwischenraum über dem Unterzugsbalken ausgespart ist,
c. in den Zwischenraum eine Unterzugs-Bewehrung eingelegt und an die angrenzende Beton-Bewehrung angeschlossen wird, und
d. der Zwischenraum mit Beton verfüllt wird und mit Aushärten desselben der Unterzug fertig erstellt ist.

Nach einer vorteilhaften Ausführung umfasst das **Verfahren** die Kombination der Merkmale gemäss Abschnitt **[0026],** wobei für je ein Deckenmodul
a0. zunächst die Holzschicht bearbeitet wird, indem die Schubverbinder in dieselbe eingebracht und darin befestigt werden, wobei eine Schalung die Holzschicht für den Aufbau der weiteren Schichten einfasst und die Schalung die allfällige Kontaktfläche auf der Holzschicht begrenzt,
a1. über der Holzschicht innerhalb der Schalung die Dämmschicht gebildet wird,
a2. hernach über der Dämmschicht die Bewehrung für die Betonschicht innerhalb der Schalung eingelegt wird, und
a3. innerhalb der Schalung die Betonschicht gegossen wird und nach Aushärten derselben die Schalung entfernt wird, womit das Deckenmodul erstellt ist.

Nach einer weiter vorteilhaften Ausführung umfasst das **Verfahren** die Kombination der Merkmale gemäss einem der Abschnitte **[0026]** oder **[0027],** wobei für einen oben auskragenden Unterzug
d0. eine an den Zwischenraum oben anschliessende, sich nach oben erstreckende Betonschalung angelegt wird,
d1. der entsprechend begrenzte Raum mit Beton angefüllt wird, und
d2. die Betonschalung nach Aushärten des Betons wieder entfernt wird, womit der oben auskragende Unterzug fertig erstellt ist.

Die Erfindung betrifft ferner eine **Holz-Beton-Verbunddecke,** deren Tragwerk einen Bestandteil Beton und einen damit schubfest verbundenen Bestandteil Holz umfasst, wobei die Decke einen Schichtaufbau aufweist, der von unten nach oben zuerst einen im Verbund der Decke auf Zug belastbaren, flächenhaft ausgedehnten Holzbestandteil, nämlich eine Holzschicht, einschliesst, gefolgt von einer Dämmschicht und schliesslich einer Betonschicht, wobei in der Verbunddecke Schubverbinder eingebaut sind, worunter mindestens ein Schubverbinder zugleich in die Holzschicht und in die Betonschicht hineinragt und dabei die Dämmschicht durchquert, wobei die Dämmschicht mindestens zwei Dämmmaterialien unterschiedlicher Dichte bzw. spezifischen Gewichts umfasst und das dichtere Dämmmaterial direkt auf dieser im Deckenverbund auf Zug belastbaren Holzschicht angeordnet ist oder direkt auf ihr aufliegt, was die Trägheit der Holzschicht erhöht und als Schwingungsdämpfung zu wirken bestimmt ist.

Nach einer vorteilhaften Ausführung umfasst die erfindungsgemässe **Holz-Beton-Verbunddecke** die Kombination der Merkmale gemäss Abschnitt **[0029],** wobei der Schichtaufbau der Decke sich entweder unterzugsfrei über die Decke erstreckt oder mindestens ein Unterzug wenigstens die Betonschicht und die Dämmschicht durchmisst und sich folglich nach unten wenigstens bis an die Holzschicht erstreckt.

Nach einer weiter vorteilhaften Ausführung umfasst die erfindungsgemässe **Holz-Beton-Verbunddecke** die Kombination der Merkmale gemäss einem der Abschnitte **[0029]** oder **[0030],** wobei eine obere Lage aus weniger dichtem Dämmmaterial auf einer unteren Lage aus dichterem Dämmmaterial aufliegt.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0029]** bis **[0031],** wobei ein Hohlraum in der Decke ausgebildet ist, sodass das weniger dichte Dämmmaterial aus Luft besteht, wobei die Betonschicht auf einer permanenten Betonverschalung über dem Hohlraum ruht.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0029]** bis **[0032],** wobei für das weniger dichte Dämmmaterial Luft als Material ausgeschlossen ist oder die Decke frei von Hohlräumen aus Luft ist.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0029]** bis **[0033],** wobei der Unterschied in den Dichten bzw. spezifischen Gewichten der Dämmmaterialien 0.5 bis 2 t/m³ beträgt.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0029]** bis **[0034],** wobei der Auflagedruck des dichteren Dämmmaterials zwischen 0.7 und 1.4 kN pro m², und der Auflagedruck des weniger dichten Dämmmaterials zwischen 0.1 und 0.4 kN pro m² beträgt.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0029]** bis **[0035],** wobei das dichtere Dämmmaterial aus einem Betongranulat aus Betonbruch oder aus einem Mischgranulat aus Beton- und Mauerwerksbruch besteht, und das weniger dichte Dämmmaterial aus Leichtbaustoff besteht.

Ferner betrifft die Erfindung eine **Verwendung** von wenigstens zwei Dämmmaterialien unterschiedlicher Dichte bzw. spezifischen Gewichts als Schallschutz mittels Schwingungsdämpfung der Holzschicht in einer Holz-Beton-Verbunddecke nach einer beliebigen Kombination von Merkmalen gemäss einem oder mehreren der Abschnitte **[0020]** bis **[0036]** oder eine **Verwendung** von wenigstens zwei Dämmmaterialien unterschiedlicher Dichte bzw. spezifischen Gewichts in richtungsabhängiger Anordnung oder richtungsabhängiger Abfolge als Schallschutz mittels Schwingungsdämpfung der Holzschicht in einer Holz-Beton-Verbunddecke nach einer beliebigen Kombination von Merkmalen gemäss einem oder mehreren der Abschnitte **[0020]** bis **[0036].**

Ausserdem betrifft die Erfindung ein **Verfahren** zur Herstellung einer Holz-Beton-Verbunddecke nach einer beliebigen Kombination von Merkmalen gemäss einem oder mehreren der Abschnitte **[0029]** bis **[0036]** mit mindestens zwei Deckenmodulen,
a. wobei die Deckenmodule je mit ihrem Schichtaufbau erstellt werden, sodass von unten nach oben zunächst die Holzschicht mit den mit ihren unteren Enden darin verankerten Schubverbindern angefertigt wird,
b. anschliessend die Dämmschicht mit mindestens zwei Dämmmaterialien gebildet wird, indem zunächst das dichtere Dämmmaterial eingebracht wird, was die Trägheit der Holzschicht erhöht und als Schwingungsdämpfung zu wirken bestimmt ist, und anschliessend das weniger dichte Dämmmaterial angeordnet oder hierzu ein Hohlraum freigelassen wird,
c. schliesslich die Betonschicht mit ihrer Bewehrung erstellt wird, sodass die Schubverbinder mit ihren oberen Enden in der Betonschicht verankert werden, wobei für den Anschluss an das mindestens zweite Deckenmodul in Aussparungen der Betonschicht ihre Bewehrung aus denselben hervortritt, und
d. das fertig erstellte Deckenmodul in der ihm vorbestimmten Lage auf einem oder mehreren Trägern verlegt und an das mindestens zweite Deckenmodul angeschlossen wird, indem die Bewehrungen der benachbarten Betonschichten kraftschlüssig verbunden werden, und die Aussparungen anschliessend betoniert werden.

Nach einer vorteilhaften Ausführung umfasst das Verfahren die Kombination der Merkmale gemäss Abschnitt **[0038],** wobei für je ein Deckenmodul
a0. zunächst die Holzschicht bearbeitet wird, indem die Schubverbinder in dieselbe eingebracht und darin befestigt werden, wobei eine Schalung die Holzschicht für den Aufbau der weiteren Schichten einfasst,
c0. nach Erstellen der Dämmschicht über derselben die Bewehrung für die Betonschicht innerhalb der Schalung eingelegt wird, und
c1. innerhalb der Schalung die Betonschicht gegossen wird und nach Aushärten derselben die Schalung entfernt wird, womit das Deckenmodul erstellt ist.

Weiter betrifft die Erfindung eine **Holz-Beton-Verbunddecke,** deren Tragwerk einen Bestandteil Beton und einen damit schubfest verbundenen Bestandteil Holz umfasst, wobei die Decke einen Schichtaufbau aufweist, der von unten nach oben zuerst einen im Verbund der Decke auf Zug belastbaren, flächenhaft ausgedehnten Holzbestandteil, nämlich eine Holzschicht, einschliesst, gefolgt von entweder einer Dämmschicht und schliesslich einer Betonschicht, oder bei Fehlen der Dämmschicht gefolgt oder direkt gefolgt von einer Betonschicht, wobei die Holzschicht mindestens zwei auf Stoss anschliessende Holzplatten einschliesst, welche wechselseitig gegeneinander gespannt sind, indem die jeweils eine Holzplatte senkrecht auf eine beim Anschluss auf Stoss gebildete Trennebene gegen die jeweils andere Holzplatte drückt, wobei in jede der so gegeneinander gespannten Holzplatten unter Intaktlassens ihrer Unterseite mindestens eine Ausnehmung so durch Materialabtrag erstellt ist, dass diese wenigstens einen kastenartigen Raum in der Holzplatte ausformt und mit einer Ausnehmung der jenseits der Trennebene befindlichen Holzplatte einen die beiden Holzplatten übergreifenden, ausgenommenen Durchgang bildet, wobei die Holzplatten, von der Trennebene aus gesehen, in einem hinter ihrem einen oder hinteren kastenartigen Raum in eine Richtung senkrecht von der Trennebene weg sich erstreckenden Bereich intakt belassen sind und dort also ein hinteres Intaktmaterial für anderweitige Nutzung bilden, wobei das Spannmittel in den Durchgang eingebracht und je endseitig im wenigstens einen kastenartigen Raum verankert ist, sodass infolge Verspannens dieses Spannmittels die Holzplatten gegeneinander gespannt sind.

Nach einer vorteilhaften Ausführung umfasst die erfindungsgemässe **Holz-Beton-Verbunddecke** die Kombination der Merkmale gemäss Abschnitt **[0040],** wobei der Schichtaufbau der Decke sich entweder unterzugsfrei über die Decke erstreckt oder bei einer allenfalls vorhandenen Dämmschicht mindestens ein Unterzug wenigstens die Betonschicht und die Dämmschicht durchmisst und sich folglich nach unten wenigstens bis an die Holzschicht erstreckt.

Nach einer vorteilhaften Ausführung umfasst die erfindungsgemässe **Holz-Beton-Verbunddecke** die Kombination von Merkmalen gemäss Abschnitt **[0040]** oder **[0041],** wobei der intakt belassene Bereich direkt hinter dem einen oder hinteren kastenartigen Raum anschliesst und sich in eine Richtung senkrecht von der Trennebene weg erstreckt.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0042],** wobei sich der intakt belassene Bereich entweder bis an ein Ende der Holzplatte erstreckt, welches dem an der Trennebene befindlichen Ende der Holzplatte gegenüberliegt, oder der Bereich sich bis zu einem für eine Verspannung mit einer weiteren Holzplatte angeordneten kastenartigen Raum derselben Holzplatte erstreckt.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0043],** wobei das Spannmittel an einer in Bezug auf die Trennebene vorgelagerten Stelle innerhalb der Holzplatte anschlägt.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0044],** wobei das Spannmittel nicht oder nicht direkt an einer Trennebene oder einer Abschlussfläche der Holzplatte anschlägt.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0045],** wobei der mindestens eine kastenartige Raum gegen oben offen oder gegen oben sowie stirnseitig offen ausgeführt ist.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0046],** wobei der mindestens eine kastenartige Raum zur Aufnahme einer Verankerung des Spannmittels quaderförmig ausgenommen ist.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0047],** wobei entweder
i. ein Spannmittel lose in den Durchgang eingelegt und verspannt ist, indem es an einem unter Freilassung gebildeten, von der Trennebene aus gesehen vorderen Intaktmaterial der Holzplatte, welches im Fall eines darin verlaufenden Hohlkanals einzig deswegen nicht intakt ist oder welches im Fall eines darin verlaufenden Hohlkanals für das orthogonal zur Trennebene wirkende Spannmittel einzig deswegen nicht intakt ist, mit Druck anschlägt, sodass die auf Stoss anschliessenden Holzplatten senkrecht zur Trennebene wechselseitig gegeneinander gespannt sind, und/oder
ii. das Spannmittel im mindestens einen oder, von der Trennebene aus gesehen, hinteren kastenartigen Raum so verankert ist, dass mindestens eine Stirnseite des hinteren Intaktmaterials frei von Verankerungsmitteln bleibt.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0048],** wobei der die beiden Holzplatten übergreifende Durchgang zur Trennebene symmetrisch ausgenommen ist, sodass die Ausnehmungen der Holzplatten identisch anfertigbar sind und/oder das Spannmittel seitenunabhängig einsetzbar ist und/oder das Spannmittel seitenunabhängig, orthogonal zur Trennebene wirkend einsetzbar ist.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0049],** wobei die Spannmittel-Bauteile eine zur Trennebene symmetrische Anordnung bilden und/oder die Spannmittel-Bauteile orthogonal zur Trennebene wirkend verlegt sind.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0050],** wobei das Spannmittel
i. als Gewindeverbindung mit endseitig verankerten Schraubenköpfen oder
ii. als hebelbetätigter Spannverschluss mit endseitig verankerten, von einem Spannarm ergriffenen Spannklötzen oder
iii. als Keilverbindung realisiert ist, wobei für die Keilverbindung das vordere Intaktmaterial, welches im Fall eines darin verlaufenden Hohlkanals einzig deswegen nicht intakt ist oder welches im Fall eines darin verlaufenden Hohlkanals für das orthogonal zur Trennebene wirkende Spannmittel einzig deswegen nicht intakt ist, an beiden Holzplatten je bis zur Trennebene reicht und ein Spannkeil und ein Gegenkeil innerhalb eines kastenartigen Raums einer diesseitigen Holzplatte, von der Trennebene aus gesehen, hinter dem vorderen Intaktmaterial angeordnet sind, und ein Gewindestab mit dem Gegenkeil sowie mit einem Spannklotz im gegenüberliegenden kastenartigen Raum der jenseitigen Holzplatte verankert ist, sodass mit Hinunterschlagen bzw. Einschlagen oder Einklemmen des Spannkeils das zwischen dem Spannklotz und den als Spannklotz wirkenden verspannten Keilen befindliche vordere Intaktmaterial mit Druck beaufschlagt ist.

Nach einer weiter vorteilhaften Ausführung umfasst die erfindungsgemässe **Holz-Beton-Verbunddecke** eine beliebige Kombination von Merkmalen gemäss einem oder mehreren der Abschnitte **[0040]** bis **[0051],** wobei die Ausnehmungen je eine, von der Trennebene aus gesehen, hintere Kammer und eine vordere Kammer ausformen, die über einen Hohlkanal im vorderen Intaktmaterial verbunden sind, wodurch dieses einzig aufgrund des Hohlkanals nicht intakt ist oder wodurch dieses einzig aufgrund des Hohlkanals für das orthogonal zur Trennebene wirkende Spannmittel nicht intakt ist, wobei das Spannmittel je endseitig in der hinteren Kammer mittels Schraubenköpfen oder Spannklötzen verankert ist und die vordere Kammer einer diesseitigen Holzplatte jeweils mit der vorderen Kammer der jenseits der Stossachse befindlichen Holzplatte eine gemeinsame, oben offene Kammer bildet, wobei über die Hohlkanäle und gemeinsame Kammer eine durchgehende Gewindeverbindung realisiert ist, welche entweder durch ortfestes Drehen einer Muffe, einer Holländer-Verschraubung oder eines Nippels in der gemeinsamen Kammer verspannbar ist.

Ferner betrifft die Erfindung ein **Verfahren** zur Herstellung einer Holz-Beton-Verbunddecke nach einer beliebigen Kombination von Merkmalen gemäss einem oder mehreren der Abschnitte **[0040]** bis **[0052],** indem
a. in die zu verspannenden Holzplatten je die mindestens eine Ausnehmung so durch Materialabtrag erstellt wird, dass sie wenigstens einen kastenartigen Raum ausformt,
b. die Holzplatten anschliessend auf Stoss verlegt werden, wobei ihre Ausnehmungen einen die beiden Holzplatten übergreifenden, ausgenommenen Durchgang bilden, und
c. das Spannmittel in den Durchgang eingebracht und je endseitig im wenigstens einen oder hinteren kastenartigen Raum verankert wird,
d. und das Spannmittel von oben verspannt wird.

Nach einer vorteilhaften Ausführung umfasst das **Verfahren** die Kombination der Merkmale gemäss Abschnitt **[0053],** indem
i. das Spannmittel lose in den Durchgang eingelegt wird und so verankert wird, dass es unter Zugspannung an einem unter Freilassung gebildeten vorderen Intaktmaterial, welches im Fall eines darin verlaufenden Hohlkanals einzig deshalb nicht intakt ist oder welches im Fall eines darin verlaufenden Hohlkanals für das orthogonal zur Trennebene wirkende Spannmittel einzig deshalb nicht intakt ist, mit Druck anschlägt, sodass die auf Stoss anschliessenden Holzplatten senkrecht zur Trennebene wechselseitig gegeneinander gespannt werden, und/oder
ii. das Spannmittel im mindestens einen oder hinteren kastenartigen Raum so verankert wird, dass mindestens eine Stirnseite des hinteren Intaktmaterials frei von Verankerungsmitteln bleibt.

Nach einer weiter vorteilhaften Ausführung umfasst das **Verfahren** die Merkmale gemäss einem der Abschnitte **[0053]** oder **[0054],** wobei
a. die Ausnehmungen je eine hintere Kammer und eine vordere Kammer ausformen, die über einen Hohlkanal im vorderen Intaktmaterial verbunden sind, wodurch dieses einzig aufgrund des Hohlkanals nicht intakt ist oder wodurch dieses einzig aufgrund des Hohlkanals für das orthogonal zur Trennebene wirkende Spannmittel nicht intakt ist, und
b. die vordere Kammer einer diesseitigen Holzplatte jeweils mit der vorderen Kammer der jenseits der Stossachse befindlichen Holzplatte eine gemeinsame, oben offene Kammer bildet, und
c. wobei das Spannmittel je endseitig in der hinteren Kammer mittels eines Schraubenkopfs oder Spannklotzes verankert wird, und
d. eine über die Hohlkanäle und gemeinsame Kammer durchgehende Gewindeverbindung realisiert wird, welche durch ortfestes Drehen einer Muffe, einer Holländer-Verschraubung oder eines Nippels in der gemeinsamen Kammer verspannt wird.

Nach einer vorteilhaften Ausführung umfasst die erfindungsgemässe **Holz-Beton-Verbunddecke** eine beliebige Kombination von Merkmalen gemäss einem oder mehreren der Abschnitte **[0020]** bis **[0025], [0029]** bis **[0036], [0040]** bis **[0052]** und eines oder mehrerer der in den nachfolgenden Abschnitten **[0057]** bis **[00111]** vorgestellten Merkmale, nämlich:
wobei die Holzschicht in einem untersten Schichtabschnitt frei von materialabtragenden Bearbeitungen im Holz und somit intakt belassen ist oder die Holzschicht in einem in Bezug auf die Schichtdicke untersten Abschnitt ihrer Schicht frei von materialabtragenden Bearbeitungen im Holz und somit intakt belassen ist oder die Holzschicht in einem untersten Abschnitt ihrer Schichtdicke frei von materialabtragenden Bearbeitungen im Holz und somit intakt belassen ist;
wobei der mindestens eine Unterzug bewehrt ist;
wobei der mindestens eine Unterzug aus Stahlbeton ausgeführt ist;
wobei mindestens ein Schubverbinder oder jeder die Dämmschicht durchquerende Schubverbinder oder jeder Schubverbinder der Verbunddecke eine unterste Tragschicht mit einer obersten Tragschicht des Verbunds schubfest verbindet;
wobei die Holzschicht als im Verbund der Decke auf Zug belastbare unterste Tragschicht und/oder die Betonschicht als oberste Tragschicht ausgeführt ist;
wobei zwischen der Holzschicht und der Betonschicht auftretende Schubkräfte in mindestens zwei ausgezeichneten Richtungen von den Schubverbindern aufnehmbar sind oder in mindestens zwei ausgezeichneten Richtungen in erhöhtem Masse von den Schubverbindern aufnehmbar sind oder in mindestens zwei senkrecht zueinander stehenden, ausgezeichneten Richtungen von den Schubverbindern aufnehmbar sind oder in mindestens zwei senkrecht zueinander stehenden, ausgezeichneten Richtungen in erhöhtem Masse von den Schubverbindern aufnehmbar sind oder zwischen der Holzschicht und der Betonschicht auftretende Schubkräfte in zwei ausgezeichneten Richtungen in erhöhtem Masse aufnehmbar sind, nämlich in denjenigen beiden senkrecht zueinander stehenden Richtungen, in denen die Schubverbinder je Reihen bilden oder zwischen der Holzschicht und der Betonschicht auftretende Schubkräfte in zwei ausgezeichneten Richtungen in erhöhtem Masse von den Schubverbindern aufnehmbar sind, nämlich in denjenigen beiden senkrecht zueinander stehenden Richtungen, in denen die Schubverbinder je Reihen bilden;
wobei zwischen der Holzschicht und der Betonschicht auftretende Schubkräfte in jeder Richtung aufnehmbar sind oder wobei zwischen der Holzschicht und der Betonschicht auftretende Schubkräfte in jeder Richtung von den Schubverbindern aufnehmbar sind;
wobei mindestens ein Schubverbinder oder jeder die Dämmschicht durchquerende Schubverbinder oder jeder Schubverbinder der Verbunddecke zugleich in die Holzschicht und in die Betonschicht hineinragt und dabei im Holz der Holzschicht und im Beton der Betonschicht gehalten ist;
wobei mindestens ein Schubverbinder oder jeder die Dämmschicht durchquerende Schubverbinder oder jeder Schubverbinder der Verbunddecke über einen einstückigen Abschnitt von der Holzschicht in die Betonschicht führt;
wobei mindestens ein Schubverbinder oder jeder die Dämmschicht durchquerende Schubverbinder oder jeder Schubverbinder der Verbunddecke formschlüssig und somit ohne Spiel in die Holzschicht und die Betonschicht eingebaut ist, sodass der Schubverbinder unverrückbar und unverformbar eingebettet ist;
wobei mindestens ein Schubverbinder oder jeder die Dämmschicht durchquerende Schubverbinder oder jeder Schubverbinder der Verbunddecke eine solche Form aufweist, dass er zur Erstellung einer schubfesten Verbindung zwischen der Holzschicht und der Betonschicht unverändert einbaubar oder in seiner Form unverändert einbaubar ist;
wobei mindestens ein Schubverbinder oder jeder die Dämmschicht durchquerende Schubverbinder oder jeder Schubverbinder der Verbunddecke nicht als Bügel ausgestaltet ist;
wobei mindestens ein Schubverbinder oder jeder die Dämmschicht durchquerende Schubverbinder oder jeder Schubverbinder der Verbunddecke kein Lochblech ist;
wobei mindestens ein Schubverbinder oder jeder die Dämmschicht durchquerende Schubverbinder oder jeder Schubverbinder der Verbunddecke als Rohr, als Profil oder Strangprofil, d.h. Profil aus einem Strangpressverfahren, ausgeführt ist;
wobei mindestens ein Schubverbinder oder jeder die Dämmschicht durchquerende Schubverbinder oder jeder Schubverbinder der Verbunddecke als Rohr mit oder ohne Flansch ausgeführt ist, wobei das Rohr einen Rohrabschnitt mit rundem oder elliptischem Querschnitt oder einen Rohrabschnitt in Form eines Mehrkantrohrs aufweist oder einen solchen bildet;
wobei mindestens ein Schubverbinder oder jeder die Dämmschicht durchquerende Schubverbinder oder jeder Schubverbinder der Verbunddecke einstückig ausgeführt ist;
wobei mindestens ein Schubverbinder oder jeder die Dämmschicht durchquerende Schubverbinder oder jeder Schubverbinder der Verbunddecke mit seinem einen Endabschnitt in die Holzschicht und mit seinem anderen Endabschnitt in die Betonschicht hineinragt, und also im Holz und Beton satt eingebettet ist;
wobei mindestens ein Schubverbinder oder jeder die Dämmschicht durchquerende Schubverbinder oder jeder Schubverbinder der Verbunddecke ausserhalb des mindestens einen Unterzugs verläuft oder nicht im mindestens einen Unterzug eingebettet ist und/oder ausserhalb von mit Beton gefüllten Kerven der Holzschicht verläuft oder nicht in mit Beton gefüllten Kerven der Holzschicht eingebettet ist und/oder ausserhalb von Auskragungen des Betons von der Betonschicht, insbesondere Auskragungen des Betons nach unten, verläuft oder nicht in Auskragungen des Betons von der Betonschicht, insbesondere Auskragungen des Betons nach unten, eingebettet ist;
wobei mindestens ein Schubverbinder oder jeder die Dämmschicht durchquerende Schubverbinder oder jeder Schubverbinder der Verbunddecke nicht einen Teil eines Unterzugs bildet oder nicht mit demselben verbunden ist oder nicht als Unterzug ausgeführt ist und/oder nicht Teil einer mit Beton gefüllten Kerve der Holzschicht bildet oder nicht als solche vorliegt oder nicht mit einer solchen verbunden ist und/oder nicht Teil einer Auskragung des Betons von der Betonschicht, insbesondere einer Auskragung des Betons nach unten, bildet oder nicht als solche vorliegt oder nicht mit einer solchen verbunden ist;
wobei Schubverbinder mit einem Gewichtsanteil von mindestens 50% oder von mindestens 60% oder von mindestens 70% oder von mindestens 75% oder von mindestens 80% oder von mindestens 90% oder insgesamt in der Decke eingebauten Schubverbinder ausserhalb des mindestens einen Unterzugs und/oder ausserhalb von mit Beton gefüllten Kerven der Holzschicht und/oder ausserhalb von Auskragungen des Betons von der Betonschicht, insbesondere Auskragungen des Betons nach unten, verlaufen oder eingebaut sind;
wobei die Holzschicht kervenfrei ausgeführt ist;
wobei innerhalb der Holzschicht und innerhalb der Betonschicht gehaltene Schubverbinder mechanisch in der Verbunddecke eingebaut sind oder die Schubverbindung zwischen Holzschicht und Betonschicht ausschliesslich durch mechanisch eingebaute Schubverbinder, welche innerhalb der Holzschicht und innerhalb der Betonschicht gehalten sind, realisiert ist, womit die Schubverbindung weder über einen Formschluss noch über einen Flächenverbund realisiert ist;
wobei der mindestens ein Schubverbinder oder jeder die Dämmschicht durchquerende Schubverbinder oder jeder Schubverbinder der Verbunddecke mittels Einpressung und/oder Klebung innerhalb der Holzschicht gehalten ist;
wobei mindestens ein mit seinen Endabschnitten je in die Holzschicht und in die Betonschicht hineinragender Schubverbinder direkt durch das Dämmmaterial der Dämmschicht führt und so von diesem allseits umschlossen ist, wobei das Dämmmaterial nicht aus Luft besteht;
wobei jeder die Dämmschicht durchquerende, mit seinen Endabschnitten je in die Holzschicht und in die Betonschicht hineinragende Schubverbinder direkt durch das Dämmmaterial der Dämmschicht führt und so von diesem allseits umschlossen ist, wobei das Dämmmaterial nicht aus Luft besteht;
wobei die Dämmschicht bis an die und/oder bis auf die sie durchquerenden Schubverbinder und allfällig vorhandenen Unterzügen gleich dick ausgeführt ist;
wobei das Dämmmaterial der Dämmschicht vollständig von der Holzschicht gehalten ist und daher ohne untere Schalung auskommt;
wobei die Holzschicht bei einachsiger Tragwirkung der Decke, d.h. bei uniaxialer Lastabtragung der Decke, in Richtung des Lastabtrags auf Zug belastbar ist;
wobei die Holzschicht über die maximale Spannweite der Decke auf Zug belastbar ist;
wobei die Holzschicht über die gesamte Länge oder entlang der gesamten Länge des mindestens einen Unterzugs auf Zug belastbar ist;
wobei die Holzschicht so konfiguriert ist, dass sie ihrerseits nicht auf einem oder mehreren unter ihr verlaufenden Unterzügen aufzuliegen braucht;
wobei die Holzschicht so konfiguriert ist, dass sie ihrerseits nicht auf einem oder mehreren unter ihr verlaufenden, als Holzbalken ausgeführten Unterzug bzw. als Holzbalken ausgeführten Unterzügen, aufzuliegen braucht;
wobei der unterste Schichtabschnitt der Holzschicht sich flächendeckend über die ganze Holzschicht erstreckt;
wobei die Holzschicht mit ihrem untersten Schichtabschnitt gegen unten abschliesst;
wobei die Holzschicht mit ihrem untersten Schichtabschnitt eine durchgehende Untersicht bildet;
wobei die Holzschicht flachkant auf Stoss aneinander anschliessende Holzplatten einschliesst oder aus solchen gebildet ist;
wobei die Ausnehmung so durch Materialabtrag erstellt ist, dass sie wenigstens einen kastenartigen Raum von oben gesehen innerhalb der Holzplatte ausformt;
wobei die Verspannung der mindestens zwei auf Stoss anschliessenden, wechselseitig gegeneinander gespannten Holzplatten bewirkt, dass dieselben mit einer permanenten Spannkraft gegeneinander gespannt sind, und nicht lediglich zueinander in Position gehalten sind;
wobei die Verspannung der mindestens zwei auf Stoss anschliessenden, wechselseitig gegeneinander gespannten Holzplatten jeweils über einen Plattenbereich beidseits einer Trennebene der beiden gegeneinander verspannten Holzplatten realisiert ist, welcher Plattenbereich nur einen Teil einer Länge der Holzplatte in Spannrichtung einschliesst;
wobei der unterste Schichtabschnitt der Holzschicht daselbst eine Schicht bildet, welche eine Höhe aufweist;
wobei das Holz des untersten Schichtabschnitts der Holzschicht bis auf Nähte an Stellen und/oder entlang der Trennebenen, welche senkrecht zur Spannrichtung der gegeneinander gespannten Holzplatten verlaufen, nahtlos durchgehend ausgeführt ist;
wobei die Holzschicht auf ihrer Unterseite frei von materialabtragenden Bearbeitungen und somit intakt belassen ist;
wobei die Holzschicht auf ihrer Unterseite frei von Eingriffen oder Einschnitten oder Ausfräsungen und somit intakt belassen ist;
wobei die die Holzschicht gegen unten begrenzende Unterseite eine intakt belassene Deckenuntersicht bildet;
wobei die Holzschicht gegen unten als ebene Deckenuntersicht abschliesst;
wobei der unterste Schichtabschnitt eine Ausdehnung nach oben oder eine Höhe besitzt;
wobei die Ausdehnung des untersten Schichtabschnitts nach oben oder die Höhe des untersten Schichtabschnitts mindestens 5mm oder mindestens 10mm oder mindestens 15 mm oder mindestens 20 mm oder mindestens 25 mm misst;
wobei die Holzschicht nicht aus aneinandergereihten Holzbalken zusammengesetzt ist oder die Holzschicht nicht aus Bestandteilen in Form einzelner Holzbalken besteht oder die Holzschicht keine Bestandteile in Form einzelner Holzbalken einschliesst;
wobei die Holzschicht aus einem Holzwerkstoff aus Brettsperrholz, Furnierschichtholz oder Massivholz gefertigt ist;
wobei die Holzschicht nicht aus Brettstapel gebildet ist;
wobei die Holzschicht nicht aus Holzspanwerkstoffen gebildet ist;
wobei sich der Schichtverlauf der Decke beidseits des mindestens einen Unterzugs fortsetzt;
wobei der mindestens eine Unterzug oder eine Auskragung des Betons der Betonschicht, insbesondere eine Auskragung des Betons nach unten, bündig an die Holzschicht anschliesst;
wobei in der Verbunddecke Schubverbinder eingebaut sind, worunter mindestens ein Schubverbinder zugleich in die Holzschicht und in die Betonschicht hineinragt und dabei die Dämmschicht durchquert;
wobei die Holzschicht im Deckenverbund im verbauten Zustand der Decke auf Zug belastet ist;

Zudem betrifft die Erfindung eine **Baute** mit einer oder mehreren eingebauten Holz-Beton-Verbunddecken mit einer beliebigen Kombination von Merkmalen gemäss einem oder mehreren der Abschnitte **[0020]** bis **[0025], [0029]** bis **[0036], [0040]** bis **[0052], [0056]** bis **[00111].**

Eine vorteilhafte Ausführung der Erfindung betrifft eine **Baute** mit der Kombination von Merkmalen gemäss Abschnitt **[00112],** wobei sie als Wohn- und/oder Bürobaute, Verwaltungsgebäude, Schule, Bildungsstätte, Versammlungsstätte, Messe- oder Stadthalle, Kongress- und Konzerthalle, Bibliothek, Museum, Archiv, Einkaufszentrum, Hotel, Schwimmhalle, Sportstadium, Bahnhof oder Flughafen ausgeführt ist.

Eine weiter vorteilhafte Ausführung der Erfindung betrifft eine **Baute** mit der Kombination von Merkmalen gemäss einem der Abschnitte **[00112]** oder **[00113],** wobei sie als Hochhaus mit einer Gesamthöhe ab 25 m ausgeführt ist.

Eine weiter vorteilhafte Ausführung der Erfindung betrifft eine **Baute** gemäss einem oder mehreren der Abschnitte **[00112]** bis **[00114]** mit einer oder mehreren eingebauten Holz-Beton-Verbunddecken mit einer beliebigen Kombination von Merkmalen gemäss einem oder mehreren der Abschnitte **[0020]** bis **[0025], [0029]** bis **[0036], [0040]** bis **[0052], [0056]** bis **[00111],** wobei die Decken in einer Horizontallage und/oder in einer Schräglage bis 45° oder in einer Schräglage bis 60° verbaut sind;

Eine vorteilhafte Ausführung der Erfindung betrifft ausserdem ein **Verfahren** mit einer beliebigen Kombination von Merkmalen gemäss einem oder mehreren der Abschnitte **[0026]** bis **[0028], [0038]** bis **[0039], [0053]** bis **[0055].**

Eine weiter vorteilhafte Ausführung der Erfindung betrifft ein **Verfahren** mit einer beliebigen Kombination von Merkmalen gemäss einem oder mehreren der Abschnitte **[0026]** bis **[0028], [0038]** bis **[0039], [0053]** bis **[0055]** zur Erstellung einer Holz-Beton-Verbunddecken mit einer beliebigen Kombination von Merkmalen gemäss einem oder mehreren der Abschnitte **[0020]** bis **[0025], [0029]** bis **[0036], [0040]** bis **[0052], [0056]** bis **[00111].**

Eine weiter vorteilhafte Ausführung der Erfindung betrifft ein **Verfahren** mit der beliebigen Kombination von Merkmalen gemäss einem oder mehreren der Abschnitte **[0026]** bis **[0028], [0038]** bis **[0039], [0053]** bis **[0055]** zur Erstellung einer **Baute** mit einer beliebigen Kombination von Merkmalen gemäss einem oder mehreren der Abschnitte **[00112]** bis **[00115].**

Ausserdem betrifft eine vorteilhafte Ausführung der Erfindung eine **Verwendung** mit der Kombination von Merkmalen gemäss Abschnitt **[0037]** in einer Holz-Beton-Verbunddecke mit einer beliebigen Kombination von Merkmalen gemäss einem oder mehreren der Abschnitte **[0020]** bis **[0025], [0029]** bis **[0036], [0040]** bis **[0052], [0056]** bis **[00111].**

Eine weiter vorteilhafte Ausführung der Erfindung betrifft eine **Verwendung** mit der Kombination von Merkmalen gemäss Abschnitt **[0037]** in einer Holz-Beton-Verbunddecke mit einer beliebigen Kombination von Merkmalen gemäss einem oder mehreren der Abschnitte **[0020]** bis **[0025], [0029]** bis **[0036], [0040]** bis **[0052], [0056]** bis **[00111],** welche in einer Baute mit einer beliebigen Kombination von Merkmalen gemäss einem oder mehreren der Abschnitte **[00112]** bis **[00115]** eingebaut ist.

Die Aufgabe der Erfindung wird ausserdem gelöst von einer Holz-Beton-Verbunddecke mit den Merkmalen gemäss einem der Ansprüche 1, 6 oder 9. Vorteilhafte Ausführungen der erfindungsgemässen Holz-Beton-Verbunddecke sind in den abhängigen Ansprüchen 2 bis 4 und 11 beschrieben. Des Weiteren löst die Aufgabe ein Verfahren mit den Merkmalen gemäss einem der Ansprüche 5, 8 oder 10 sowie vorteilhafte Ausführungen des Verfahrens gemäss den Ansprüchen 14 und 15. Überdies löst die Aufgabe der Erfindung eine Verwendung gemäss Anspruch 7. Eine Lösung der Aufgabe bietet ferner eine Baute gemäss dem Anspruch 12 sowie eine vorteilhafte Ausführung der Baute gemäss Anspruch 13.

Weil sich mit der erfindungsgemässen Holz-Beton-Verbunddecke grosse Spannweiten überspannen lassen und diese zugleich einen attraktiven Anblick bieten, können sie eine äusserst breite und vielseitige Anwendung finden, nicht nur in Wohnbauten, sondern auch in Bürobauten und öffentlichen Verwaltungsgebäuden, insbesondere mit Grossraumbüro-Konzeptionierung, in Schulen und Bildungsstätten, aber auch in speziell gross dimensionierten Bauten wie Versammlungsstätten, Messe- und Stadthallen, Kongress- und Konzerthallen, Bibliotheken, Museen, Archiven, Einkaufszentren, Hotels, Schwimmhallen, Sportstadien, Bahnhöfen und Flughäfen, um einige solcher Bauten mit üblicherweise grossflächigen Decken zu nennen. Ein typisches Einsatzgebiet der erfindungsgemässen Decke betrifft den Geschossbau, insbesondere den Hochhausbau, weil dort regelmässig Wohnungen und/oder Büroeinheiten mit unterschiedlichen Grössen und variierenden Grundrissen untergebracht werden sollen und die Decke dank der mit ihr realisierbaren Spannmasse diese Flexibilität bietet. Auch bringt die erfindungsgemässe Holz-Beton-Verbunddecke gegenüber einem herkömmlichen Deckensystem eine Entlastung der Tragstruktur und Fundation der Baute mit sich, gerade bei Hochhäusern. Und selbst dann bzw. besonders wenn hohe Anforderungen an den Schallschutz gestellt werden, kann die erfindungsgemässe Deckenausführung durch ihr vergleichsweise leichtes Gewicht bestechen. Damit erfüllt sie moderne Ansprüche an nachhaltiges, schonendes Bauen und Wohnqualität gleichzeitig und eignet sich deshalb hervorragend für den urbanen Geschossbau und Hochhausbau. Die Höhe einer Baute, ab der sie nach den jeweils geltenden Normen als Hochhaus qualifiziert, variiert üblicherweise zwischen rund 25 und 50 Metern für ihre Gesamthöhe. Nachfolgend wird unter einem Hochhaus stets ein Gebäude ab einer Gesamthöhe von ca. 25 Metern verstanden. Es versteht sich, dass die erfindungsgemässe Decke auch in weniger komplexen bzw. weniger anforderungsreichen Baustrukturen zum Vorteil eingebaut werden kann und ihr Anwendungsbereich generell, wenngleich nicht ausschliesslich, den Hochbau betrifft.

In den Figuren wird die erfindungsgemässe Holz-Beton-Verbunddecke sowie eine Baute mit einer oder mehreren solchen eingebauten Decken anhand von Ausführungsbeispielen illustriert und in der nachfolgenden Beschreibung werden ihre Eigenheiten und ihre Herstellung im Einzelnen beschrieben und erklärt.
Es zeigt:

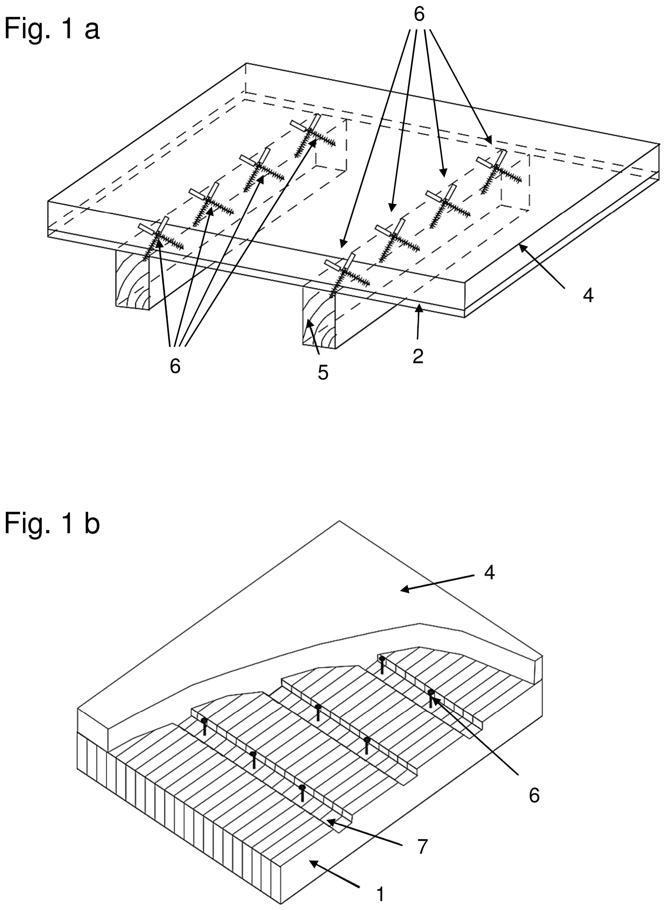

- Figur 1 a:: Ein Beispiel einer konventionellen Holz-Beton-Verbunddecke mit linearen Holzbauteilen und entlang derselben verlaufenden Verbindungselementen, in perspektivischer Draufsicht dargestellt;
- Figur 1 b:: Ein Beispiel einer konventionellen Holz-Beton-Verbunddecke mit flächigem Holzelement aus Brettstapel mit in Nuten desselben verlaufenden Verbindungselementen, teilweise aufgeschnitten, in perspektivischer Draufsicht dargestellt;
- Figur 2 a:: Einen Querschnitt durch den Schichtaufbau einer Ausführung der erfindungsgemässen Holz-Beton-Verbunddecke mit einem intern in die Decke eingelagerten Stahlbeton-Unterzug;
- Figur 2 b:: Einen Querschnitt durch den Schichtaufbau einer Ausführung der erfindungsgemässen Holz-Beton-Verbunddecke mit einem intern in die Decke eingelagerten Unterzug, der einen Stahlträger einschliesst;

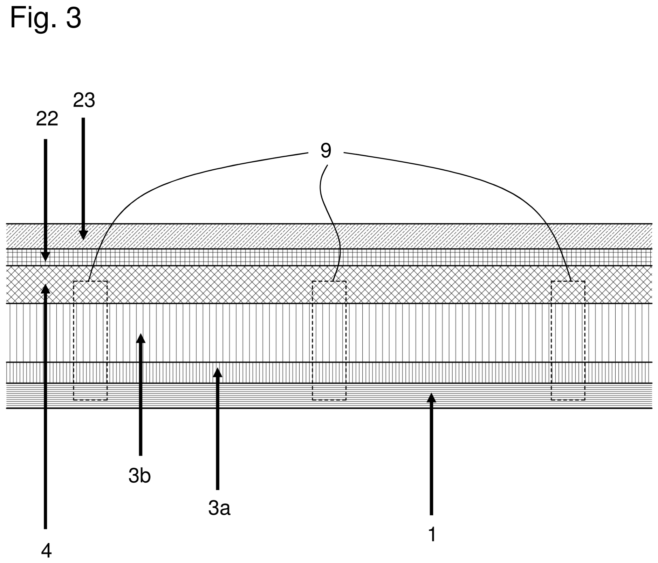

- Figur 3:: Einen Querschnitt durch den Schichtaufbau einer weiteren Ausführung der erfindungsgemässen Holz-Beton-Verbunddecke mit zweilagiger Dämmschicht;

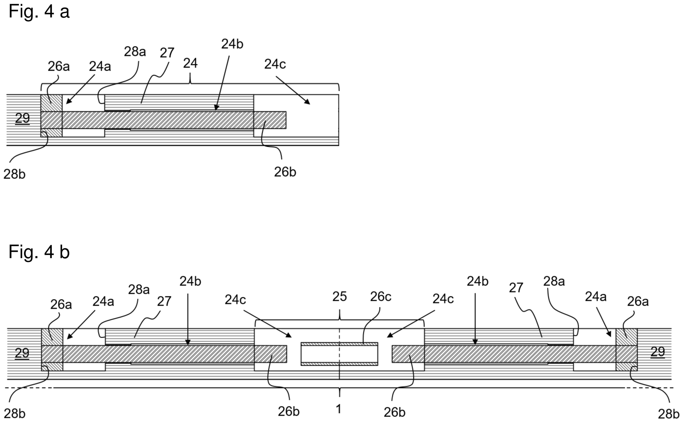

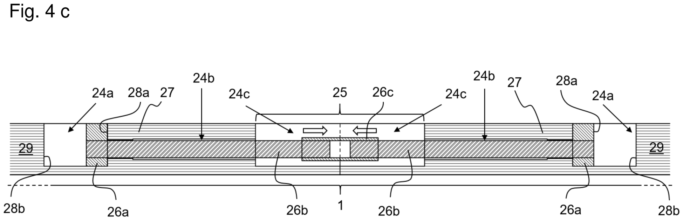

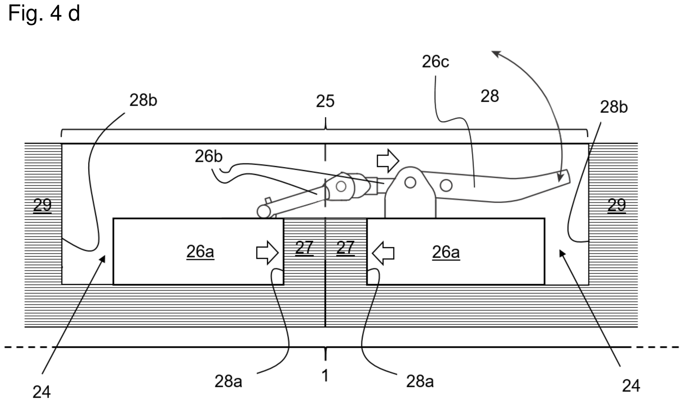

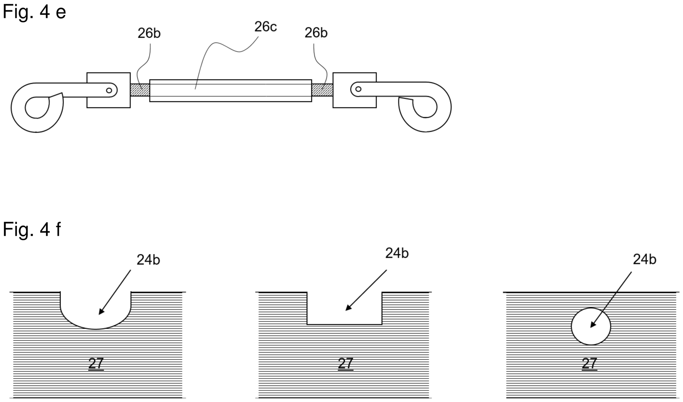

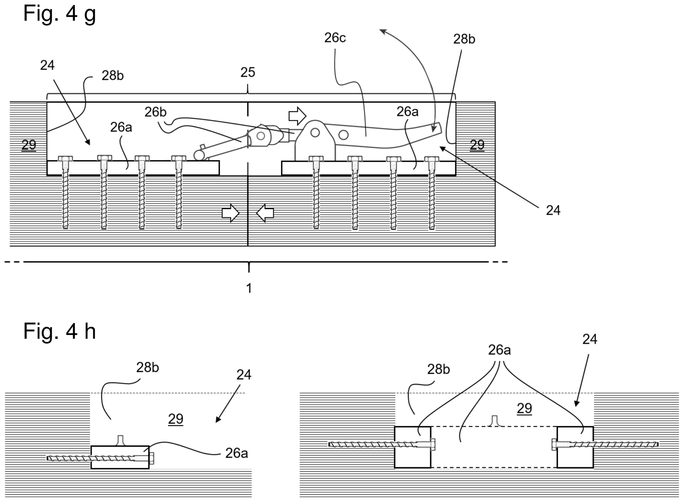

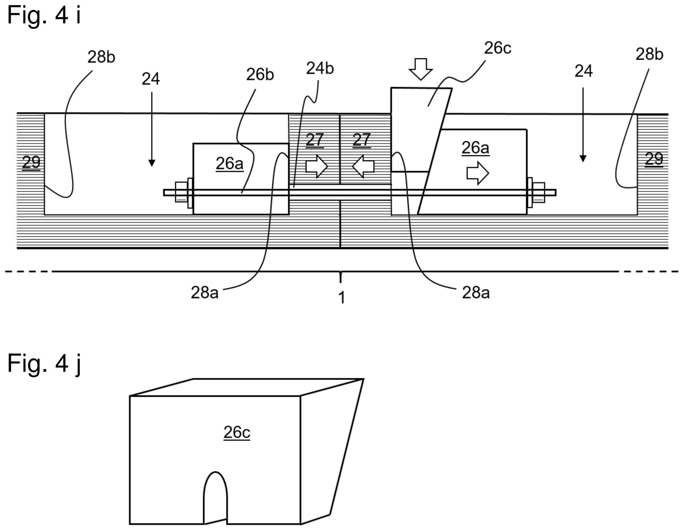

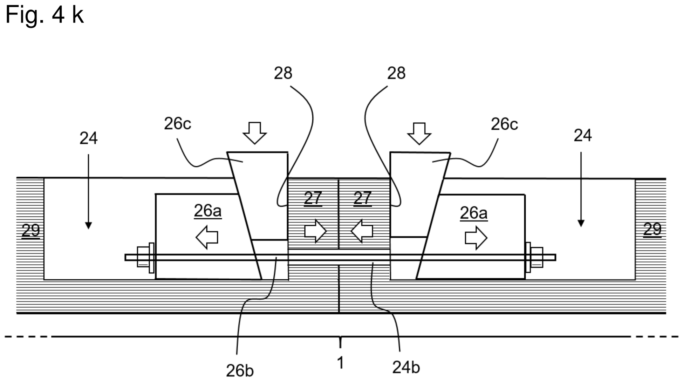

- Figur 4 a:: Einen Längsschnitt durch eine Holzplatte mit lose eingesetztem Anker für den zugkraftschlüssigen Anschluss an eine weitere Holzplatte;
- Figur 4 b:: Einen Längsschnitt durch zwei flachkant auf Stoss anschliessende Holzplatten vor dem Erstellen einer zugkraftschlüssigen Verbindung der Holzplatten;
- Figur 4 c:: Den Längsschnitt durch die Konfiguration gemäss Figur 4 b, nunmehr jedoch mit kraftschlüssig miteinander verspannten Holzplatten;
- Figur 4 d:: Einen Längsschnitt durch zwei auf Stoss anschliessende Holzplatten, welche mit einem lose eingelegten Spannverschluss gegeneinander verspannt sind;
- Figur 4 e:: Eine Zugspindel mit Gewindestäben und darauf laufender Muffe;
- Figur 4 f:: Einen Querschnitt durch das unter Freilassung gebildete vordere Intaktmaterial einer Holzplatte mit verschieden geformten Einschnitten bzw. Ausfräsungen für die Spannmittel-Verbindung, mit Blick in Richtung der Stossachse zur Trennebene der Holzplatten hin;
- Figur 4 g:: Einen Längsschnitt durch zwei auf Stoss anschliessende Holzplatten, welche mit einem in den Holzplatten verschraubten Spannverschluss gegeneinander verspannt sind;
- Figur 4 h:: Je einen Querschnitt durch eine Ausnehmung in einer Holzplatte mit seitlich verankertem Spannklotz;
- Figur 4 i:: Einen Längsschnitt durch zwei auf Stoss anschliessende Holzplatten, die mittels Keilverspannung gegeneinander verspannt sind;
- Figur 4 j:: Einen Spannkeil mit einem U-förmigen Einschnitt bzw. Ausfräsung, womit er sich über einen Gewindestab stülpen lässt;
- Figur 4 k:: Einen Längsschnitt durch zwei auf Stoss anschliessende, mit Keilverspannung gegeneinander verspannte Holzplatten in einer entlang der Trennebene der Holzplatten symmetrischen Verspannungsanordnung;

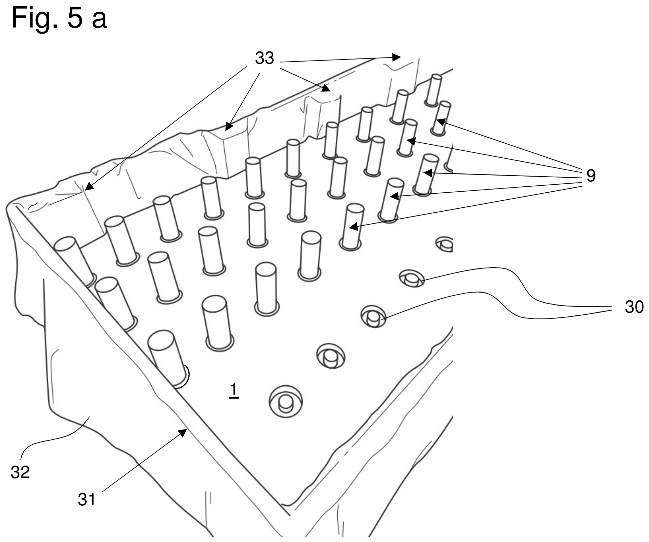

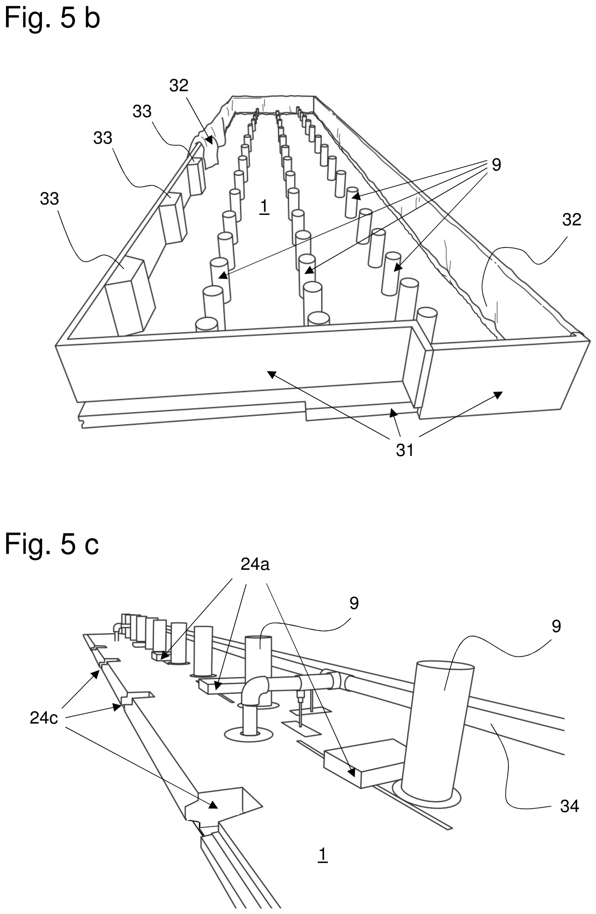

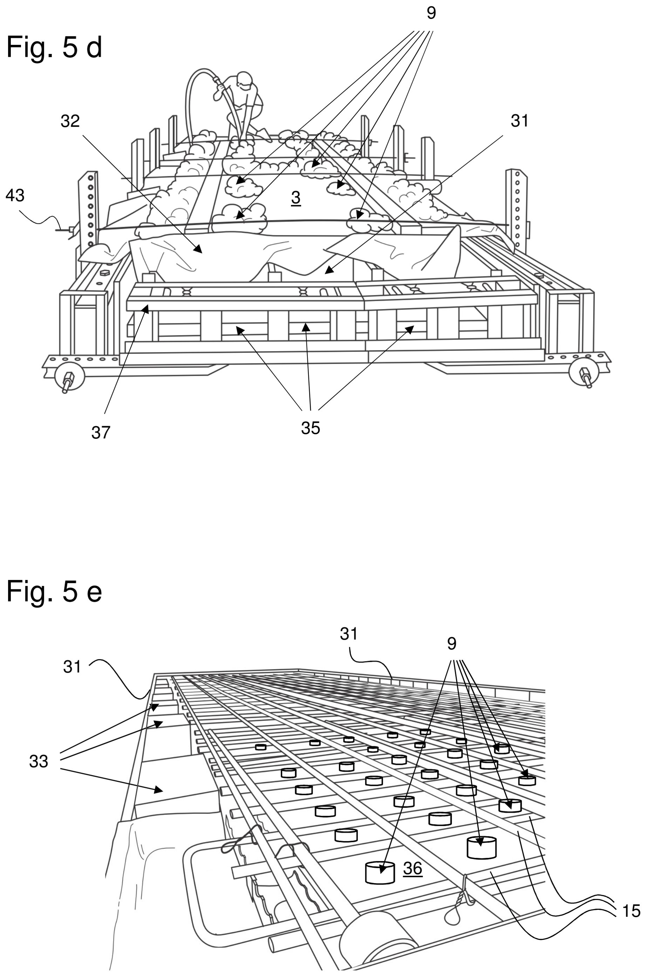

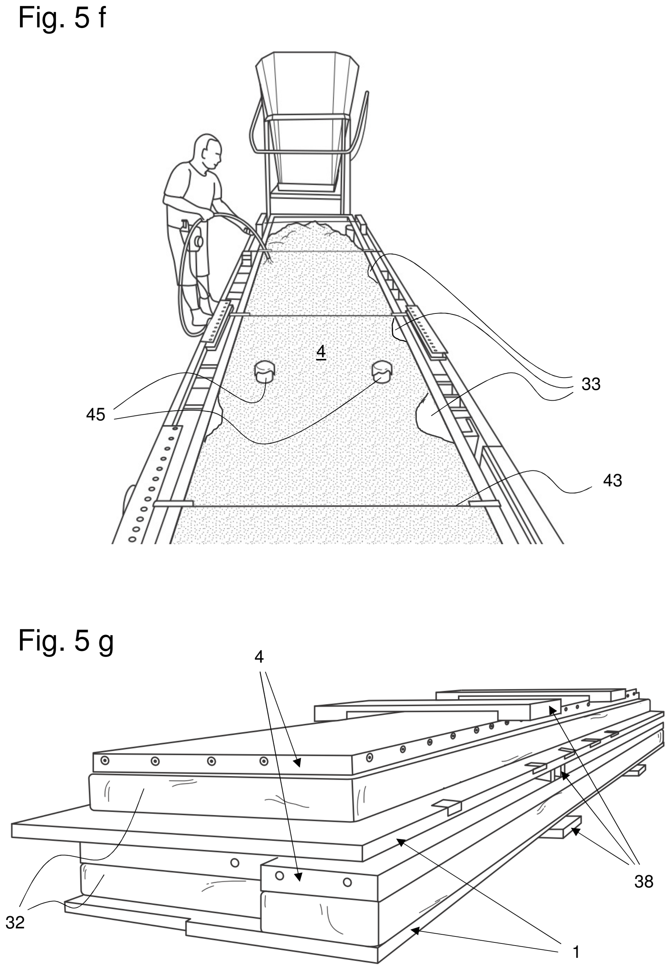

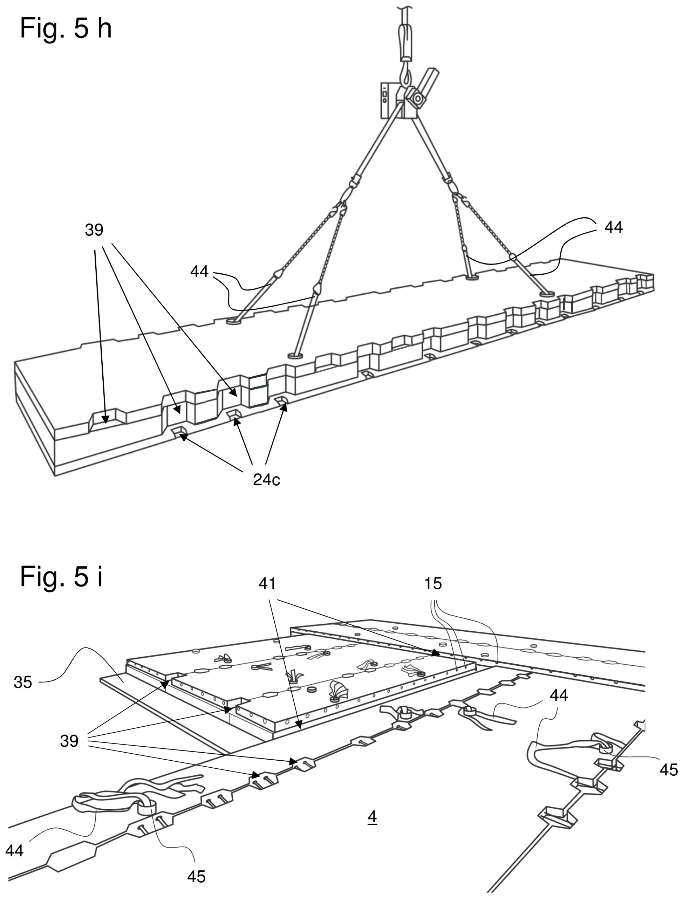

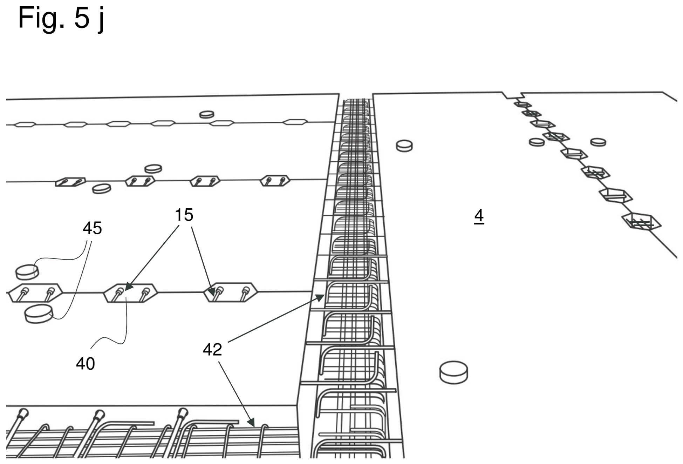

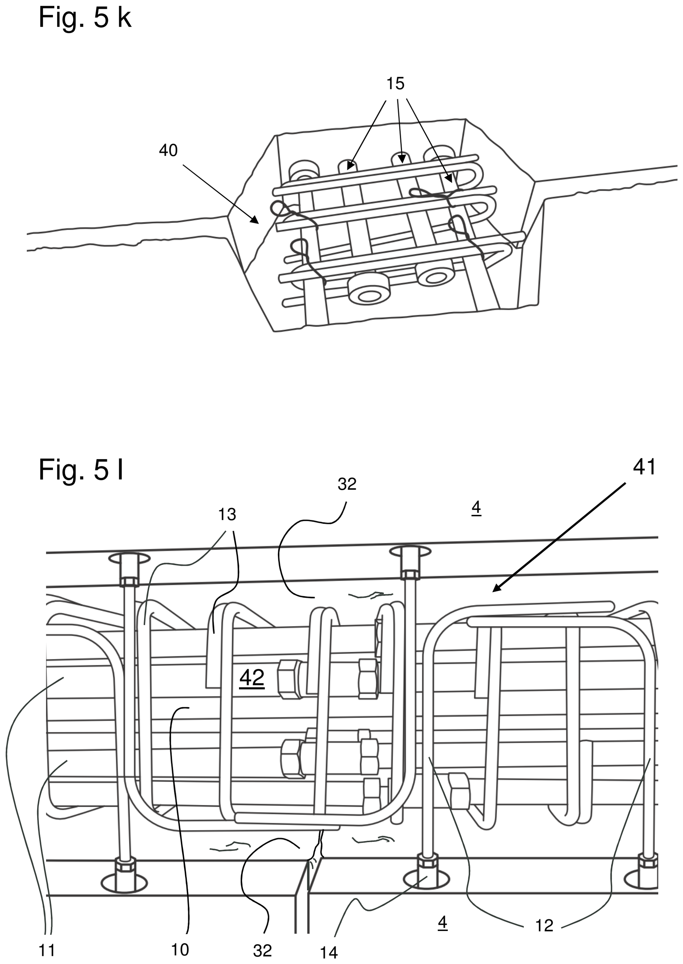

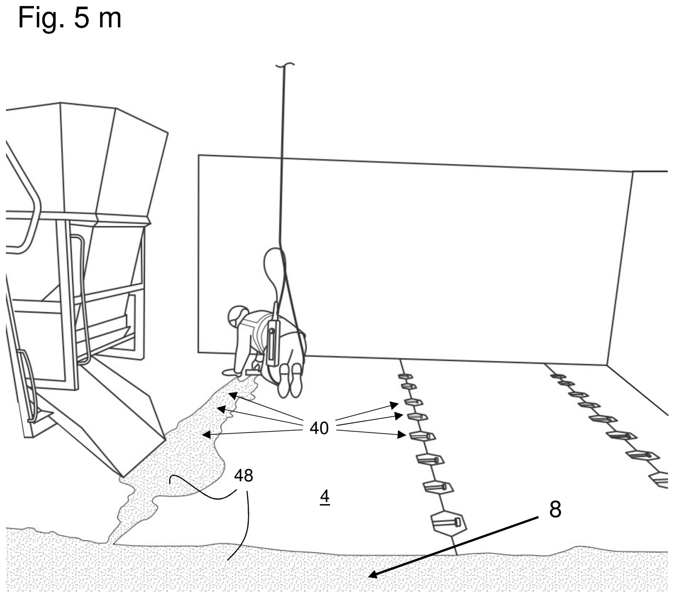

- Figur 5 a-m:: Ein Verfahren zur Herstellung einer erfindungsgemässen Holz-Beton-Verbunddecke in chronologischer Abfolge;

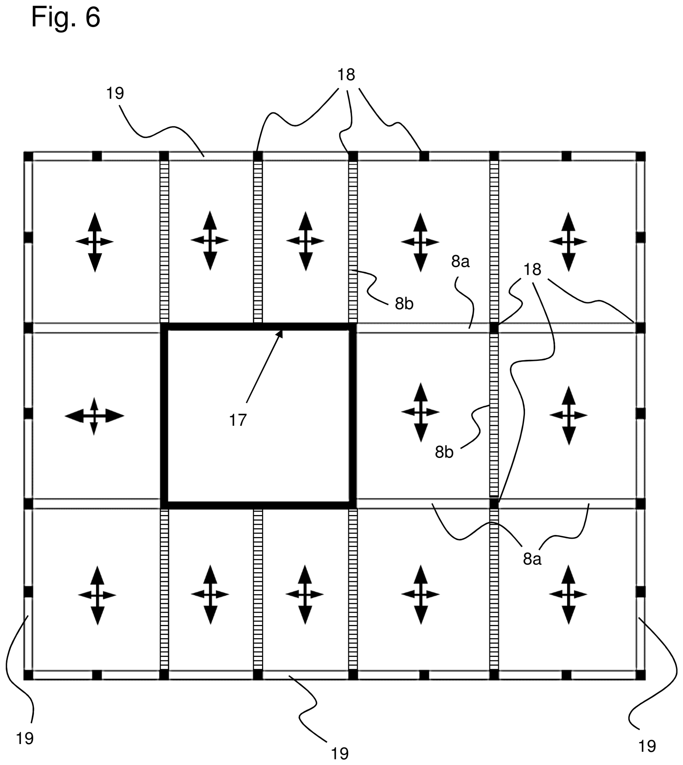

- Figur 6:: Ein schematisches Tragwerkskonzept einer erfindungsgemässen Holz-Beton-Verbunddecke anhand eines beispielweisen Geschossgrundrisses, mit vorteilhaft angeordneten internen Unterzügen;
- Figur 7:: Einen Querschnitt durch eine erfindungsgemässe Holz-Beton-Verbunddecke mit internem Unterzug, mit einer Ansicht auf oben und unten an die Decke anschliessende Stützen, welche hinter der Zeichenebene verlaufen;

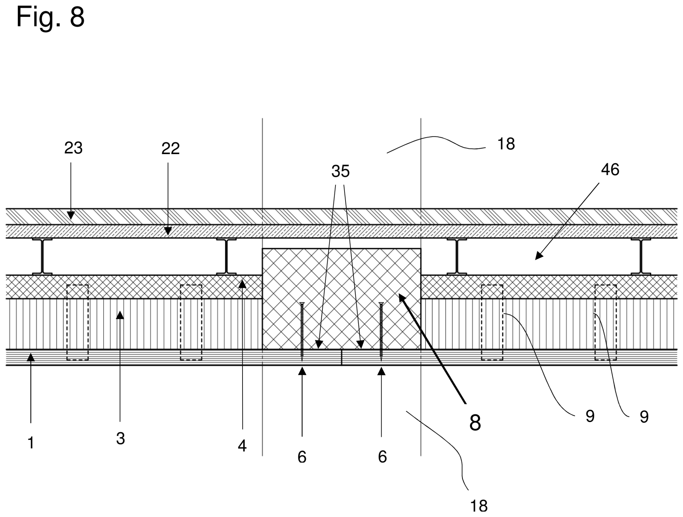

- Figur 8:: Einen Querschnitt durch eine erfindungsgemässe Holz-Beton-Verbunddecke mit einem intern in die Decke eingelagerten und oben überstehenden Unterzug, dessen Auskragung in einen Hohlboden integriert ist, mit einer Ansicht auf oben und unten an die Decke anschliessende Stützen, welche hinter der Zeichenebene verlaufen;

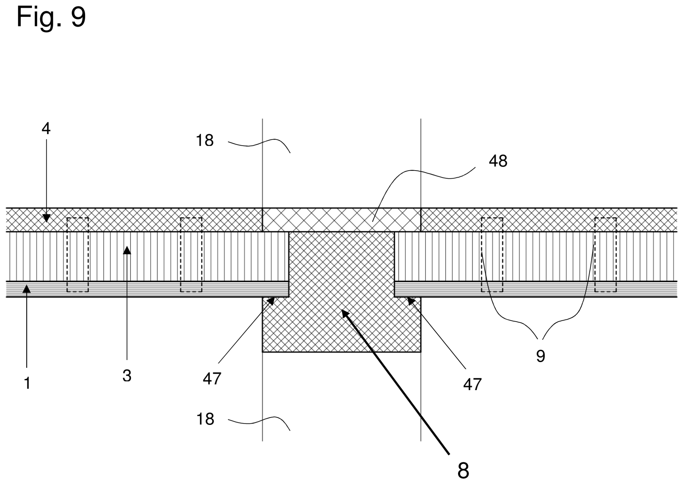

- Figur 9:: Einen Querschnitt durch eine erfindungsgemässe Holz-Beton-Verbunddecke mit einem intern in die Decke eingelagerten und unten auskragenden Unterzug, mit einer Ansicht auf oben und unten an die Decke anschliessende Stützen, welche hinter der Zeichenebene verlaufen;

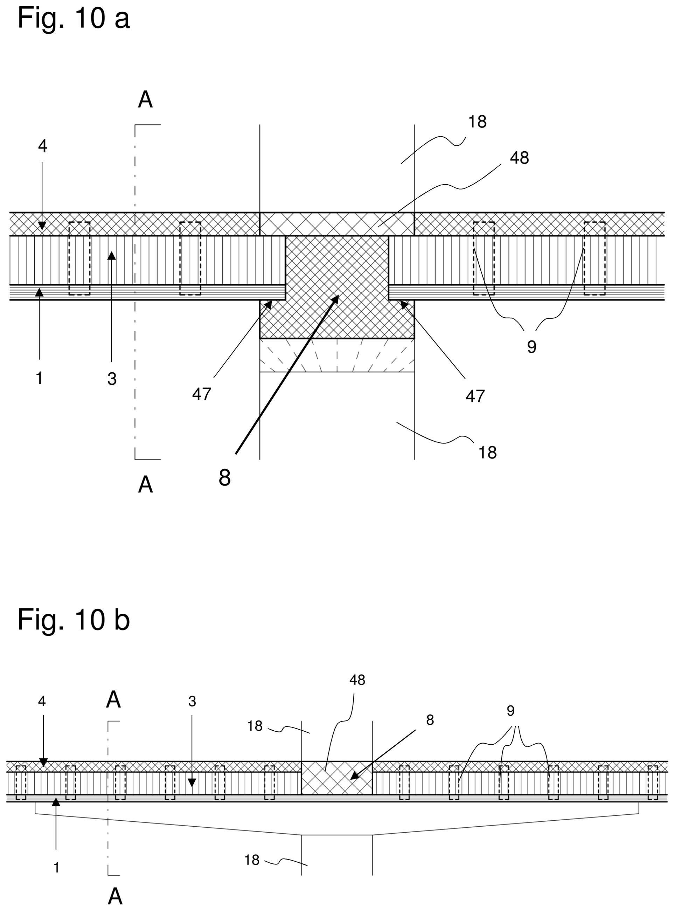

- Figur 10 a:: Einen Querschnitt analog zu Figur 9, wobei die Auskragung des internen Unterzugs als Arm eines Kapitells ausgebildet ist, der sich von der unteren Stütze aus auf beide Seiten senkrecht zur Blattebene erstreckt und dessen Neigung nach unten zur Stütze hin auf der hier sichtbaren Seite mit unterbrochenen Hilfslinien angedeutet ist;
- Figur 10 b:: Einen Schnitt durch die Tragkonfiguration gemäss der Schnittlinie A-A in Figur 10 a, mit Ansicht auf das sich hinter der Zeichenebene seiner Länge nach erstreckende Kapitell, wobei der jeweils zugehörige, oben anschliessende Teil des Unterzugs, wie er in Figur 10 a ersichtlich ist, vom in der Blattebene verlaufenden Schichtverbund der Decke verdeckt ist, und die Decke zwei weitere, intern geführte Unterzüge einschliesst, die sich von der oberen Stütze weg verlaufend auf beide Seiten senkrecht zur Blattebene erstrecken, wovon der eine Unterzug im Querschnitt ersichtlich ist;

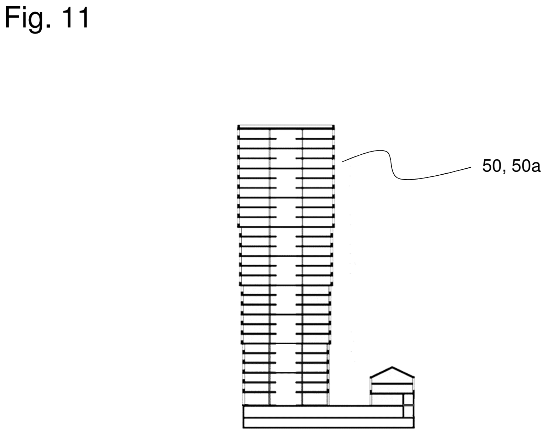

- Figur 11:: Den Aufriss einer Baute mit mindestens einer, und typischerweise einer Vielzahl eingebauter erfindungsgemässer Holz-Beton-Verbunddecken.

Für die vorliegende Offenbarung werden nachfolgend einige Begriffe definiert:
- Holz-Beton-Verbunddecke: Eine Decke, deren Tragwerk einen Bestandteil Beton (Betonelement) und einen damit schubfest verbundenen Bestandteil Holz (Holzelement) umfasst;
- Schubverbindung in einer Holz-Beton-Verbunddecke: schubfeste Verbindung, welche einen hinreichenden Widerstand gegen Abscherung des Beton-Tragelements vom Holz-Tragelement bietet.
- Schicht: Eine in flächenhafter Ausdehnung in einer gewissen Höhe über, unter oder zwischen anderem liegende, somit neben der Flächenausdehnung eine Höhe aufweisende, einheitliche (d.h. nicht von andersartiger Masse durchsetzte oder sonstwie von einem über die Ausdehnung der Schicht erfolgenden Materialwechsel betroffene) Masse;
- Holzschicht der Holz-Beton-Verbunddecke: Im Verbund der besagten Decke liegende Schicht aus Holz / flächiges Holzelement / flächenhaft ausgedehntes Holz, im Gegensatz zu Holz in Balkenform;
- Tragelemente: Diese werden neben ihrer Form durch die Art der Lastabtragung in Stab- und Flächentragwerke bzw. Stützen, Balken oder Bogen (Stabtragwerke) und Scheiben, Platten und Schalen (Flächentragwerke) unterschieden.
- Stäbe: Eindimensionale, d.h. linienförmige Elemente sind Stäbe, deren Querschnittsabmessungen für die Breite (b) und für die Höhe (h) gegenüber ihrer Länge (I) klein sind. Allgemein gilt als Abgrenzung: I ≥ 2b und I ≥ 2h;
- Stützen: Überwiegend in ihrer Achse belastete Stäbe;
- Balken: Vorwiegend senkrecht zu ihrer Achse, d.h. durch Biegung beanspruchte Stäbe;
- Decken-Unterzug: Balken, der die Last der Decke aufnimmt und an andere Bauteile ableitet;
- Tragschicht: als Schicht ausgebildetes Bestandteil des Tragwerks.

Zunächst wird anhand von Figur 1 a ein Ausschnitt zu einer konventionellen Holz-Beton-Verbunddecke mit linearen Holzbauteilen beschrieben und erläutert. Im gezeigten Beispiel folgen von unten nach oben zunächst die sichtbar in einen Innenraum der Baute ragenden, voneinander beabstandet angeordneten Holzbalken 5, dann eine permanente Betonverschalung 2 und schliesslich die Betonschicht 4. Eine Anzahl Holz-Beton-Verbindungselemente 6, hier in Form von regelmässig entlang der Holzbalken 5 schiefwinklig angeordneten, sich paarweise kreuzenden Schrauben 6, durchsetzen den Verbund. Die Verschalung 2 markiert gleichzeitig die Trennebene zwischen dem Holztragwerk und der darüber erstellten Betonschicht 4, in welche die oberen Abschnitte der Schrauben 6 eingegossen sind und eine schubfeste Verbindung mit den Holzbalken 5 erzeugen. In die Betonschicht 4 ist eine in der Figur 1 a nicht ersichtliche, minimale Bewehrung eingegossen, zur Aufnahme von Zugspannungen und zur Minimierung von Rissen im Beton. Die Holzbalken 5 sind überwiegend auf Zug beansprucht, während der Beton der Betonschicht 4 vornehmlich auf Druck belastet ist.

In Figur 1 b ist ein Ausschnitt aus einer alternativen Ausführung einer konventionellen Holz-Beton-Verbunddecke gezeigt, nämlich einer planaren Holz-Beton-Verbunddecke. Das Holztragwerk ist als flächiges Holzelement bzw. als Holzschicht 1 ausgeführt, meistens aus einem Holzwerkstoff wie Brettsperrholz, Brettschichtholz, Furnierschichtholz oder Vollholz. Im hier gezeigten Beispiel ist die Holzschicht 1 aus senkrecht hintereinander angeordneten, hochkant aneinander gestapelten Brettlagen gebildet, welche auch Brettstapel-Elemente genannt werden. Für eine leimfreie Verbindung dieser Elemente werden Hartholzdübel darrtrocken in die Elemente senkrecht zu ihrer Oberfläche eingebaut und in die jeweils anzugrenzenden Elemente passgenaue Bohrlöcher eingebracht. Nach Einschub der darrtrockenen Dübel in die Bohrlöcher des jeweils benachbarten Brettstapel-Elements, wenn die Holzdübel sich mit Feuchtigkeit anreichern, quillen sie auf und werden damit in den Bohrlöchern verpresst. In die so gebildete Holzschicht 1 sind voneinander beabstandete Nuten bzw. Kerven 7 eingelassen. Darin werden Verbindungselemente 6, hier in Form von Dübeln oder Schrauben, als Schubverbinder senkrecht zur Deckenoberfläche eingebracht. Nach Erstellen der Betonschicht 4 wirken die sodann betonverfüllten Kerven 7 mit ihren Verbindungselementen 6 als Verbundfugen. Auch in dieser Ausführung der Holz-Beton-Verbunddecke wird eine Mindestbewehrung in die Betonschicht 4 eingelegt, zum Absorbieren der Zugspannungen und Vermeidung von Rissbildung. Eine solche herkömmliche planare Holz-Beton-Verbunddecke lässt sich wohl in Einfamilienhäusern oder sonstigen Gebäuden mit geringen Deckenspannweiten und niedrigen Schutzvorgaben realisieren. Je grossflächiger die Deckenkonstruktion wird und je höher die Schutzvorgaben einer Baute sind, desto weniger lohnt sich ihr Einsatz.

Um herkömmliche Holz-Beton-Verbunddecken in Mehrparteien-Gebäuden, Hochhäusern oder sonstwie gross dimensionierten Bauten sinnvoll einsetzen zu können, sind grössere Anforderungen an ihre Tragfähigkeit gestellt, insbesondere, wenn grosse/lange Spannweiten realisiert werden sollen. Wie eingangs erläutert muss dann die Konstruktionsstärke der Decke, d.h. ihre Höhe, ausgeprägter sein, damit sie biegesteifer wird. Für eine herkömmliche Deckenstruktur wie etwa in Figur 1 b gezeigt bedeutet dies, dass die tragenden Verbundschichten höher bzw. dicker ausgeführt sein müssen, was die Decke massiver und schwerer macht. Bei einer Kostenaufteilung nach Deckenverbundpartner (Holz, Beton, Schubverbund sowie Nebenarbeiten eingerechnet) entfallen allein etwa 60% oder in Phasen hoher Rohstoff-Preise gar noch mehr allein auf den Holzanteil. Eine dickere Holzschicht 1 führt sodann zu einer deutlichen Verteuerung der Decke. Führt man stattdessen hauptsächlich oder sogar einzig die Betonschicht 4 dicker aus, so kann der Holzpartner als vergleichsweise dünne Schicht für den ihm eigentlich zugedachten Beitrag im Verbund alsbald nicht mehr aufkommen. Das Beton-Holz-Verhältnis im Verbund wird schlechter. Sodann stellt sich die Frage nach dem Nutzwert der vergleichsweise teuren Holzschicht 1 in einer Decke, die angesichts der aufzuwendenden Betonmasse auch gleich ganz aus Beton hergestellt werden könnte. Wird indessen eine klassische Betondecke verbaut, schlägt der Wegfall der Holzschicht 1 mit einem deutlich höheren Eigengewicht zu Buche. Zum Vergleich: Stahlbeton weist eine Dichte von ca. 2.5 t/m³ auf, während die von Holz und Holzwerkstoffen je nachdem 3-10 mal weniger beträgt (z.B. Fichtenholz: 0.35 t/m³). Es erweist sich folglich, dass die Erhöhung bzw. Verlängerung der Spannweite einer Decke nur unter Einsatz von wesentlich mehr Material realisierbar ist, was insgesamt - und speziell bei hohem Betoneinsatz - ins Gewicht fällt. Bei proportionaler Erhöhung der Verbundschichten einer planaren Holz-Beton-Verbunddecke geht eine 50%ige Verlängerung der Spannweite, z.B. von 6 m auf 9 m, mit einer ca. 50% bis 70%igen spannweitenbedingten Gewichtszunahme der Decke einher. Mit den nachfolgend beschriebenen Ausführungen der erfindungsgemässen Holz-Beton-Verbunddecken indessen ist eine 50%ige Verlängerung der Spannweite, z.B. von 6 m auf 9 m, bei spannweitenabhängiger Gewichtszunahme der Decke von 10% oder weniger realisierbar. Die Deckenstärke variiert dabei lediglich um ca. 5-10 cm. Typischerweise beträgt die spannweitenabhängige Gewichtszunahme bei 1.5-facher Erhöhung der Deckenspannweite, etwa von 6 m auf 9 m, nur ca. 5-7% des Deckengewichts, bei einer Variation der Deckenstärke von rund 5-7 cm. Dies ermöglicht eine für Holz-Beton-Verbunddecken bisher ungekannte Flexibilität in der Grundrissgestaltung.

In Figur 2 a ist ein Querschnitt durch den Schichtaufbau einer Ausführung der erfindungsgemässen Holz-Beton-Verbunddecke mit flächigem Holzelement dargestellt. Sie weist in dieser Ausführung als Besonderheit einen linearen Unterzug auf, der innerhalb der räumlichen Ausdehnung der Decke eingelagert ist und folglich als 'interner Unterzug' bezeichnet wird. Dabei durchsetzt er wenigstens die Betonschicht 4 und die Dämmschicht 3 und unterbricht so den Schichtaufbau 3, 4 der Decke, sodass die Verbundschichten 3, 4 räumlich an jede seitliche Flanke 16 des sich seiner Länge nach in der Figur 2 a senkrecht zur Blattebene erstreckenden Unterzugs 8 angrenzen, d.h. an denselben beidseitig anschliessen. Die Höhe H des hier aus Stahlbeton ausgeführten internen Unterzugs 8 beträgt in der vorliegenden Ausführung 280 mm und seine Breite B misst 600 mm. Diese Masse des Unterzugs 8 sind hier lediglich als Beispielmasse zu verstehen. Sie werden entsprechend der gebäudespezifischen Anforderungen gewählt, liegen aber typischerweise in den Bereichen zwischen 300 mm und 700 mm für die Breite des Unterzugs 8 und zwischen 150 mm bis 350 mm für seine Höhe. Der Unterzug 8 schliesst hier oberflächenbündig an die Betonschicht 4 an und erstreckt sich nach unten bis an das flächige Holzelement, d.h. die Holzschicht 1. In einer aus der Decke auskragenden Variante des internen Unterzugs 8, wie sie später noch vorgestellt wird, misst seine Höhe üblicherweise gar zwischen 400 und 700 mm. Je nach Bedarf werden die Unterzüge 8 in einer Decke auch mit verschiedenen Massen bzw. mit und ohne Auskragung kombiniert. Wie erwähnt, reicht der hier vorgestellte interne Unterzug 8 bis auf die Holzschicht 1 hinunter, mit welcher er kraftschlüssig verbunden ist. Vorliegend sind Verbindungselemente 6 in Form von Holzbauschrauben in die Holzschicht 1 eingebracht. Diese wurden hier rechtwinklig in die Holzschicht 1 eingedreht und damit innerhalb des Unterzugs 8 möglichst platzsparend angeordnet. Je nachdem können sie auch schiefwinklig eingeschraubt sein. Der obere, aus der Holzschicht 1 ragende Teil der Verbindungselemente bzw. Holzbauschrauben 6 ist in den Beton des internen Unterzuges 8 eingegossen, womit eine innige Verbindung zwischen dem Beton des Unterzugs 8 und der Holzschicht 1 hergestellt ist. Auch andere Holz-Beton-Verbindemittel 6 wie Steckmetalle oder Verbunddübel können mechanisch von Hand eingebracht oder eingeklebt werden, oder aber der interne Unterzug 8 kann mit der Holzschicht 1 flächig verklebt sein. In Bezug auf den Holzunterboden 1 wirkt der kraftschlüssig mit ihm verbundene interne Unterzug 8 gleichsam als Überzug.

Für die Holzschicht 1 vorteilhaft erweist sich der Einsatz von Holzwerkstoffen, etwa *cross-laminated timber (CLT),* und insbesondere auch *laminated veneer lumber (LVL).* Gegenüber faserparallelen Anordnungen von Laminatschichten führen solche mit kreuzweise verlegtem Anteil grundsätzlich zu einer erhöhten Richtungsunabhängigkeit des Laminats, folglich zu mehr Steifigkeit und Festigkeit des Laminats als Ganzes. Mitunter ermöglicht dies eine schlanke Ausführung der Holzschicht 1. Auch glas- oder carbonfaserverstärkte Varianten solcher kreuzweise geschichteten Holzwerkstoffe eignen sich für eine biegesteife Holzschicht 1. Bevorzugt wird ein *LVL* aus Buchenholz verwendet, in deutschsprachigen Fachkreisen 'BauBuche' genannt. Dank der aussergewöhnlich hohen Festigkeit und Steifigkeit kann BauBuche im Vergleich mit Nadelholzwerkstoffen zu wesentlich schlankeren Bauteilen verarbeitet werden. In einer typischen Ausführung der Decke bildet die Holzschicht 1 einen 60 mm dicken - und damit nur etwa halb so dicken - Unterboden wie in vergleichbaren planaren Holz-Beton-Verbunddecken nach dem Stand der Technik.

Im Zwischenraum zwischen Holzschicht 1 und Betonschicht 4 ist eine Dämmschicht 3 untergebracht. In einer vorteilhaften Ausführungsvariante der Erfindung ist die Dämmschicht 3 mehrlagig aus Dämmmaterialien unterschiedlicher Dichte bzw. unterschiedlichen spezifischen Gewichts ausgeführt, mit der Schicht grösster Dichte unten auf der Holzschicht 1 aufliegend. Darauf wird später noch eingegangen. Infolge der Beabstandung der Betonoberdecke vom Holzunterboden 1 wird eine statische Höhe geschaffen, die einen grossen Biegewiderstand aufbringt. Im vorliegenden Beispiel beträgt diese Beabstandung bzw. die Höhe des Zwischenraums 170 mm und wird auch in anderen Ausführungen der Decke üblicherweise zwischen 100 und 250 mm, bevorzugt zwischen 120 mm und 190 mm hoch ausgeführt sein. Zwischen der Holzschicht 1 und der Betonschicht 4 sind in dieser Ausführung senkrecht dazu stehende Schubverbinder 9 in Form von Stahlrohren eingebaut. Durch diesen Raster von Stahlrohr-Kopplungen sind die tragende Beton- und Holzschicht 1, 4 schubfest miteinander verbunden. Auch Vier- oder Mehrkantrohre oder Walzprofile lassen sich hierfür einsetzen, solange sie als zuverlässige Abstandhalter die Schubkräfte aufnehmen bzw. Schubbewegungen zwischen den Verbundschichten 1, 4 wirksam verhindern. Je nach Deckenkonfektion liegen die Masse der genannten Schubverbinder 9 üblicherweise zwischen 200 mm und 350 mm in ihrer Länge/Höhe und zwischen 50 mm bis 150 mm im Durchmesser bzw. über ihre Diagonale. Oben ragen die Schubverbinder 9 ein stückweit in die Betonschicht 4 hinein, in welche sie einbetoniert sind. Unten ragen sie ein stückweit in die Holzschicht 1 hinein. Hierzu werden die Schubverbinder 9 jeweils direkt in eine ausgefräste Ausnehmung 30 in der Holzschicht 1 gesteckt, eingeklebt oder eingemörtelt. Alternativ können sie auch mittelbar eingesetzt sein, etwa indem sie je in eine Stahlfassung verschweisst werden, wobei dann die Stahlfassung in eine Ausnehmung 30 in der Holzschicht 1 eingeklebt oder eingemörtelt wird. In einer umweltschonenden, weil mörtel- und klebefreien Variante, wird für jedes einzusetzende Stahlrohr 9 ein Innengewinde in die Holzschicht 1 gefräst, um hernach ein Stahlrohr 9 mit endseitigem Aussengewinde einzuschrauben. Abhängig von der Deckenspannweite und ihren Nutzlasten werden üblicherweise zwischen drei und sechs Stahlrohre pro m² dem Schubfluss entsprechend verteilt verbaut.

Geg**e**n oben schliesst die Decke mit der bewehrten Betonoberdecke aus Betonschicht 4 und oberem Abschnitt des internen Unterzugs 8 ab. Die Armierung 15 der Betonschicht 4 wird mit einem Muffenstoss 14 über eine Anschlussbewehrung 12 in den Bereich des internen Unterzugs 8 hinein verlängert. Für die Anschlussbewehrung 12 werden hier abgebogene Bewehrungsstäbe verwendet. Schematisch dargestellt sind ausserdem eine Zugbewehrung 10 und Druckbewehrung 11 sowie eine Bügelbewehrung 13 im internen Unterzug 8 als typische Unterzugsbewehrung 42. Oberhalb der Betonoberdecke schliesst üblicherweise ein Estrich/Unterlagsboden 23 an, von einer Trittschalldämmung 22 unterlegt. Optional folgt oben auf dem Estrich 23 ein Fussbodenbelag. Eine solchermassen aufgebaute Decke einschliesslich darüberliegender Bodenbeläge ist mit einer Gesamtstärke von zwischen 350 mm und 450 mm realisierbar. Damit ist sie schlanker/dünner ausgeführt als herkömmliche planare Holz-Beton-Verbunddecken gleicher Tragfähigkeit, bei denen sowohl die Beton- als auch die Holzschicht wesentlich stärker/dicker ausgeführt sein muss. Für den Geschossbau, insbesondere den Hochhausbau, wirkt sich solches entscheidend auf die Ausnutzung der Baute aus. Bei einer vorgegebenen Gebäudehöhe von zum Beispiel 80 Metern lassen sich mit der erfindungsgemässen Decke ohne weiteres ein bis zwei Stockwerke mehr realisieren als mit herkömmlichen Holz-Beton-Verbunddecken.

In Figur 2 b ist ein Querschnitt durch den Schichtaufbau der erfindungsgemässen Holz-Beton-Verbunddecke mit alternativer Ausführung des internen Unterzugs 8 gezeigt. Dieser ist vorliegend mit einem Stahlträger 20 in abgeänderter H-Profil-Form ausgeführt und erstreckt sich seiner Länge nach beidseits senkrecht zur Blattebene der Figur 2 b. Der obere Flansch 21a des Profils 20 hat im Vergleich zum unteren Flansch 21b bewusst kürzere Flügel, damit sich die Holzbauschrauben 6 bei der Montage des Unterzugs 8 in situ in die Holzschicht 1 einschrauben lassen und der Zugang hierfür frei liegt. Auch andere Profilformen sind möglich, etwa umgekehrte T-Träger, L-Träger, etc., die mit ihrem Flansch 21b auf der Holzschicht 1 aufgelagert sind und mit ihr verschraubt oder verleimt werden können. Mit einem zusätzlichen oberen Flansch 21a aber lässt sich eine höhere Steifigkeit erreichen. Im Fall geklebter Stahlträger 20 lassen sich auch querachsensymmetrische Formen wie z.B. ein symmetrisches H-Profil einbauen. In der gezeigten Ausführung enthält der interne Unterzug 8 als Bewehrung einerseits konventionelle Armierungsstähle, was in der Figur 2 b mit der Anschlussbewehrung 12 angedeutet ist, und andererseits den Stahlprofilträger 20. Der Raum um den Stahlträger 20 herum ist mit Dämmmaterial verfüllt. Der obere Abschnitt des internen Unterzugs 8 mit der Anschlussbewehrung 12 wird mit Ortbeton ausgegossen, sodass sich eine durchgehende Betonoberdecke bildet. Offensichtlich schliesst der interne Unterzug 8 auch in dieser Ausführung mit jeder seitlichen Flanke 16, der seitlichen Stahlprofil-Oberfläche und der seitlichen Betonoberfläche, an die Beton- 4 und Dämmschicht 3 der Decke an und unterbricht also ihren Schichtaufbau 3, 4. Für die bevorzugten Masse von Breite B und Höhe H dieses Unterzugs 8 gilt das oben Gesagte. In den Schichtverbund einer Decke können selbstverständlich auch Kombination von internen Stahlbeton- und Stahlprofil-Unterzügen 8 eingelagert sein.

Das Konzept der innerhalb der Decke eingelagerten, ihren Schichtaufbau unterbrechenden Unterzüge 8 bietet eine platzoptimierte und zugleich hocheffiziente Biegeverstärkung. Unter bestmöglicher Nutzung des Zwischenraums, welcher die Decke statisch erhöht, wird diese mit minimalem Gewichtseintrag biegeversteift. Das den Zwischenraum beanspruchende Dämmmaterial ist vergleichsweise leicht, während ein oder mehrere interne Unterzüge 8, bedarfsweise stark bewehrt, an der Stelle eingesetzt werden, an der die Verstärkung am effektivsten wirkt. Der oder die internen Unterzüge 8 verlaufen als gleichsam hoch effektive 'Verstärkungsrippen' durch die Decke, ungeachtet von raumarchitektonischen Eigenheiten, auf die bei der Anordnung von konventionellen Unterzügen Rücksicht zu nehmen wäre. Dank der sehr gezielten Verstärkung kann mit vergleichsweise geringem Einsatz von Stahl und Beton die Steifigkeit und Tragfähigkeit der Decke entscheidend erhöht werden. Der Gewichtsanteil einer optimierten erfindungsgemässen Holz-Beton-Verbunddecke, welcher auf den oder die internen Unterzüge 8 entfällt, beträgt nur gerade ca. 10% des Deckengewichts oder noch weniger. Die Gewichtseinsparung gegenüber einer vergleichbaren Betondecke beträgt mit der erfindungsgemässen Decke rund 30%, was erheblich ist. Eine 50%ige Verlängerung der Spannweite der erfindungsgemässen Holz-Beton-Verbunddecke kann bis zu einer Gesamtlänge von 9 m ohne weiteres mit oder auch unter einer 10%igen, gar mit einer 5-7%igen spannweitenabhängigen Gewichtszunahme der Decke realisiert werden.

Weil sich mit dieser Deckenkonstruktion im Vergleich zu planaren Holz-Beton-Verbunddecken nach dem Stand der Technik grössere Spannmasse bei verhältnismässig wesentlich geringerem Eigengewicht realisieren lassen, eröffnet dies Möglichkeiten für eine vermehrt raumübergreifende bis geschossüberspannende Deckenkonzeptionierung. Konkret lassen sich bei einer solchen Deckenplanung raumdurchsetzende tragende Bauteile einsparen, vornehmlich tragende Wände, welche die Geometrie eines Grundrisses dauerhaft festlegen. Damit bietet das erfindungsgemässe Deckensystem ein grosses Umnutzungspotential für eine Baute, womit sie den immer schneller verändernden Nutzungsbedürfnissen Rechnung trägt. Abgesehen von der Wirtschaftlichkeit wirkt es sich sehr positiv auf die Nachhaltigkeitsbilanz einer Baute aus, wenn sie auf der Zeitachse ohne grossen Umbau vielfältig genutzt werden kann.

Es versteht sich, dass die Vorteile, die mit diesem Deckensystem geboten werden, bei gross dimensionierten Bauten umso mehr an Bedeutung gewinnen. Doch gerade in grossen Gebäuden mit verschiedenen Gebäudeteilen und/oder zahlreichen separaten Nutzungseinheiten, typischerweise zu Wohn- oder Bürozwecken, sah man - abgesehen von statischen Problemen - bisher aus einem weiteren Grund davon ab, derlei Einheiten überspannende Holz-Beton-Verbunddecken mit flächigem Holzelement einzubauen. Dies liegt am Schallschutz, an den bei nicht-industrieller Nutzung einer Baute regelmässig hohe Anforderungen gestellt werden. Grundsätzlich gilt: Je gehobener der Standard eines Wohnungsbaus ist, desto höher sind auch die Schallschutzanforderungen.

Leichte Bauteile werden eher zu Schwingungen angeregt und übertragen den Schall folglich besser als schwere. Planare Holz-Beton-Verbunddecken mit einer leichten und damit gut schallleitenden, zum Rauminnern hin exponierten Holzschicht 1 haben somit eine schwierige Ausgangslage. Deshalb ist bei herkömmlichen Holz-Beton-Verbunddecken die Betonschicht 4 oftmals dicker ausgeführt als es statisch tatsächlich nötig wäre. Für die erfindungsgemässe Decke bedeutet der Schallschutz eine noch grössere Herausforderung, weil die Decke dieselbe statische Aufgabenstellung mit noch geringerem Eigengewicht erfüllt, und weil die vergleichsweise leichte Holzschicht 1 auch noch von der Betonschicht 4 beabstandet ist und somit quasi unabhängig schwingen kann.

In einer Ausführung der erfindungsgemässen Decke wird dieser Problematik begegnet, indem die Zwischenschicht 3 mindestens zweilagig, d.h. mehrlagig, mit unterschiedlichen Dämmmaterialien, verfüllt ist. Hierzu weist die Dämmschicht 3 eine untere Lage 3a mit vergleichsweise schwerem bzw. dichtem Dämmmaterial auf. Damit lässt sich konzentriert zusätzliche Masse auf und über der Holzschicht 1 einbringen, um sie zu beschweren und damit ausreichend schwingungsträge zu machen. Der restliche Raum der Zwischenschicht indessen wird mit einem leichten bzw. weniger dichten Dämmmaterial verfüllt. Das Mengenverhältnis dieser Dämmmaterialien lässt sich an die jeweiligen Schallschutzvorschriften anpassen, sodass auch sehr hohe Anforderungen, wie sie z.B. für einen gehobenen Wohnungsbau-Standard und in Einfamilienhäusern typisch sind, erfüllt werden können. Damit lassen sich Raum- und Nutzeinheitenübergreifende Decken realisieren, wohingegen man herkömmliche Holz-Beton-Verbunddecken oberhalb von Trennwänden von Wohnungen oder Büro- und sonstigen separaten Nutzeinheiten oder Gebäudeteilen durchtrennen muss, um den Schalldurchgang zu verhindern.

Deshalb ist in einer bevorzugten Variante der erfindungsgemässen Decke eine Verwendung eines vergleichsweise dichten bzw. schweren Dämmmaterials in Zusammenwirkung mit einem weniger dichten bzw. leichten Dämmmaterial vorgesehen. Hierfür wird die durch einen Zwischenraum von der Betonoberdecke beabstandete Holzschicht 1 zum Zwecke geringer Schwingungsanfälligkeit der Decke gezielt belastet.

Die Figur 3 zeigt eine Ausführung der erfindungsgemässen Holz-Beton-Verbunddecke in einem Querschnitt durch ihren Schichtaufbau. Von unten nach oben erkennt man zunächst die Holzschicht 1, dann eine sie direkt beschwerende Dämmschicht 3a aus einem vergleichsweise dichten/schweren Dämmmaterial. Damit lässt sich die Holzschicht 1 konzentriert belasten. In einer bevorzugten Ausführung wird für die untere Dämmschicht 3a ein Dämmmaterial solcher Dichte bzw. spezifischen Gewichts gewählt, dass dieses für die schallspezifische Decken- bzw. Holzschicht-Beschwerung nur einen Anteil von maximal der Hälfte des Zwischenraums beansprucht, und vorteilhaft auch weniger als die Hälfte des Zwischenraums, etwa nur einen Bruchteil, wie man es hier der Figur 3 entnehmen kann. Auf die untere Dämmlage 3a folgt oben eine Dämmlage 3b aus einem weniger dichten bzw. leichten Dämmmaterial, welches schliesslich von der Betonschicht 4 überdeckt wird. Im Fall von mehr als zwei Lagen werden dieselben mit jeweils abnehmendem Gewicht von unten nach oben angeordnet, weil es primär die Holzschicht 1 ist, die damit beschwert werden soll. Im Falle von mehr als zwei Lagen wird die Dichte bzw. das spezifische Gewicht ihrer Dämmmaterialien in Richtung der Holzschicht 1 jeweils zunehmen. Dies soll eine gezielte Belastung der Holzschicht 1 herbeiführen, um sie ausreichend schwingungsträge zu machen. Damit schliesslich lassen sich höhere Schallschutzanforderungen bei einem vergleichsweise leichteren Gesamtgewicht der Decke erfüllen als dies mit einem undifferenzierten Gewichtseintrag im Zwischenraum der Fall wäre.

Als Dämmmaterial eignet sich vornehmlich ein Schüttgut. Für die untere Lage 3a empfiehlt sich z.B. Betongranulat aus Betonbruch oder ein Mischgranulat aus Beton- und Mauerwerksbruch. Solches Granulat lässt sich zu 100% aus wiederverwerteter Bausubstanz herstellen, weshalb es als Recycling-Betongranulat oder Recycling-Mischgranulat bezeichnet wird. Auch Füll- oder Magerbeton, vorzugsweise aus solchem Granulat, kommt als Dämmmaterial für die schallschutzspezifische Beschwerung der Holzschicht 1 in Frage. Für das Dämmmaterial der oberen Dämmlage 3b erweist sich ein Leichtbaustoff als geeignet, etwa in Form eines Schüttmaterials wie z.B. Schaumglasschotter, der aus reinem Altglas hergestellt wird. Recyceltes Baumaterial geht zu einem höchstens vernachlässigbaren Anteil in die Ökobilanz einer Baute ein, weshalb solches Dämmmaterial sehr zu bevorzugen ist.

Des Weiteren kann auch Luft als leichtestes Dämmmaterial überhaupt für die oberste Lage 3a der mindestens zweilagigen Dämmschicht 3 sinnvoll eingesetzt werden. Die über einem so gebildeten Hohlraum 3b zu liegen kommende Betonschicht 4 muss dann auf einer permanenten Betonverschalung 2 gegen unten abgestützt sein.

Mit Vorteil weisen die Dämmmaterialien der mindestens zweilagigen Dämmschicht 3 sehr unterschiedliche Materialdichten auf. Dadurch erfolgt die Beschwerung der Holzschicht 1 umso konzentrierter und also gezielter, während der restliche Zwischenraum nicht sonderlich ins Gewicht fällt. Mit Wahl einer auf der Holzoberseite anliegenden, vergleichsweise schweren Dämmlage aus Recycling-Betongranulat [Dichte: ca. 1.3 bis 2.0 t/m³] und darüber einer wesentlich leichteren Dämmlage aus Schaumglasschotter [Dichte: ca. 0.2 bis 0.3 t/m³] spart die erfindungsgemässe Decke bei Sicherstellung der Schallschutzanforderungen entscheidend Eigengewicht pro Deckenfläche ein. Der Unterschied in den Dichten bzw. spezifischen Gewichten der beiden gewählten Dämmmaterialien beträgt vorzugsweise ca. 0.5 bis 2 t/m³. Die Lagen 3a, 3b der Dämmung werden dann in einem entsprechenden Platzverhältnis im Zwischenraum 3 eingebracht, mit der schweren Schicht 3a unten. Sehr gute Werte für die akustische Trennung von Raumeinheiten und Stockwerken ergeben sich bei einem Auflagedruck des schweren Dämmmaterials von zwischen ca. 0.7 und 1.4 kN pro m² Deckenfläche und von zwischen ca. 0.1 und 0.4 kN pro m² Deckenfläche für das leichte Dämmmaterial. Ein Auflagedruck von ca. 0.9 kN pro m² Deckenfläche für das schwere und von ca. 0.25 kN pro m² Deckenfläche für das leichte Dämmmaterial bietet je nach den spezifischen Gegebenheiten ein gutes Deckengewicht-Akustik-Verhältnis. In jedem Fall wirkt sich der von der mehrlagigen Dämmschicht 3 ausgefüllte Raum so auf die Gewichtsbilanz der Decke aus, dass sie die Aufgabe einer erhöhten Spannweite immer noch unter minimaler Gewichtszunahme erfüllen kann und dabei hohe Schalldämmwerte erreicht. Mit ihrer schallschutzspezifischen Beschwerung kann sie individuell die jeweiligen Vorgaben an das Schalldämmmass erfüllen.

Wie in Figur 3 dargestellt, folgen im Endausbau oben auf die Betonoberdecke typischerweise eine oder mehrere Trittschall-Dämmplatten 22, der Unterlagsboden 23, und gegebenenfalls ein Bodenbelag. Der gezeigte Ausschnitt weist hier keinen internen Unterzug 8 auf. Es versteht sich, dass ein solcher oder mehrere solche Unterzüge 8 in derselben Weise im Höhenabschnitt neben der Dämmung Platz finden, wie dies in den vorangehenden Figuren 2 a und 2 b dargestellt wurde. Die Dämmschicht 3 wird dann vorteilhaft einzig vom einem oder den mehreren allfälligen internen Unterzügen 8 strukturell unterbrochen, abgesehen von anschlussbedingten Unterbrüchen in der Dämmschicht 3, wie sie später noch erklärt werden. Diese Art der Deckenbeschwerung mit mehrlagigen Dämmschichten 3a, 3b gelangt dort zur Anwendung, wo die akustische Trennung es gebietet. Jedenfalls kann die erfindungsgemässe Decke in einer schallschutzoptimierten Variante mit mindestens zweilagiger Dämmschicht 3 auch ohne interne Unterzugs-Anordnung auskommen. In diesem Fall erstrecken sich die Dämmschichten 3a, 3b über das ganze Spannmass der Verbunddecke, ohne von Tragstrukturen unterbrochen zu sein. Eine solche Ausführung der erfindungsgemässen Decke kommt zur Anwendung, wenn allein durch die schubfest gesicherte Beabstandung der Holzschicht 1 von der Betonschicht 4 eine ausreichende Biegesteifigkeit der Decke gewährleistet ist. Auf die Herstellung einer solchen Decke mit mindestens zweilagiger Dämmschicht 3 wird später noch eingegangen werden.

Ein weiterer Schlüssel zur Erhöhung der Steifigkeit und Tragfähigkeit einer Holz-Beton-Verbunddecke besteht in der Verbindung von sich zu einem flächigen Holzelement 1 zusammenfügenden Holzplatten. Während die Betonoberdecke mit ihrer Bewehrung 15 stets zweiachsig tragend ausgeführt ist, trägt die Holzschicht 1 der Decke - zumindest nach dem Stand der Technik - als Ganzes nur in einer Richtung. Zwar sind die in Holz-Beton-Verbunddecken eingesetzten Holzwerkstoffe üblicherweise wenigstens anteilsmässig kreuzweise geschichtet. Holzplatten aus solchermassen geschichteten Holzwerkstoffen können somit zweiachsig tragen. In der Praxis allerdings ist die Holzschicht 1 einer Decke mit üblichen Spannweiten meistens nicht als einzelne durchgehend furnierte Platte herstellbar. Diese Holzschicht 1 setzt sich dann vielmehr aus mehreren Holzplatten zusammen, wobei jedes Deckenelement einfachheitshalber aus einer einzelnen furnierten Holzplatte und der darüber befindlichen Betonoberdecke 4 bzw. den Verbundschichten 3, 4 besteht. Damit nun aber eine grossflächige Holzschicht 1, gebildet durch eine Vielzahl anschliessender Deckenelement-Holzplatten, durchgehend zweiachsig tragen kann, bedarf es einer zugkraftschlüssigen Verbindung der einzelnen Holzplatten. Deshalb sieht die erfindungsgemässe Holz-Beton-Verbunddecke in einer Ausführung eine innige Verspannung von für sich genommen zweiachsig tragenden Holzplatten vor. Damit lässt sich insgesamt eine sehr hohe Tragfähigkeit der Decke ohne zusätzliches Gewicht erreichen, zumal das Gewicht der Verbindungselemente bzw. Spannmittel vernachlässigbar ist.

In einer bevorzugten Ausführung der Holz-Beton-Verbunddecke schliesst diese mindestens zwei auf Stoss verlegte Holzplatten ein, welche mit den nachfolgend vorgestellten Verbindungssystemen zugkraftschlüssig gegeneinander verspannt werden. Hierzu wird in den Holzplatten unter Intaktlassens ihrer Unterseiten oberhalb derselben je mindestens eine Ausnehmung 24 so eingeschnitten oder ausgefräst, dass sie erstens wenigstens einen kastenartigen Raum für das Unterbringen eines Spannmittels 26a, 26b, 26c ausformt und zweitens in Stosslage der Platten diese Ausnehmungen 24 eine die Holzplatten übergreifende, durchgehende Ausnehmung 25 bzw. einen Durchgang bilden. Hinter ihrem hintersten kastenartigen Raum 24 sind die Holzplatten jeweils intakt, d.h. sie werden hierfür nicht angebohrt, angeschraubt, etc. und bilden dort anderweitig nutzbares hinteres Intaktmaterial 29. Dies schafft günstige Platzverhältnisse in der Holzschicht 1. Vor allem beim Anbringen von Schubverbindemitteln 6, seien es Stahlrohre, Klebstoff oder sonstwie in Nuten oder Kerven 7 der Holzschicht 1 eingebrachte Holz-Beton-Verbindungselemente 6, erweist es sich als vorteilhaft, die Holzschicht 1 hierfür möglichst umfangreich intakt nutzen zu können. Auch die Stirnseite 28b des hinteren Intaktmaterials 29 der Holzplatte kann in jedem Fall frei von Verankerungen für das Spannmittel 26a, 26b, 26c bleiben, z.B. auch von Klebstoffen. Das Spannmittel 26a, 26b, 26c des Verbindungssystems indessen wird in den von den Ausnehmungen 24 in Stosslage gebildeten Durchgang eingebracht und montiert. Endseitig ist das Spannmittel 26a, 26b, 26c jeweils im hintersten kastenartigen Raum 24, 24a der Holzplatte verankert, sodass, wenn das Spannmittel 26a, 26b, 26c unter Zugspannung gesetzt wird, die mit ihm verankerten Holzplatten gegeneinander gezogen und so miteinander verspannt werden. Über eine aus mindestens zwei derart miteinander verspannten Holzplatten gebildete Verbindung lassen sich Zugkräfte effektiv durchleiten. Damit ist die zweiachsige Tragfähigkeit der so zu einem durchgehenden flächigen Holzelement 1 verbundenen Holzplatten erstellt. Typischerweise sind in den Holzplatten entlang der Stossachse mehrere solche Ausnehmungen 24 in regelmässigen Abständen angeordnet.

Die Holzplatten weisen mit Vorteil identisch dimensionierte und angeordnete Ausnehmungen 24 auf. Dann nämlich lassen sich Holzplatten mit jeweils gleichen Ausnehmungen 24 an derselben Stelle vorfertigen, sodass bei der Erstellung einer Verbindung generell nicht auf eine bestimmte Seite zu achten ist. Somit kann jede vorgefertigte Holzplatte für die Verbindung diesseits oder jenseits der Stossachse liegen. Dabei kann eine Ausnehmung 24 auch aus mehreren kleineren kastenartigen Räumen 24a, 24c und ihren durchgehenden Verbindungen 24b gebildet sein, wie dies später noch vorgestellt wird. In einer bevorzugten Variante des Verbindungssystems brauchen die Spannmittel 26a, 26b, 26c bloss lose in die Ausnehmungen 24 eingelegt zu werden. Für die Verspannung braucht das Spannmittel 26a, 26b, 26c dann mit den Holzplatten weder verschraubt, verdübelt, verleimt, oder sonstwie unter Eingriff am Holz festgemacht zu werden. Vielmehr können die Holzplatten bis auf die Ausnehmungen 24, welche für das Verspannen erforderlich sind, intakt belassen werden. Diese Variante ist deshalb besonders einfach, schnell zu realisieren und vor allem ausgesprochen montagefreundlich. Bei Fehlern beim Montieren des Spannmittels 26a, 26b, 26c kann das Holz nicht unwiederbringlich beschädigt werden. In einer weiter bevorzugten Ausführung fügen sich die Bauteile 26a, 26b, 26c des Spannmittels zu einer symmetrischen Anordnung zusammen, was das Verbindungssystem noch weiter vereinfacht.

Wie der Formschluss der Holzplatten in der Stosslage im Einzelnen gebildet wird, ist dagegen unerheblich. In einer Nut-Feder-Ausführung ist eine Stirnseite der Holzplatte vorteilhaft mit einer spitzwinklig bis stumpfwinklig zulaufenden Feder und die Stirnseite der anderen Holzplatte mit einer sich in die Tiefe entsprechend verengenden Nut versehen, sodass sich die Holzplatten gut aneinander schieben lassen und dann passgenau zueinander ausgerichtet sind. Andernfalls können die Stirnseiten der zu verspannenden Holzplatten auch eben ausgeführt sein und sich zu einem Stumpfstoss zusammenfügen. Sämtliche der hier vorgestellten Ausführungen des Verbindungssystems lassen sich an Holz-Beton-Verbunddecken mit flächigem Holzelement 1 mit oder ohne Dämmschicht 3 realisieren, somit auch an Holz-Beton-Verbunddecken nach dem Stand der Technik.

Eine spezifische Ausführung mit einer symmetrischen VerspannungsAnordnung wird anhand des Holzplatten-Längsschnitts gemäss den Figuren 4 a bis 4 c erläutert. Zunächst ist in Figur 4 a eine einzelne Holzplatte mit bereits eingesetztem Anker zu sehen. Die Holzplatte weist eine besondere Ausnehmung 24 auf. Sie besteht aus einem hinteren und vorderen kastenförmigen Raum bzw. Kammer 24a, 24c sowie einem Hohlkanal 24b, der diese Kammern 24a, 24c verbindet. Hinter der hintersten Kammer 24a ist die Holzplatte intakt und wird dort als hinteres Intaktmaterial 29 bezeichnet, während der Hohlkanal 24b im vorderen Intaktmaterial 27 verläuft, welches bis auf diesen Hohlkanal 24b intakt ist. Beide Kammern 24a, 24c sind gegen oben offen und die vordere Kammer 24c ist zusätzlich stirnseitig offen. Damit lässt sich die Verankerung bequem installieren: In die hintere Kammer 24a wird ein Schraubenkopf 26a lose eingelegt und mit einer Gewindestange 26b verschraubt, welche durch den Hohlkanal 24b in die hintere Kammer 24a geführt wurde. Aufgrund der Dimensionierung passt der Schraubenkopf 26a nicht in den Hohlkanal 24b. Er lässt sich somit maximal bis an die hintere Stirnseite 28a des vorderen Intaktmaterials 27 bewegen und schlägt an derselben an, wodurch er als Spannklotz 26a wirkt.

In der Figur 4 b sind zwei solche Holzplatten formschlüssig aneinandergeschoben, wie anhand der unterbrochenen Trennlinie dargestellt. Die Stossachse verläuft in der Blattebene. Weil die vorderen Kammern 24c je stirnseitig offen sind, bilden sie in Stosslage eine gemeinsame, gegen oben offene Kammer 25. Durch diese gemeinsame Kammer 25 sind schliesslich alle Kammern 24a, 24c plattenübergreifend bzw. durchgehend verbunden. In die gemeinsame Kammer 25 wird ein Spannmittel lose eingeführt, im gezeigten Beispiel eine Muffe 26c. Weil der Schraubenkopf 26a in der hinteren Kammer 24a Spiel hat, kann er so weit nach hinten geschoben werden, dass vorne in der gemeinsamen Kammer 25 Platz geschaffen ist, um die aus dem Hohlkanal 24b austretenden Gewindestangen 26b ein stückweit in die Muffe 26c einzuschrauben. Dabei sind die Gewinde der beiden Gewindestangen 26b gegenläufig ausgeführt. Die Muffe 26c, in die sie eingedreht werden, weist deshalb ein links- sowie auf ihrer gegenüberliegenden Seite ein rechtsläufiges Innengewinde auf. Wird die Muffe 26c dann ortsfest gedreht, zieht dies die Gewindestangen 26b auf beiden Seiten gleichförmig zusammen, bis die Schraubenköpfe 26a in den hinteren Kammern 24a an den hinteren Stirnseiten 28a des vorderen Intaktmaterials 27 anschlagen.

Mit weiterer ortsfester Verdrehung der Muffe 26c wird eine kräftige Verspannung der beiden Holzplatten erreicht, wie dies in Figur 4 c dargestellt ist. Die Schraubenköpfe 26a werden je gegen die hinteren Stirnseiten 28a des vorderen Intaktmaterials 27 gedrückt und wirken somit als Spannklötze. Offensichtlich lässt sich dieses Spannsystem 26a, 26b, 26c seitenunabhängig einsetzen. Mit Vorteil werden die Gewindestangen 26b samt den Schraubenköpfen 26a im Werk verlegt, wie in Figur 4 a gezeigt, und müssen dann auf der Baustelle nur noch mit der Muffe 26c zusammengezogen werden. An die Stelle einer Muffe 26c mit zwei gegenläufigen Gewinden kann eine Holländer-Verschraubung treten, wobei die Gewindestäbe hierfür gleiche Gewinde-Drehrichtungen aufweisen. Das mechanisch kontrahierbare Verbindungssystem funktioniert auch mit einer Hülsen-Nippel-Verbindung. Statt der Muffe 26c ist es dann ein Nippel mit gegenläufigen Gewinden, der für die Verspannung in stationärer Lage in der gemeinsamen Kammer 25 gedreht wird und so zwei Hülsen mit entsprechenden Innengewinden zusammenzieht, anstelle der Gewindestangen 26b. Alle Varianten dieser Gewindeverbindungen bilden mit ihren Bauteilen 26a, 26b, 26c eine zur Trennebene der Holzplatten symmetrische Ausführung (wofür die Drehrichtungen der Gewinde nicht mitberücksichtigt werden). Dabei muss das Spannmittel auch nicht mit einer Holzplatte fest verbunden bzw. daran festgemacht werden, etwa durch Verschrauben, Verdübeln oder Verleimen, etc. der Ankermittel 26a. Entsprechend können die Holzplatten einfach und effizient miteinander verspannt werden. Sie sind hierfür identisch vorgefertigt und für den Einbau des Verbindungssystems ohne weiteres vertauschbar.

Als Spannmittel 26a, 26b, 26c eignet sich auch ein Spannverschluss mit Spannhebel 26c, wie in Figur 4 d gezeigt. Dabei wird jede Holzplatte so ausgeschnitten, dass sie einen oben offenen und stirnseitig teilweise offenen, kastenartigen Raum als einzige Ausnehmung 24 aufweist, wobei das vordere Intaktmaterial 27 bis zur Trennebene reicht. Hinter diesen Ausnehmungen 24 sind die Holzplatten unversehrt, wie es am hinteren Intaktmaterial 29 in der Figur 4 d erkennbar ist. Die Ausnehmungen 24 können identisch ausgeführt sein, was Fehler bei der Vorfertigung der Holzplatten vermeidet. In Stosslage der Holzplatten ist wiederum ein die beiden frontal zu verspannenden Holzplatten übergreifender Durchgang in Form einer gemeinsamen Ausnehmung 25 gebildet, über welche die Wirkverbindung erstellt wird. Hierzu werden in den Kammern 24 Spannklötze 26a mit daran befestigtem Spannhebel/Spannhaken lose eingelegt. Der hier am rechten Spannklotz 26a angelenkte Spannarm 26b wird um den Spannhaken des ihm gegenüberliegenden linken Spannklotzes 26a gelegt, womit das Spannmittel beidseits in den Kammern 24 verankert ist, somit ohne dass die Anker mit den Holzplatten fest verbunden werden müssen. Durch Abschwenken des Spannhebels 26c wird der Spannarm 26b nach rechts gezogen, was die Spannklötze 26a gegen das vordere Intaktmaterial 27 drückt und die Holzplatten satt gegeneinander verspannt. Wenngleich der Spannverschluss hier nicht symmetrisch ausgeführt ist, lässt er sich seitenunabhängig einsetzen. Selbstverständlich kann auch ein doppelseitiger, symmetrisch zur Trennebene ausgeführter Spannhebel-Verschluss verwendet werden. Auch kann an die Stelle eines Spannhebels mit Spannarm eine Gewindeausführung mit beidseitig angelenkten Haken oder Griffen treten, welche an den beiden Spannklötzen 26a angreifen, etwa um einen dort angeformten Nocken, Bolzen, o. ä. zu ergreifen. Als Beispiel hierfür ist eine Zugspindel mit Gewindestäben 26b und darauf laufender Sechskant-Muffe 26c in Figur 4 e gezeigt.

Es versteht sich, dass die vorliegenden Figuren nur schematische Darstellungen sind. Im Realfall wird das vordere Intaktmaterial 27, an das die Verankerungen 26a unmittelbar mit Druck anschlagen, sehr viel länger bzw. tiefer ausgeführt sein, z.B. 0.2 bis 0.5 m lang oder mehr, und somit weit länger dimensioniert sein als die Spannklötze 26a. Damit greift das kontrahierende Verbindungssystem über einen langen bzw. tiefen Bereich der Holzplatten an und hält einer starker Verspannung stand. Je nach Länge bzw. Gelenkigkeit des Spannarms 26b kann dieser auch durch einen Hohlkanal 24b hindurch geführt werden, der durch das vordere Intaktmaterial 27 gebohrt ist, um am Spannklotz 26a der auf Stoss anschliessenden Nachbarplatte anzugreifen. Einen solchen Hohlkanal 24b zeigt die Figur 4 f im Bild rechts aussen, bei welcher man auf das vordere Intaktmaterial 27 in Richtung der Stossachse zur Trennebene der Holzplatten hin blickt. Im Fall eines symmetrischen Spannverschlusses wie etwa einer Zugspindel muss aber wenigstens an der Stelle der Kraftübertragung bzw. an der Stelle ihrer Muffe 26c der Durchgang offen, d.h. für die Verspannung zugänglich sein. Hierzu eignen sich die Ausführungen mit U-förmigem oder rechteckigem Ausschnitt im vorderen Intaktmaterial 27 oder auch Ausnehmungen 24, wie sie in den Figuren 4 a bis 4 c schematisch gezeigt wurden.

In einer alternativen Ausführung des Spannverschlusses werden die Spannklötze 26a je mit einer Holzplatte fest verbunden, etwa geklebt oder wie im Beispiel nach Figur 4 g verschraubt. Je nach Ausführung wird die Verankerung nur am Boden und/oder den Seitenwänden des kastenartigen Raums bzw. der Ausnehmung 24 angebracht. In den Ausschnitten eines Querschnitts durch die Ausnehmung 24 parallel der Trennebene gemäss Figur 4 h ist dies mit zwei Beispielen dargestellt. Im rechten Bild ist der Spannklotz 26a U-förmig ausgeführt und lässt sich aus seinem Innern heraus in der Ausnehmung 24 seitlich verankern. Grundsätzlich lässt sich der Spannklotz 26a in beiden Ausführungen seitlich und gegen unten verankern, was je nach Platzverhältnissen sinnvoll ist. Diese festen Verankerungen halten die Beeinträchtigung des Holzes vergleichsweise gering und belassen die Stirnseite 28b des hinteren Intaktmaterials 29 jedenfalls frei von Verankerungsmitteln. Bei lediglich am Boden der Ausnehmungen 24 verankerter Spannklötze 26a bleiben gar alle Seitenwände der hintersten bzw. hier einzigen Ausnehmungen 24 von Verankerungsmitteln frei. Hinter diesen Ausnehmungen 24 sind die Holzplatten intakt. Sie können wiederum identisch angefertigt sein. Auch der fest zu verankernde Spannverschluss ist seitenunabhängig einsetzbar und kann ferner auch symmetrisch realisiert sein, analog zum oben Ausgeführten.

In einer weiteren Variante lässt sich eine Verspannung der Holzplatten mittels eines Spannkeils 26c und Gegenkeils 26a realisieren, wie in Figur 4 i dargestellt. Die Keile 26a, 26c sind innerhalb derselben kastenartigen Ausnehmung 24 einer Holzplatte angeordnet, in der Figur 4 i rechts zu sehen. Durch Hinunterschlagen bzw. Einschlagen oder Einklemmen des Spannkeils 26c bewegt sich der Gegenkeil 26a translatorisch nach rechts und zieht einen Gewindestab 26b mit sich, welcher in einem Spannklotz 26a in der gegenüberliegenden kastenartigen Ausnehmung 24 der jenseitigen Holzplatte sowie mit dem Gegenkeil 26a in der diesseitigen Holzplatte verankert ist. Das vordere Intaktmaterial 27 an beiden Holzplatten wird vom Spannklotz 26a und von den gleichermassen als Spannklotz wirkenden Keilen 26a, 26c gegeneinander gedrückt, was die Holzplatten satt gegeneinander verspannt. Auch diese Keilverbindung ist seitenunabhängig einsetzbar. Der Spannkeil 26c weist unten eine bevorzugt U-förmige Ausnehmung auf, mit welcher er über den Gewindestab 26b gestülpt wird. Diese Keilform ist in Figur 4 j dargestellt. In einer kürzeren Ausführung des Spannkeils 26c reicht dieser auch bei vollständig verspanntem Zustand nicht bis zum Gewindestab 26b hinunter. Die Figur 4 k zeigt eine symmetrische Variante der Keilverspannung mit einem Spannkeil 26c und einem Gegenkeil 26a in je einer kastenartigen Ausnehmung 24. Für alle vorgestellten Varianten der Verspannung können die Ausnehmungen 24 in den Holzplatten identisch ausgeschnitten sein. Hinter den kastenartigen Ausnehmungen 24 bleiben die Holzplatten intakt und können dort etwa für den Einsatz von Schubverbindern 6, 9 genutzt werden.

Mit der Herstellung der erfindungsgemässen Holz-Beton-Verbunddecken lässt sich ein hoher Grad an industrieller Vorfabrikation erreichen, weil die Decke in modularer Bauweise vorgefertigt und dann vor Ort auf der Baustelle zusammengesetzt werden kann. Dies erhöht vor allem die Bau- und Montageeffizienz bei der Herstellung von Decken mit grossen Spannmassen. Ein solches Verfahren zur Herstellung der erfindungsgemässen Decke wird nachfolgend eingehend beschrieben.

Für ein einzelnes Deckenmodul wird zunächst die unterste Deckenschicht, die Holzschicht 1, bearbeitet. Diese ist typischerweise als eine einzelne fugenlose Holzplatte furniert. An der Stelle der einzusetzenden Schubverbinder 9 wurden die eingangs erläuterten Ausnehmungen 30 in die Holzschicht 1 eingeschnitten bzw. ausgefräst, wie sie in Figur 5 a zu sehen sind. In der hier gezeigten Variante wurden Stahlrohre 9 eingeklebt, wobei ringförmig um ihren Umfang der herausquellende Epoxid-Klebstoff dargestellt ist. Eine Schalung 31, mit einer Folie 32 verkleidet, fasst den Holzunterboden 1 entlang seines Randbereichs ein. Man erkennt ausserdem entlang der Seitenbereiche der Schalung 31 in regelässigen Abständen Ausbauchungen der Folie 32. Darunter verbergen sich Platzhalter 33, beispielsweise aus Polystyrol-Hartschaum, deren Platz beim nachfolgenden Materialauftrag also freigehalten wird, um dort später das Deckenmodul kraftschlüssig anschliessen zu können.

In Figur 5 b sind drei Reihen von Schubverbindern 9 auf die Holzschicht 1 aufgesetzt und mit ihr verbunden. Die Schalung 31 liegt hier teilweise aufgedeckt, wodurch der Blick auf die Platzhalter 33 frei wird. Die Folie 32 wird um die Schalung 31 herum verlegt und unten auf den Holzboden 1 geklebt, um den nachfolgenden Materialauftrag seitlich abzudichten. Direkt auf der Holzschicht 1 werden allfällige Anschlüsse und Komponenten wie etwa Haustechnikelemente verbaut.

In Figur 5 c blickt man wiederum auf die Oberseite der untersten Deckenschicht bzw. der Holzschicht 1, in dieser Ansicht jedoch ohne Schalung 31. Auf dieser Oberseite wurde eine Sprinkleranlage 34 installiert, wie dies für den Brandschutz üblich ist in Gebäuden, die nicht gerade als Museen, Bibliotheken und Archiven mit unersetzlichen, vor Wassereindringen zu schützenden Objekten genutzt werden. Ebenfalls erkennbar sind die in dieser bevorzugten Deckenausführung in die Holzschicht 1 eingeschnittenen bzw. ausgefrästen vorderen Ausnehmungen 24c, die hier regelmässig über die Längsseite der Holzschicht 1 verteilt sind, für ihre spätere Verbindung und Verspannung mit der Holzschicht 1 eines seitlich daran anschliessenden Moduls. Dahinter befinden sich die hinteren Ausnehmungen 24a, die hier von Holzblöcken überdeckt sind, damit das darüber einzufüllende Dämmmaterial nicht in sie eindringen und also verstopfen kann. Solches liesse sich z.B. auch mit einer Folienüberdeckung verhindern. Jedenfalls betrifft die Verspannung der Holzschichten 1 der einzelnen Module nur eine bevorzugte Ausführung der Erfindung, wenn die Holzschichten 1 durchgehend zweiachsig tragend ausgeführt sein sollen.

Damit das Deckenmodul nach seiner Fertigstellung von einem Kran gehoben werden kann, wird mit Vorteil eine Verankerung des Lastaufnahmemittels 44 in der Holzschicht 1 angebracht. Im Fall von Hebebändern 44 eignen sich z.B. in die Holzschicht 1 geankerte Spannklötze, vorzugsweise leicht angefaste, welche die Bänder 44 mit der Oberfläche der Holzschicht 1 verklemmen. Wenn auf eine Verankerung von Lastaufnahmemitteln 44 im Deckenelement verzichtet wird, kann das fertige Element stattdessen z.B. an dasselbe umschlingenden Hebegurten angehoben werden.

In Figur 5 d ist der nächste Verfahrensschritt dargestellt, in dem das Dämmmaterial zum Aufbau der Dämmschicht 3 über der Holzschicht 1 eingefüllt oder eingeschüttet, etc. wird. In der vorliegenden Ausführung werden Zellulosefasern als Dämmmaterial eingeblasen, wodurch sie eine kompakte Masse bilden. Die Zellulosefasern-Haufen, die beidseits längs des Moduls ersichtlich sind, bedecken hier gerade die aus der Dämmschicht 3 ragenden Schubverbinder 9. Die Folie 32 wurde in der Schalung 31 so verlegt, dass sie die Dämmschicht 3 über ihre Randbereiche einfassen kann. Auch eine mehrlagige Dämmschicht 3 wird auf diese Weise eingefüllt bzw. eingeschüttet, eingeblasen, etc., vorzugsweise mit einer Trennfolie 36 zwischen den einzelnen Materialschichten. Für eine zweilagige Dämmschicht 3 eignen sich als Dämmlagen z.B. eine untere Schicht Betongranulat und darüber eine leichtere Schicht Schaumglasschotter, vorzugsweise in einem Verhältnis ihrer Höhen von zwischen 1:1 und 1:4 von schwerer zu leichter Dämmschicht. Vorteilhaft werden, wie in der Figur 5 d dargestellt, Messstäbe 43 eingesetzt, um die Höhe der Dämmschicht 3 einzuhalten. Durch die Stützen des Hilfsgerüsts 37 für die Schalung 31 blickt man auf einen Teil der Holzschicht 1, welcher von der Schalung 31 nicht eingefasst und somit von der Dämmschicht 3 und der später aufzutragenden Betonschicht 4 ausgespart wird. Dieser Teil der Holzschicht 1 bildet eine Kontaktfläche 35 für einen später auf und über der Holzschicht 1 zu giessenden internen Unterzug 8.

Nachdem die Dämmschicht 3 fertig aufgetragen ist, werden die Lappen der Folie 32 nach innen umgelegt, sodass die Dämmschicht 3 rundum über ihre Seitenflächen von der Folie 32 eingefasst ist. Zudem wird über die Dämmschicht-Oberseite noch eine Schichttrennfolie 36 aufgelegt, damit der anschliessend einzubringende Frischbeton die Dämmschicht 3 nicht infiltriert. In die Trennfolie 36 werden jeweils Öffnungen eingeschnitten, aus denen dann die oberen Enden der Schubverbinder 9 sowie im Fall verankerter Lastaufnahmemittel 44 dieselben in Führungen 45 austreten können, wie dies in der Figur 5 e ersichtlich ist. Die Enden der Schubverbinder 9 ragen so in die nächstaufzutragende Betonschicht 4 hinein, mit welcher sie sich dann innig verbinden. Zunächst aber wird die Bewehrung 15 für die Betonschicht 4 eingelegt, mit üblicher mehrlagiger, hier zweilagiger - typischerweise auch vierlagiger - Anordnung der Armierungsstäbe in Gitterstruktur. Gut erkennbar sind in der Figur 5 e auch die oben aus der Dämmschicht 3 ragenden Platzhalter 33 links inwendig an der Schalung 31. Damit werden diese Bereiche für den anschliessenden Betonauftrag ausgespart.

In Figur 5 f ist der Vorgang des Betonierens gezeigt. Der Frischbeton ist hier bereits in der Schalung 31 ausgegossen und wird gerade einvibriert, wodurch er sich als kompakte, oben ebene Schicht 4 auf der hier nicht mehr sichtbaren Dämmschicht 3 setzt. Auch die oberen Enden der Schubverbinder 9 sind nunmehr vollkommen von der Betonschicht 4 überdeckt und daher nicht mehr sichtbar. Die Platzhalter 33 liegen hier stellenweise frei. Oben aus der Betonschicht 4 ragen die Führungen 45 für das Lastaufnahmemittel 44 heraus. Nach Aushärten der Betonschicht 4 wird die Schalung 31 entfernt und die eingesetzten Platzhalter 33 werden herausgelöst bzw. herausgespitzt. Das Deckenmodul ist damit fertig erstellt und bereit zur Montage.

Die Figur 5 g zeigt zwei solche Deckenmodule auf Lagern 38, wie sie typischerweise für den Transport gestapelt werden. Die Module sind in strassentransportierbarer Grösse erstellt, sodass sie auf die Baustelle gefahren werden können und sich dort zu einer Holz-Beton-Verbunddecke zusammensetzen lassen. Man erkennt, wie die Dämmschicht 3 rundum über ihre Seitenflächen von der Folie 32 eingefasst und also zurückgehalten wird. Ersichtlich sind auch unterhalb des Verbunds hervortretende Auskragungen der Holzschicht 1 der Module, die nach oben freie Flächen 35 bilden. Diese werden vor Ort mit Frischbeton verfüllt, wie es nachfolgend noch erläutert wird.

Figur 5 h zeigt, wie ein einzelnes Deckenmodul an den Hebebändern 44 mit einer Kraneinrichtung angehoben wird, um es in der ihm vorbestimmten Lage aufzulagern. Als Träger steht bzw. stehen entweder bereits fest verbaute vertikale Bestandteile des Tragwerks wie Stützen 18 oder tragende Wände bereit und/oder temporäre Deckenauflager, etwa in Form von Spriessungen. Diese werden wieder abgebaut, nachdem die Decke fertig erstellt ist. Beim gezeigten Modul sind in beiden Längsseiten in regelmässigen Abständen Aussparungen 39 angeordnet, nämlich dort, wo sich zuvor Platzhalter 33 befanden. Entsprechend sind diese Stellen frei von Beton oder oberhalb der Holzausnehmungen 24c frei von Dämmmaterial und Beton. Dank der ausgesparten Ausnehmungen 39 lässt sich dieses Modul auf jeder Längsseite mit einem Nachbarmodul kraftschlüssig verbinden. Es versteht sich, dass endseitig zu verlegende Module an ihren Endseiten keine Aussparungen 39 aufweisen. Je nach vorgesehenem kraftschlüssigen Anschluss können die Modulseiten mit solchen Aussparungen 39 versehen sein, für eine ein-, zwei-, drei- oder vierseitige Verspannung des jeweiligen Moduls mit Nachbarelementen.

In Figur 5 i ist ein Teil der entstehenden Decke aus mehreren auf Stoss zueinander verlegten Modulen dargestellt. Die Hebebänder 44 für den Krantransport sind teilweise noch nicht entfernt worden. Die Aussparungen 39 von Nachbarelementen kommen einander gegenüber zu liegen und bilden mit diesen je eine gemeinsame Aussparung 40, teilweise nur in der Betonschicht 1, hier jedoch mehrheitlich auch durch die Dämmschicht 3, wodurch die ebenfalls zu einer gemeinsamen Ausnehmung 25 zusammengefügten Ausnehmungen 24c von oben her für die Verspannung der Modulholzschichten 1 zugänglich sind. Sodann werden die Spannmittel 26a, 26b, 26c in den Ausnehmungen 25 der Holzschichten 1 verspannt und der Hohlraum darüber mit Dämmmaterial angefüllt, bis zur Unterkante der jeweils anschliessenden Modul-Betonschichten 4. Dies ist jedenfalls vorteilhaft, weil man bestrebt ist, vor Ort möglichst wenig Beton zu verbauen. Ausgenommen von unterzugsbedingten Unterbrüchen ist die Dämmschicht 3 so modulartig als durchgehende Deckenschicht realisiert. Daraufhin wird die Bewehrung 15 eingelegt und an diejenige der Nachbarmodule angeschlossen. In der Figur 5 i gut ersichtlich ist eine freiliegende Kontaktstelle 35 auf einer Holzschicht 1, die nach Anschluss einer oder mehrerer weiterer Module mit diesen einen Zwischenraum 41 bildet bzw. nach unten begrenzt. Dieser wird später zu einem internen Unterzug 8 ausgegossen. Die hier gezeigte Modulgruppe schliesst bereits zwei senkrecht zueinander verlaufenden Zwischenräume 41 über ihren Holzschichten 1 ein. Man erkennt sie daran, dass die Dämm- und Betonschichten 3, 4 entlang dieser Zwischenräume 41 durchgehend voneinander beabstandet sind.

In diesen zunächst freibleibenden Zwischenräumen 41 wird die Unterzugsbewehrung 42 installiert. Es ergibt sich ein Bild wie in Figur 5 j dargestellt. Ausserdem sind daneben die aus den Betonschichten 4 austretenden Armierungsstäbe 15 in den Aussparungen 40 zu sehen. Eine solche Aussparung 40 ist in Figur 5 k gesondert dargestellt, nach fertig montiertem Anschluss der benachbarten Beton-Bewehrungen 15 für ihre kraftschlüssige Verbindung. Die Figur 5 l indessen zeigt eine typische Unterzugsbewehrung 42 mit ihrer Zug- und Druckbewehrung 10, 11 als Längsarmierung, wobei in dieser Draufsicht vor allem die Druckbewehrung 11 ersichtlich ist. Die Längsarmierung 10, 11 wird von einer Bügelbewehrung 13 umschlossen. Die Anschlussbewehrung 12 wird aus abgebogenen Bewehrungsstäben gebildet und ist hier aus Platzgründen alternativ zur Ausführung gemäss Figur 2 a horizontal eingelegt. Diese Anschlussbewehrung 12 ist über einen Muffenstoss 14 kraftschlüssig mit den aus der Betonschicht 4 austretenden Armierungsstäben 15 verbunden. Im Bild nicht ersichtlich sind die Holz-Beton-Verbindemittel 6, in diesem Fall Holzbauschrauben 6, die in die Holzschicht 1 eingebracht wurden, um dann eine innige Verbindung des zu giessenden internen Unterzugs 8 mit dem Holzunterboden 1 zu schaffen. Indessen wird in einer Ausführung des internen Unterzugs 8 mit einem Stahlträgerprofil 20 dasselbe in den Zwischenraum 41 eingelegt und mit der Holzschicht 1 kraftschlüssig verbunden. Der noch freibleibende Raum wird sodann mit Dämmmaterial verfüllt, bis dasselbe oben bündig an die Unterkante der angrenzenden Betonschichten 4 anschliesst. Hernach wird eine Bewehrung mit Anschlussarmierung 12 in den verbleibenden, mit Beton auszugiessenden Raum 41 zwischen den benachbarten Betonschichten 4 eingelegt und an deren Bewehrung 15 kraftschlüssig angeschlossen.

Die einmal fertig armierten Zwischenräume 41 werden mit Beton 48 verfüllt und glattgestrichen, desgleichen auch die Aussparungen 40, wie es in Figur 5 m gerade getan wird. Falls in den bis an die Holzschicht 1 reichenden Aussparungen 40 kein Dämmmaterial angeordnet ist, sind die Aussparungen dann ganz mit Ortbeton 48 verfüllt. Dies ist aber eher untypisch, weil der Endausguss mit Frischbeton 48 möglichst gering gehalten wird. Aber auch im Falle anschlussbedingter Betonunterbrüche wäre die Dämmschicht 3 der Decke quasidurchgehend über die Module zusammengesetzt. Ein interner Unterzug 8 ist hier frisch erstellt, wie man am noch nassen Beton 48 erkennt. Daneben schematisch dargestellt sind die noch zu betonierenden Aussparungen 40. Mit Aushärten des Frischbetons 48 ist die Holz-Beton-Verbunddecke mit flächigem Holzelement tragfähig erstellt.

Die modulare Herstellungsweise der erfindungsgemässen Decke stellt jedenfalls ein innovatives, zeitsparendes und kostengünstiges Verfahren dar. Diese Vorteile ergeben sich dank des hohen Grades an Vorfabrikation, womit sich eine grossflächige Verbunddecke sehr effizient zusammensetzen lässt. Die internen Unterzüge 8 wurden hier ausschliesslich vor Ort erstellt, was allerdings nicht immer der Fall sein wird. Bei Ausführungen der internen Unterzüge 8, die gegen unten auskragen, erweist es sich als sinnvoll, auf vorfabrizierte Unterzugs-Bauteile 49 abzustellen. Lediglich der Endausguss der Unterzüge 8 wird noch in Ortbeton 48 ausgeführt, wie das später erläutert wird.

In anderen Ausführungen der erfindungsgemässen Decke ohne interne Unterzüge 8 werden die damit zusammenhängenden Verfahrensschritte einfach ausgelassen. So etwa lässt sich die erfindungsgemässe Holz-Beton-Verbunddecke in einer Variante als hoch schallgeschützte, jedoch unterzugslose Verbunddecke modulartig aus mindestens zwei Deckenmodulen herstellen: Für ihren Schichtaufbau wird von unten nach oben jeweils zunächst die Holzschicht 1 angefertigt, einschliesslich der mit ihren unteren Enden darin verankerten Schubverbindern 9. Anschliessend wird die Dämmschicht 3 mit mindestens zwei Lagen 3a, 3b gebildet, indem für die untere Lage 3a ein vergleichsweise dichteres Dämmmaterial eingebracht wird, um konzentriert Masse auf und über der Holzschicht 1 einzubringen, damit sie beschwert und folglich schwingungsträge wird. Für die mindestens eine obere Lage 3b wird ein vergleichsweise weniger dichtes Dämmmaterial eingebracht. Schliesslich wird noch die Betonschicht 4 mit ihrer Bewehrung 15 aufgetragen, sodass die Schubverbinder 9, welche die Dämmschicht 3 durchsetzen, mit ihren oberen Enden in der Betonschicht 4 verankert werden. Weil in dieser Ausführung die Module nicht über einen internen Unterzug 8 kraftschlüssig verbunden werden, sind in der Betonschicht 4 mindestens eines Moduls Aussparungen 39 vorgesehen, aus denen die Bewehrung 15 austritt, um kraftschlüssig an die Bewehrung 15 der benachbarten Betonschicht 4 angeschlossen zu werden. Diese Aussparungen 39 werden anschliessend noch ausbetoniert. Es versteht sich, dass je nachdem auch die Holzschichten 1 der Module kraftschlüssig gegeneinander verspannt werden können. Dann sind Aussparungen 39 nicht allein in der Betonschicht 4, sondern auch in der Dämmschicht 3 vorgesehen, damit die zu verspannenden Holzschichten 1 für ihre Verspannung von oben her zugänglich sind. Das fertig erstellte Deckenmodul wird sodann in der ihm vorbestimmten Lage auf einem oder mehreren Trägern verlegt und an das mindestens zweite Deckenmodul wie beschrieben angeschlossen und die Aussparungen 39 betoniert. Das Herstellungsverfahren für eine solchermassen akustisch optimierte Holz-Beton-Verbunddecke zeichnet sich durch grosse Bau- und Montageeffizienz aus. Eine Decke mit grossen Spannweiten lässt sich durch solche Module in grundsätzlich wenig Schritten erstellen.

Ungeachtet ihrer Nachteile bieten auch herkömmliche Holz-Beton-Verbunddecken an sich eine gute Tragsicherheit. Für die nachfolgenden Betrachtungen wird zwischen dem Normalfall und dem Brandfall unterschieden. Für den Normalfall wird ein regulärer Gebäudebetrieb angenommen, mit seinen verschiedenen Kombinationen von Haupt-, Zusatz- und Sonderlasten gemessen an den Wahrscheinlichkeiten ihres Auftretens, ihrer Dauer, etc. Mit den Abmessungen herkömmlicher Holz-Beton-Verbunddecken erreicht man im Normalfall komfortable statische Reserven, die auch noch im Brandfall ausreichend sind, wenn die brennbare Holzschicht 1 beeinträchtigt wird. Zum einen kommt solchen Holz-Beton-Verbunddecken zugute, dass sie zumeist aus Nadelhölzern wie Fichtenholz ausgeführt sind und deshalb aus Gründen der Statik eine beträchtliche Stärke/Dicke aufweisen müssen. Allein schon deshalb werden diese Holzschichten 1 im Brandfall nicht gleich ausfallen. Zudem wird während des Verbrennungsprozesses Holz unter Bildung von Holzkohle und brennbaren Gasen zersetzt, wobei die so gebildete Kohleschicht wegen der im Vergleich zum Holz deutlich tieferen Wärmeleitfähigkeit einen sehr guten Isolator bildet. Das innere Holz wird damit vor der Wärmeeinwirkung lange geschützt, sodass eine dicke Holzschicht 1 selbst im Brandfall noch einen ausreichenden statischen Beitrag zu liefern vermöchte. Mit einem schlanken Deckensystem jedoch entsteht hier ein Nachteil.

Zunächst bedingt ein hinreichender Brandschutz, dass das Tragwerk eines Gebäudes mindestens so lange einsturzsicher bleibt, als es für seine vollständige Evakuierung erforderlich ist. Die Evakuierungsdauer bemisst sich dabei an der Gebäudestruktur, insbesondere an der Auslegung und Dimensionierung der Fluchtwege, und ist umso länger, als ein Gebäude Stockwerke zählt. Ausserdem werden Bauteile brandschutztechnisch klassifiziert, üblicherweise nach tragender und/oder brandabschnittsbildender Funktion. Auch wird zwischen linearen und flächigen Bauteilen unterschieden. Angesichts dessen wird die Baute dann mit höheren oder tieferen Auflagen belegt. Allein weil die Holzschicht 1 einer Holz-Beton-Verbunddecke ein brennbares *flächiges, tragendes* Bauteil darstellt, wird sie oft als solches brandschutztechnisch beanstandet - obgleich ihre statische Leistung im Grunde genommen auch im Brandfall hinreichend wäre. Abhilfe schaffen meist aufwändige Massnahmen in der Fluchtwegplanung und -dimensionierung und/oder eine feuerfeste Verkleidung der Holzschicht mit z.B. Gipsplatten, etc. Das führt dazu, dass gerade in Bauten, die wegen ihrer Lage, Geschosszahl und Ausdehnung regelmässig mit hohen Brandschutzauflagen belegt sind, der Einsatz einer Holz-Beton-Verbunddecke mit flächigem Holzelement trotz bedeutender Vorteile nicht sinnvoll ist bzw. sich nicht rechnet.

Das erfindungsgemässe Deckensystem vermag allerdings auch solche bislang ungenutzten Anwendungsbereiche zu erschliessen. Dabei kann der Umstand genutzt werden, dass während der Evakuierungsdauer die Personenbelegung eines Gebäudes gegen Null tendiert. Ein brandbeeinträchtigtes Tragwerk muss je nachdem nur rund 50-60% der Maximallast tragen können, und auch nicht dauerhaft, sondern nur so lange, bis die Evakuierung abgeschlossen ist. Diese Bedingung kann die erfindungsgemässe Holz-Beton-Verbunddecke dank ihres internen Unterzug-Konzepts so erfüllen, dass die tragende Holzschicht 1 nicht den Auflagen eines flächigen, tragenden Bauteils untersteht: Das nicht brennbare Deckentragwerk bzw. das Residualtragwerk aus Betonschicht 4 und internen Unterzügen 8 kann den Wegfall der brennbaren Holzschicht 1 vollständig kompensieren, sodass die Holzschicht 1 für die kritische Zeitdauer keinen statischen Beitrag zu leisten hat. Während im Brandfall bei einer herkömmlichen planaren Holz-Beton-Verbunddecke also ein als Ganzes unverzichtbares tragendes flächiges Bauteil geschädigt würde, wäre bei der erfindungsgemässen Holz-Beton-Verbunddecke dann vergleichsweise nur ein statisch ohnehin verzichtbares Bauteil betroffen. Dies führt insbesondere dazu, dass die Holzschicht 1 trotz Auflagen für flächige, tragende Bauteile raumseitig unverkleidet und damit sicht- und erlebbar bleiben kann. Eine Ausnahme bilden Fluchtwege mit speziellen, über die statische Verzichtbarkeit hinausgehenden Auflagen. In jedem Fall aber schaffen die internen Unterzüge 8 vorteilhafte Bedingungen, sodass grundsätzlich weniger bzw. geringere brandschutztechnische Massnahmen für ein Gebäude vorgesehen werden müssen.

In Figur 6 ist ein schematisches Tragwerkkonzept anhand eines Geschossgrundrisses für ein mehrstöckiges Gebäude oder Hochhaus mit Einsatz einer erfindungsgemässen Holz-Beton-Verbunddecke dargestellt. Ein aussteifender tragender Gebäudekern 17, in dem z.B. Lifte und/oder ein Treppenhaus unterkommen, bildet mit seinen tragenden Wänden ein Auflager für die rundum an ihn anschliessende Decke, ebenso wie die entlang der Fassade 19 und im Innern der Baute angeordneten vertikalen Tragstützen 18. Wie man erkennt, überspannt die Decke den gesamten Bereich zwischen Kern 17 und Fassade 19 und überspannt beträchtliche Masse. Gleichzeitig finden sich mit Ausnahme des Gebäudekerns 17 keine tragenden Wände im Innern der Baute. Dies ist der intelligenten Anordnung von internen Unterzügen 8 zu verdanken, die den Raum maximal unverbaut lassen, weil sie im Gebäudeinnern mit nur gerade zwei Stützen 18 als Punkteauflager auskommen, während sie sich die Stützen 18 der Fassade 19 als äussere Auflager und den Kern 17 als Ecklager teilen. Dabei können die internen Unterzüge 8 wie eingangs erläutert ganz aus Stahlbeton oder auch mit einem Stahlprofil 20 ausgeführt sein oder diese Varianten werden miteinander kombiniert. In der vorliegenden Ausführung der erfindungsgemässen Decke lassen sich die internen Unterzüge 8 in zwei Kategorien einteilen. In Grundrisslängsrichtung (horizontale Richtung in Figur 6), jeweils mit ihrem einen Ende abgestützt auf dem Gebäudekern 17 und am anderen Ende auf den Fassadenstützen 18, befinden sind die primären internen Unterzüge 8a. Diese werden als solche bezeichnet, weil sie in der hier gewählten Tragwerksgeometrie statisch in jedem Fall unabdingbar sind, d.h. sowohl im Normalfall als auch im Brandfall. Sie begrenzen mit Kern 17 und Fassade 19 vier grosse Deckenfelder. Quer dazu, d.h. in Figur 6 in vertikaler Richtung verlaufend, sind die sekundären internen Unterzüge 8b ersichtlich, welche schraffiert sind. Wie ihre Bezeichnung vermuten lässt, sind sie im Normalfall von untergeordneter Bedeutung, weil die Decke hierfür auch ohne ihren Beitrag die erforderliche Tragfestigkeit aufzubringen im Stande ist. Für den Normalfall wurden die Tragrichtungen der vier grossen Deckenfelder angegeben und über die ganze Decke verteilt eingezeichnet: Die Haupttragrichtung eines solchen grossen Deckenfelds (die Tragrichtung mit der grössten Beanspruchung) mit einem grossen Pfeil, und seine Nebentragrichtung (die Tragrichtung mit der geringeren Belastung) mit einem kleinen Pfeil. Die sekundären Unterzüge 8b sind hierfür auszublenden, denn sie nehmen im Normallfall nicht entscheidend bzw. nicht kritisch an der Lastabtragung der Decke teil - die Decke trägt für die vorliegende Betrachtung ohne sie.

**Erst** im Brandfall, wenn die Holzschicht 1 etwa wegen Versagens einer Sprinkleranlage 34 brandgeschädigt ist, muss die horizontale Lastaufnahme und - abgabe an die vertikalen Träger 18 auf alle Unterzüge 8a, 8b der Decke verteilt werden können. Sie bilden sodann allesamt unverzichtbare Bestandteile des Residualtragwerks. Entscheidend ist nun, dass sich die Decke unter Einbezug aller interner Unterzüge 8a, 8b in zahlreiche kleinere Deckenfelder aufteilt, weil nach dieser statischen Betrachtung auch die sekundären internen Unterzüge 8b an der Lastaufnahme bzw. dem Lastabtrag mitwirken. Entsprechend ergeben sich auch neue Haupt- und Nebentragrichtungen der Decke in Bezug auf diese kleineren Deckenfelder, die hier aus Gründen der Übersichtlichkeit nicht eigens eingezeichnet sind. Die auf den aktiv wirkenden Unterzügen 8a, 8b aufgelagerten Deckenflächen sind folglich geringer, sodass in dieser Kassettendecken-Struktur der Decke die vergleichsweise dünne Betonschicht 4 das Geschoss für die massgebliche Evakuierungsdauer einsturzsicher überspannen kann. Die Holzschicht 1 oder wenigstens der relevante brandgefährdete Teil davon kann während dieses Zeitraums statisch wie eine Verkleidung gelten. Deshalb braucht die Holzschicht 1 auch nicht feuerfest verkleidet zu werden und bietet vielmehr eine ästhetische, durchlaufende, somit ununterbrochene Deckenuntersicht im Geschossinnern. Selbstverständlich kann die Holzschicht 1 dennoch raumseitig verputzt werden, oder auch nur stellenweise, wenn dies etwa mit Rücksicht auf die jeweilige Ästhetik erwünscht ist oder wenn solches grundsätzlich vorgeschrieben ist, z.B. entlang von Fluchtwegen. Im vorliegenden Ausführungsbeispiel bildet der Gebäudekern 17 zugleich auch den Fluchtweg. In jedem Fall lassen sich dank eines solchen internen Unterzugskonzepts mit im Normalfall statisch überflüssigen internen Unterzügen 8b die brandschutzbedingten Auflagen für ein Gebäude wesentlich reduzieren.

In anderen Ausführungen der erfindungsgemässen Decken können interne Unterzüge 8 auch einzig als statischer Behelf im Brandfall konzeptioniert werden. Auch der umgekehrte Fall mit einem oder mehreren Unterzügen 8 nur als primärer bzw. nur als primäre interne Unterzüge 8 ist denkbar, wenn sich dies brandschutztechnisch umsetzen lässt. Jedenfalls wird mit Einbindung von internen Unterzügen 8 in das regulär zu belastende Tragwerk das Steifigkeit/MasseVerhältnis der Decke optimiert, ihr Gewicht reduziert, ihre Höhe minimiert und die realisierbare Stockwerkzahl der Baute maximiert, wie dies bereits eingangs ausgeführt wurde. Der Gewichtsanteil einer optimierten Holz-Beton-Verbunddecke, welcher auf die internen Unterzüge 8, 8a, 8b entfällt, beträgt nur gerade ca. 10% des Deckengewichts oder noch weniger. Der Gewinn an Biegesteifigkeit und damit einhergehender Vorteile übersteigt diesen Gewichtsbetrag in mehrfacher Hinsicht. Es bietet sich also an, die Traglast auch des regulären Gebäudebetriebs auf interne Unterzüge 8, 8a statisch zu verteilen, d.h. mindestens einen Anteil der internen Unterzüge 8a als Bestandteil des Primärtragwerks zu konzeptionieren.

Der Geschossgrundriss nach Figur 6 ist lediglich als beispielweise Ausführung zu verstehen. Das Dimensionieren der Decke, insbesondere der internen Unterzügen 8 kann selbstverständlich an die Eigenheiten einer jeden Baute angepasst werden. Grundsätzlich werden die internen Unterzüge 8 aber so verteilt, dass sie dem Kräfteverlauf der Decke folgen und diese in sinnvoll kleine Deckenfelder aufteilen. Sinnvoll bedeutet, dass das damit einhergehende vertikale Auflager der internen Unterzüge 8 den Innenraum der Baute möglichst nicht beeinträchtigt und die Decke für ihre Zwecke dennoch hinreichend biegesteif ausgeführt ist. Die internen Unterzüge 8 sind deshalb vorteilhaft nur auf Stützen 18, aufgelagert. Unter Stützen 18 werden vertikal verbaute Bauteile verstanden, welche Lasten hauptsächlich in Richtung ihrer Längsachse aufnehmen und weiterleiten. Diese schränken den Raum nur minimal ein. Jedenfalls lässt sich ein Geschossgrundriss so quasi nach Belieben umnutzen, weil höchstens nichttragende Wände aufgerichtet oder abgebaut werden müssen.

Die Figur 7 stellt eine Tragkonfiguration mit im Hintergrund jeweils oben und unten an die Decke anschliessenden Stützen 18 dar. Der Decken-Ausschnitt zeigt den Aufbau, wie er aus Figur 2 a bekannt ist, wobei auf die Darstellung der Armierung verzichtet wurde. Eingezeichnet sind jedoch die Holz-Beton-Verbindelemente in Form von hier eingesetzten Holzbauschrauben 6. Wo die untere Stütze 18 auf die Decke trifft, weist die Holzschicht 1 eine Ausnehmung auf, sodass sie allseits bündig mit der Stütze 18 schliesst. Während der Montage werden die vorfabrizierten Deckenmodule auf einem temporären Auflager um die Stütze 18 gelegt. In der Figur 7 ist die Trennlinie der auf Stoss verlegten Holzschichten 1 der beiden Deckenelemente ersichtlich. Auf ihren frei belassenen Kontaktflächen 35 wird der interne Unterzug 8 gegossen und verbindet sich an der Stelle der Ausnehmung in der Holzschicht 1 monolithisch mit der unteren Stütze 18. Mit Aushärten des Ortbetons 48 wirkt diese als Auflager für die Decke. Darüber wird deckungsgleich eine obere Stütze 18 angeschlossen, welche die vertikale Tragstruktur ins obere Geschoss verlängert, zur effektiven Durchleitung der wirkenden Kräfte. Längs eines internen Unterzugs 8 werden vorzugsweise mehrere Stützen 18 so angeordnet sein. Eine Tragwerkskonfiguration mit internen Unterzügen 8, die über ihre Länge in regelmässigen Abständen auf Stützen 18 gelagert sind, bildet den Regelfall. In Zusammenwirkung mit diesen Stützen 18 erschliessen die internen Unterzüge 8 ein hocheffizientes Tragwerks-Raster. Der Grossteil des Innenraums einer Baute bleibt damit frei von tragenden flächigen Baustrukturen bzw. ist nur punktuell von Stützen 18 durchsetzt.

In manchen Fällen wird es von Vorteil sein, die Querschnitte der internen Unterzüge vergrössern zu können, d.h. über die Höhe des Deckenschichtverbunds hinaus, um eine besonders hohe Biegeverstärkung zu erreichen. Nachfolgend werden Möglichkeiten für eine solche obere oder untere Auskragung eines internen Unterzugs 8 aus der Verbunddecke vorgestellt.

Die Tragkonfiguration gemäss Figur 8 eignet sich bei Hohlböden, d.h. bei Systembodenbauarten, die einen Hohlraum für die Unterbringung von z.B. Elektroanschlüssen, Telekommunikations-, Sanitär-, Heizungs-, Lüftungsinstallationen, etc. einschliessen. Der Hohlraum 46 schafft zugleich Platz für eine Querschnittsvergrösserung des internen Unterzugs 8 über die Betonschicht 4 hinaus. Eine solche Querschnittsvergrösserung kann entweder über die ganze Länge des internen Unterzugs 8 erfolgen, oder nur lokal, z.B. in einem beschränkten Bereich oberhalb von Stützen 18. Die lediglich lokale Auskragung erweist sich dabei als Vorteil, weil sie keine durchgehende Barriere für die Leitungsführungen im Hohlraum 46 bildet. Der interne Unterzug 8 indessen bleibt nach dem Endausbau von aussen unsichtbar. Die Montage erfolgt analog wie oben zu Figur 7 beschrieben, mit dem Unterschied, dass hier zusätzlich eine oben anschliessende und von der Verbunddecken-Ebene aus sich nach oben erstreckende temporäre Betonschalung an den Zwischenraum 41 für den zu giessenden Unterzug 8 angelegt wird, womit der einmal fertig gegossene Unterzug 8 folglich oben aus der Decke herausragt. Der interne Unterzug 8 wird üblicherweise nicht bis zum Unterlagsboden/Estrich 23 hoch gegossen, sondern spart einen Luftspalt für die Leitungsverlegung aus, insbesondere wenn er als durchgehender Unterzug konzipiert ist. In einer Maximalausführung reicht der interne Unterzug 8 bis an den Unterlagsboden 23 heran und setzt folglich eine detaillierte Koordinierung der Leitungsführung voraus. Jedenfalls lässt sich der oben austretende Höhenabschnitt des internen Unterzugs 8 nach den jeweiligen Gegebenheiten dimensionieren. Wenn das darüberliegende Geschoss nicht genutzt wird, etwa bei einem Dachboden, können die oben überstehenden Unterzüge 8 den Deckenboden auch als Stufen überragen bzw. es kann auf einen Unterlagsboden 23 verzichtet werden.

In Figur 9 ist ein gegen unten aus der Verbunddecke austretender interner Unterzug 8 gezeigt. Aufgrund seiner Auskragung ist der interne Unterzug optisch wahrnehmbar und gleicht einem konventionellen Unterzug. Diese Art der Unterzugsgestaltung bietet sich vor allem dann an, wenn der Bodenaufbau keine entsprechende Auskragung nach oben erlaubt. Bei solchen sichtbaren Ausführungen wird es sich vornehmlich um primäre bzw. statisch in jedem Fall unabdingbare Unterzüge 8a handeln, deren optische Wirkung daher hinnehmbar ist. Für die Herstellung bzw. Montage wird vorteilhaft ein Unterzugsbalken 49, wie er in der Figur 9 mit einer einheitlichen Schraffur versehen ist, als separates Bauteil vorfabriziert und auf die bereits erstellte Stütze 18 aufgelagert. Die ebenfalls vorfabrizierten Deckenelemente werden an den Unterzugsbalken 49 anschliessend verlegt. Hierzu formt der Unterzugsbalken 49 eine untere Auskragung aus, die beidseits je eine Stufe 47 bildet, auf die sich die Deckenelemente auflagern lassen. In einem letzten Verfahrensschritt wird der noch freie Bereich oberhalb des Unterzugsbalkens 49 zwischen den Betonschichten 4 der Deckenmodule in situ mit Beton 48 ausgegossen, wodurch der obere Abschluss des internen Unterzugs 8 dann monolithisch mit diesen verbunden ist. Vorteilhaft sparen die Betonschichten 4 noch einen Randbereich über den Dämmschichten 3 aus, der dann mitausgegossen wird, für die besonders feste Verbindung der Module mit dem internen Unterzug 8. Zur Verdeutlichung ist der Endausguss aus Ortbeton 48 in der Figur 9 anders schraffiert als der Beton der vorgefertigten Deckenelemente sowie des vorfabrizierten Unterzugsbalkens 49. Es versteht sich, dass unten auskragende interne Unterzüge 8 durch Anbringen entsprechender temporärer Betonschalungen auch nach oben auskragend endausgiessen lassen.

Aus architektonischer Sicht kann die untere Auskragung der internen Unterzüge 8 als optisch dominant empfunden werden und je nachdem unerwünscht sein. Abhilfe schafft dabei eine Kapitellkonstruktion wie in Figur 10 a im Querschnitt dargestellt. Dabei entspricht die hier ersichtliche Konfiguration derjenigen aus Figur 9, mit dem Unterschied, dass die Auskragung des internen Unterzugs 8 über seine Länge nicht überall gleich tief verläuft, sondern seine Tiefe zur Stütze 18 hin zunimmt und damit optisch zum seitlichen Arm eines Kapitells ausgeformt ist. Dieser Kapitellarm verläuft in der Figur 10 a in Blickrichtung von der Blattebene aus hin zur Stütze 18 hinter der Blattebene. Die Neigung des Kapitellarms zur Stütze 18 hin wurde mit schräg zueinander gerichteten unterbrochenen Linien angedeutet.

Die Figur 10 b zeigt eine Ansicht durch die Schnittlinie A-A in Figur 10 a, sodass das Kapitell als oberer Abschluss der unteren Stütze 18 in einer Queransicht zu sehen ist. Die beiden Kapitell-Arme des internen Unterzugs 8 verlaufen je von der Stütze 18 weg und erstrecken sich offensichtlich nur über einen beschränkten Abschnitt. Der hier verdeckte, intern verlaufende Abschnitt des Unterzugs 8 kann indessen durchgehend bis zur nächsten Tragstruktur bzw. darüber hinaus verlaufen. Die Schnittlinie A-A für die in der vorherigen Figur 10 a gebotene Ansicht ist ebenfalls eingezeichnet und gibt Aufschluss über die dortige Blickrichtung. In Figur 10 b indessen wird klar, weshalb diese Variante der Unterzugsführung bzw. Ausführung der Auskragung der internen Unterzüge 8 auch architektonisch vorteilhaft sein kann. Anstelle eines durchgehend tiefer gelegten Deckenabschnitts wird die Deckenhöhe hier nur in einem Bereich um die Stütze 18 beeinträchtigt. Die so geformte Unterzugs-Auskragung ist optisch unauffällig und schafft dennoch eine entscheidende Biegeverstärkung. Der interne Unterzug 8 wird auf Basis eines Unterzugbalkens 49 mit Kapitell-Armen vorgefertigt und analog zur Konfiguration gemäss Figur 9 verbaut.

Im Deckenverbund gemäss Figur 10 b ist ein weiterer interner Unterzug 8 quer zur Verlaufsrichtung des Kapitells ersichtlich. Es handelt sich hier um einen von aussen nicht sichtbaren, mit Ortbeton 48 hergestellten internen Unterzug 8, der an der Stelle des zum Kapitell ausgeformten, vorgefertigten internen Unterzugs 8 mit geeigneter Anschlussbewehrung 12 an diesen angeschlossen ist. In gleicher Weise verläuft ein rein intern geführter Unterzug 8 auf der gegenüberliegenden Seite der hier ersichtlichen Anordnung.

Anhand der auskragenden Varianten der internen Unterzüge 8 zeigt sich, wie das eingangs beschriebene Herstellungsverfahren der Decke beispielweise angepasst bzw. abgewandelt werden kann. Das Deckenherstellungsverfahren lässt sich für beide Varianten der Unterzugsfertigung - ganzheitlich vor Ort oder teilweise vorfabriziert und teilweise vor Ort - wie folgt zusammenfassen: Die erfindungsgemässe Decke wird aus mindestens zwei Deckenmodulen zusammengesetzt, wobei die Deckenmodule mit ihrem Schichtaufbau je erstellt werden, sodass von unten nach oben zunächst die Holzschicht 1 angefertigt wird, mit den mit ihren unteren Enden darin verankerten Schubverbindern 9. Anschliessend wird die Dämmschicht erstellt. Vorzugsweise wird sie mit mindestens zwei Dämmmaterial-Lagen 3a, 3b gebildet, indem für die untere Lage 3a ein vergleichsweise dichteres Dämmmaterial eingebracht wird, um konzentriert Masse auf und über der Holzschicht 1 einzubringen, um sie zu beschweren und damit schwingungsträge zu machen, während für die mindestens eine obere Lage 3b ein vergleichsweise weniger dichtes Dämmmaterial eingebracht wird. Die Schubverbinder 9 durchsetzen die Dämmschicht 3. Schliesslich wird die Betonschicht 4 mit ihrer Bewehrung 15 angefertigt, wobei die Schubverbinder 9 mit ihren oberen Enden darin verankert werden. Hernach werden die Deckenmodule in der ihnen vorbestimmten Lage auf einem oder mehreren Trägern verlegt. Hierzu werden die beiden Deckenmodule entweder
i. auf Stoss anschliessen und dabei einen Zwischenraum 41 bilden. Dieser ist gegen unten von einer vorläufig von Materialauftrag ausgesparten Kontaktfläche 35 auf der Holzschicht 1 mindestens eines der Deckenmodule begrenzt sowie seitlich von ihren Dämm- und Betonschichten 3, 4 begrenzt.
   Alternativ werden die Deckenmodule auf
ii. mindestens einen vorfabrizierter Unterzugsbalken 49 aufgelagert, der eine untere Auskragung ausformt, welche beidseits eine Stufe 47 bildet. Auf diesen Stufen 47 wird je ein Deckenmodul am Unterzugsbalken 49 anschliessend aufgelagert. Über dem Unterzugsbalken 49 bleibt noch ein Zwischenraum 41 zwischen den Betonschichten 4 der Module ausgespart.
In den gemäss i. oder ii. gebildeten Zwischenraum 41 wird eine Unterzugs-Bewehrung 42 eingelegt und an eine Bewehrung 15 der angrenzenden Betonschichten 4 der Deckenmodule angeschlossen. Sodann wird der Zwischenraum 41 mit Beton 48 verfüllt, sodass mit Aushärten desselben ein innerhalb der Verbunddecke eingelagerter, allfällig aus dem Schichtverbund oben und/oder unten auskragender Unterzug 8 fertig erstellt ist. Für die obere Auskragung eines internen Unterzugs 8 wird eine oben an den jeweiligen Zwischenraum 41 anschliessende, sich nach oben erstreckende Betonschalung angelegt und der folglich erweiterte Raum 41 mit Beton 48 angefüllt. Die Betonschalung wird nach Aushärten des Betons 48 wieder entfernt, womit ein oben auskragender Unterzug 8 fertig erstellt ist.

Die verschiedenen Ausführungen erweisen, dass ein interner Unterzug 8 sehr vielseitig gestaltet werden kann, mitunter durch ästhetisch gestaltete Auskragungsformen. Aus dem Deckenschichtverbund auskragende interne Unterzüge 8 ermöglichen eine noch grössere Flexibilität bei der Grundrissgestaltung, weil durch ihre sehr grosse Biegeverstärkung die vertikalen Auflager weniger dicht angeordnet sein müssen. Andererseits kann es auch erstrebenswert sein, alle internen Unterzüge 8 in der Decke verschwinden zu lassen. In einer kombinierten Variante können beispielsweise auch nur die primären internen Unterzüge 8a auskragen, während die sekundären Unterzüge 8b, die mit Ausnahme des Brandfalls einen ohnehin verzichtbaren statischen Beitrag leisten, vollständig in die Decke integriert sind. Als blosse Behelfselemente entfalten sie dann auch keinerlei optische Wirkung, während dies bei den primären internen Unterzügen 8 hingenommen wird. Die Entscheidung, wo welche internen Unterzüge 8 aus der Decke auskragen sollen, kann auch architektonisch motiviert und statisch hinreichend umgesetzt sein. Schliesslich hat jede Baute ihre Eigenart, weshalb sich auch die eine oder andere Ausführungsvariante je nachdem besser eignet. Jedenfalls können die internen Unterzüge 8 individuell gewählt und bedarfsweise verschiedene Ausführungen miteinander kombiniert und auch mit konventionellen, somit nicht in die Decke eingebauten Unterzügen beliebig ergänzt werden.

In der Figur 11 ist eine Baute 50 zu sehen, die hier als Hochhaus 50a mit einer Gesamthöhe von 80 m ausgeführt ist. Typischerweise ist die erfindungsgemässe Holz-Beton-Verbunddecke auf jedem Stockwerk eingebaut und überspannt dasselbe unter Ausnahme des Gebäudekerns 17. Dabei werden brand- und schallschutztechnische Auflagen so erfüllt, dass die Verbunddecke raumseitig mit der Holzschicht 1 abschliesst und innenarchitektonisch erlebbar ist. Dank dem Einsatz der erfindungsgemässen Decke lassen sich mit der vorliegenden Hochhaus-Ausführung 50a insgesamt 28 Stockwerke realisieren.

### Legende

- 1: flächiges Holzelement, Holzschicht
- 2: Betonverschalung, Trennebene zwischen Beton- und Holztragwerk
- 3: Dämmschicht
- 3a: Schicht aus vergleichsweise schwerem Dämmmaterial
- 3b: Schicht aus vergleichsweise leichtem Dämmmaterial
- 4: Betonschicht
- 5: Holzbalken
- 6: Verbindungselemente zwischen Holz und Beton; Holzbauschrauben
- 7: Nute, Schubkerve
- 8: interner Unterzug
- 8a: primärer interner Unterzug 8
- 8b: sekundärer interner Unterzug 8
- 9: Schubverbinder, Stahlrohre
- 10: Zugbewehrung des Unterzugs 8
- 11: Druckbewehrung des Unterzugs 8
- 12: Anschlussbewehrung für die Bewehrung 15 der Betonschicht 4 an den Unterzug 8
- 13: Bügelbewehrung des Unterzugs 8
- 14: Muffenstoss für den Anschluss der Bewehrungen 12 und 15
- 15: Bewehrung der Betonschicht 4, Armierungsstäbe
- 16: seitliche Oberfläche des Unterzugs 8
- 17: tragender Gebäudekern
- 18: vertikale Tragstützen
- 19: Fassadenwände des Gebäudes
- 20: Stahlträgerprofil
- 21a: oberer Flansch des Stahlprofils 20
- 21b: unterer Flansch des Stahlprofils 20
- 22: Trittschall- und Wärmedämmplatte
- 23: Unterlagsboden, Estrich
- 24: Ausnehmung in der Holzplatte
- 24a: hintere Ausnehmung
- 24b: Hohlkanal durch das vordere Intaktmaterial 27 der Holzplatte, welches Intaktmaterial 27 diesfalls einzig aufgrund des Hohlkanals 24b nicht intakt ist24c vordere Ausnehmung
- 25: gemeinsame, Holzplatten-übergreifende Ausnehmung
- 26: Spannmittel
- 26a: Anker; Spannklotz, Schraubenkopf, Gegenkeil
- 26b: Verbindemittel zum Anker; Gewindestab, Spannarm
- 26c: Kraftübertragungsmittel; Muffe, Hebel, Spannkeil
- 27: vorderes Intaktmaterial der Holzplatte, welches bis auf einen allfälligen Hohlkanal 24b intakt belassen ist
- 28a: hintere Stirnseite des vorderen Intaktmaterials 27 der Holzplatte
- 28b: Stirnseite des hinteren Intaktmaterials 29 der Holzplatte
- 29: hinteres Intaktmaterial der Holzplatte
- 30: Ausnehmungen in der Holzschicht 1
- 31: Schalung für ein Deckenmodul
- 32: Folie zum mindestens seitlichen Einfassen des Dämmmaterials
- 33: Platzhalter
- 34: Sprinkleranlage
- 35: Kontaktfläche auf der Holzschicht 1 für den späteren zu erstellenden internen Unterzug 8
- 36: Schichttrennfolie
- 37: Hilfsgerüst für die Modulschalung 31
- 38: Stapellager für das Deckenmodul
- 39: Ausnehmungen in der Betonschicht 4 oder in der Betonschicht 4 und in der Dämmschicht 3
- 40: Gemeinsame Aussparung gebildet durch die Ausnehmungen 39
- 41: Zwischenraum für das Ausgiessen eines internen Unterzugs 8 mit Ortbeton
- 42: Unterzugsbewehrung
- 43: Messstäbe
- 44: Lastaufnahmemittel, Hebebänder
- 45: Führungen für die Lastaufnahmemittel 44
- 46: Hohlraum unter Hohlboden
- 47: Stufe
- 48: Ortbeton des vorfabrizierten internen Unterzugs 8
- 49: Vorfabrizierter Unterzugsbalken
- 50: Baute
- 50a: Hochhaus

## Patentansprüche

1. Holz-Beton-Verbunddecke, deren Tragwerk einen Bestandteil Beton und einen damit schubfest verbundenen Bestandteil Holz umfasst, wobei die Decke einen Schichtaufbau (1, 3, 4) aufweist, der von unten nach oben zuerst einen im Verbund der Decke auf Zug belastbaren, flächenhaft ausgedehnten Holzbestandteil, nämlich eine Holzschicht (1), einschliesst, gefolgt von einer Dämmschicht (3) und schliesslich einer Betonschicht (4), wobei in der Verbunddecke Schubverbinder (9) eingebaut sind, worunter mindestens ein Schubverbinder (9) zugleich in die Holzschicht (1) und in die Betonschicht (4) hineinragt und dabei die Dämmschicht (3) durchquert, und wobei der Schichtaufbau (3, 4) der Decke von mindestens einem Unterzug (8) unterbrochen ist, indem dieser wenigstens die Betonschicht (4) und die Dämmschicht (3) durchmisst und sich folglich nach unten wenigstens bis an die Holzschicht (1) erstreckt, wobei die Holzschicht (1) nicht aus aneinandergereihten Holzbalken zusammengesetzt ist und/oder die Holzschicht (1) in einem untersten Abschnitt der Schicht, in Bezug auf die Schichtdicke, frei von materialabtragenden Bearbeitungen im Holz und somit intakt belassen ist.

2. Holz-Beton-Verbunddecke nach Anspruch 1, wobei der mindestens eine Unterzug (8) Armierungsstähle (10, 11, 12, 13) und/oder ein Stahlprofil (20) mit wenigstens einem unteren Flansch (21b) als Bewehrung (42) enthält.

3. Holz-Beton-Verbunddecke nach einem der vorangehenden Ansprüche, wobei der eine Unterzug (8) oder die mehreren Unterzüge (8) so dimensioniert ist/sind bzw. in ihrer Anzahl bemessen sind, dass sein/ihr Gewicht insgesamt bis 10% des gesamten Deckengewichts ausmacht/ausmachen.

4. Holz-Beton-Verbunddecke nach einem der vorangehenden Ansprüche, wobei bei einer bis zu 50%igen Verlängerung der Spannweite der Verbunddecke, bis hin zu einer Gesamtlänge von 9 m der verlängerten Spannweite, die spannweitenabhängige Gewichtszunahme der Decke 10% des Deckengewichts nicht übersteigt und die Deckenstärke um lediglich 5-10 cm variiert, zur Gewährung einer grösseren Flexibilität in der Grundrissgestaltung.

5. Verfahren zur Herstellung einer Holz-Beton-Verbunddecke nach einem der Ansprüche 1 bis 4 mit mindestens zwei Deckenmodulen,
a. wobei die Deckenmodule je mit ihrem Schichtaufbau (1, 3, 4) erstellt werden, sodass von unten nach oben zunächst die Holzschicht (1) mit den mit ihren unteren Enden darin verankerten Schubverbindern (9) angefertigt wird, dann die Dämmschicht (3) gebildet wird und schliesslich die Betonschicht (4) mit ihrer Bewehrung (15) aufgetragen wird, sodass die oberen Enden der Schubverbinder (9) in der Betonschicht (4) verankert werden,
b. die Deckenmodule in der ihnen vorbestimmten Lage auf einem oder mehreren Trägern verlegt werden, wobei entweder
i. die beiden Deckenmodule auf Stoss anschliessen und dabei einen Zwischenraum (41) bilden, der gegen unten von einer vorläufig von Materialauftrag ausgesparten Kontaktfläche (35) auf der Holzschicht (1) mindestens eines der Deckenmodule sowie seitlich von ihren Dämm- und Betonschichten (3, 4) begrenzt ist,
oder
ii. mindestens einer der Träger ein vorfabrizierter Unterzugsbalken (49) ist, der eine untere Auskragung ausformt, welche beidseits eine Stufe (47) bildet, auf welchen Stufen (47) je ein Deckenmodul am Unterzugsbalken (49) anschliessend aufgelagert wird, wobei zwischen den Betonschichten (4) der so aufgelagerten Deckenmodule ein Zwischenraum (41) über dem Unterzugsbalken (49) ausgespart ist,
c. in den Zwischenraum (41) eine Unterzugs-Bewehrung (42; 10, 11, 12, 13, 20) eingelegt und an die angrenzende Beton-Bewehrung (15) angeschlossen wird,
und
d. der Zwischenraum (41) mit Beton (48) verfüllt wird und mit Aushärten desselben der Unterzug (8) fertig erstellt ist.

6. Holz-Beton-Verbunddecke, deren Tragwerk einen Bestandteil Beton und einen damit schubfest verbundenen Bestandteil Holz umfasst, wobei die Decke einen Schichtaufbau (1, 3, 4) aufweist, der von unten nach oben zuerst einen im Verbund der Decke auf Zug belastbaren, flächenhaft ausgedehnten Holzbestandteil, nämlich eine Holzschicht (1), einschliesst, gefolgt von einer Dämmschicht (3) und schliesslich einer Betonschicht (4), wobei in der Verbunddecke Schubverbinder (9) eingebaut sind, worunter mindestens ein Schubverbinder (9) zugleich in die Holzschicht (1) und in die Betonschicht (4) hineinragt und dabei die Dämmschicht (3) durchquert, wobei die Dämmschicht (3) mindestens zwei Dämmmaterialien unterschiedlicher Dichte bzw. spezifischen Gewichts umfasst und das dichtere Dämmmaterial direkt auf dieser im Deckenverbund auf Zug belastbaren Holzschicht (1) angeordnet ist oder direkt auf ihr aufliegt, was die Trägheit der Holzschicht (1) erhöht und als Schwingungsdämpfung zu wirken bestimmt ist, wobei die Holzschicht (1) nicht aus aneinandergereihten Holzbalken zusammengesetzt ist und/oder die Holzschicht (1) in einem untersten Abschnitt der Schicht, in Bezug auf die Schichtdicke, frei von materialabtragenden Bearbeitungen im Holz und somit intakt belassen ist, und der Schichtaufbau (3, 4) der Decke sich entweder unterzugsfrei über die Decke erstreckt oder mindestens ein Unterzug (8) wenigstens die Betonschicht (4) und die Dämmschicht (3) durchmisst und sich folglich nach unten wenigstens bis an die Holzschicht (1) erstreckt.

7. Verwendung von wenigstens zwei Dämmmaterialien unterschiedlicher Dichte bzw. spezifischen Gewichts als Schallschutz mittels Schwingungsdämpfung der Holzschicht (1) in einer Holz-Beton-Verbunddecke nach einem der Ansprüche 1 bis 4 oder 6.

8. Verfahren zur Herstellung einer Holz-Beton-Verbunddecke nach Anspruch 6 mit mindestens zwei Deckenmodulen,
a. wobei die Deckenmodule je mit ihrem Schichtaufbau (1, 3, 4) erstellt werden, sodass von unten nach oben zunächst die Holzschicht (1) mit den mit ihren unteren Enden darin verankerten Schubverbindern (9) angefertigt wird,
b. anschliessend die Dämmschicht (3) mit mindestens zwei Dämmmaterialien gebildet wird, indem zunächst das dichtere Dämmmaterial eingebracht wird, was die Trägheit der Holzschicht (1) erhöht und als Schwingungsdämpfung zu wirken bestimmt ist, und anschliessend das weniger dichte Dämmmaterial angeordnet oder hierzu ein Hohlraum freigelassen wird,
c. schliesslich die Betonschicht (4) mit ihrer Bewehrung (15) erstellt wird, sodass die Schubverbinder (9) mit ihren oberen Enden in der Betonschicht (4) verankert werden, wobei für den Anschluss an das mindestens zweite Deckenmodul in Aussparungen (39) der Betonschicht (4) ihre Bewehrung (15) aus denselben hervortritt, und
d. das fertig erstellte Deckenmodul in der ihm vorbestimmten Lage auf einem oder mehreren Trägern verlegt und an das mindestens zweite Deckenmodul angeschlossen wird, indem die Bewehrungen (15) der benachbarten Betonschichten (4) kraftschlüssig verbunden werden, und die Aussparungen (39) anschliessend betoniert werden.

9. Holz-Beton-Verbunddecke, deren Tragwerk einen Bestandteil Beton und einen damit schubfest verbundenen Bestandteil Holz umfasst, wobei die Decke einen Schichtaufbau (1, 4) aufweist, der von unten nach oben zuerst einen im Verbund der Decke auf Zug belastbaren, flächenhaft ausgedehnten Holzbestandteil, nämlich eine Holzschicht (1), einschliesst, gefolgt von entweder einer Dämmschicht (3) und schliesslich einer Betonschicht (4), oder bei Fehlen der Dämmschicht (3) gefolgt von einer Betonschicht (4), wobei die Holzschicht (1) mindestens zwei auf Stoss anschliessende Holzplatten einschliesst, welche wechselseitig gegeneinander gespannt sind, indem die jeweils eine Holzplatte senkrecht auf eine beim Anschluss auf Stoss gebildete Trennebene gegen die jeweils andere Holzplatte drückt, wobei in jede der so gegeneinander gespannten Holzplatten unter Intaktlassens ihrer Unterseite mindestens eine Ausnehmung (24; 24a, 24b, 24c) so durch Materialabtrag erstellt ist, dass diese wenigstens einen kastenartigen Raum (24; 24a, 24c) in der Holzplatte ausformt und mit einer Ausnehmung (24; 24a, 24b, 24c) der jenseits der Trennebene befindlichen Holzplatte einen die beiden Holzplatten übergreifenden, ausgenommenen Durchgang bildet, wobei die Holzplatten, von der Trennebene aus gesehen, in einem hinter ihrem einen oder hinteren kastenartigen Raum (24; 24a) in eine Richtung senkrecht von der Trennebene weg sich erstreckenden Bereich intakt belassen sind und dort also ein hinteres Intaktmaterial (29) für anderweitige Nutzung bilden, wobei das Spannmittel (26a, 26b, 26c) in den Durchgang eingebracht und je endseitig im wenigstens einen kastenartigen Raum (24; 24a) verankert ist, sodass infolge Verspannens dieses Spannmittels (26a, 26b, 26c) die Holzplatten gegeneinander gespannt sind, wobei die Holzschicht (1) nicht aus aneinandergereihten Holzbalken zusammengesetzt ist und/oder die Holzschicht (1) in einem untersten Abschnitt der Schicht, in Bezug auf die Schichtdicke, frei von materialabtragenden Bearbeitungen im Holz und somit intakt belassen ist, und wobei der Schichtaufbau (3, 4) der Decke sich entweder unterzugsfrei über die Decke erstreckt oder bei einer allenfalls vorhandenen Dämmschicht (3) mindestens ein Unterzug (8) wenigstens die Betonschicht (4) und die Dämmschicht (3) durchmisst und sich folglich nach unten wenigstens bis an die Holzschicht (1) erstreckt.

10. Verfahren zur Herstellung einer Holz-Beton-Verbunddecke nach Anspruch 9, indem
a. in die zu verspannenden Holzplatten je die mindestens eine Ausnehmung (24) so durch Materialabtrag erstellt wird, dass sie wenigstens einen kastenartigen Raum (24; 24a, 24c) ausformt,
b. die Holzplatten anschliessend auf Stoss verlegt werden, wobei ihre Ausnehmungen (24) einen die beiden Holzplatten übergreifenden, ausgenommenen Durchgang bilden, und
c. das Spannmittel (26a, 26b, 26c) in den Durchgang eingebracht und je endseitig im wenigstens einen oder hinteren kastenartigen Raum (24; 24a) verankert wird,
d. und das Spannmittel (26a, 26b, 26c) von oben verspannt wird.

11. Holz-Beton-Verbunddecke nach einem oder mehreren der Ansprüche 1-4, 6, 9.

12. Baute (50) mit einer oder mehreren eingebauten Holz-Beton-Verbunddecken nach einem oder mehreren der Ansprüche 1-4, 6, 9, 11.

13. Baute (50) nach Anspruch 12, wobei sie als Hochhaus (50a) mit einer Gesamthöhe ab 25 m ausgeführt ist.

14. Verfahren nach einem oder mehreren der Ansprüche 5, 8, 10.

15. Verfahren nach einem oder mehreren der Ansprüche 5, 8, 10 zur Erstellung einer Baute gemäss einem der Ansprüche 12-13.
